(19) Europäisches Patentamt
European Patent Office
Office européen des brevets

(11) **EP 3 960 832 A1**

(12) **EUROPEAN PATENT APPLICATION**
published in accordance with Art. 153(4) EPC

(43) Date of publication:
**02.03.2022 Bulletin 2022/09**

(21) Application number: **20794832.4**

(22) Date of filing: **24.04.2020**

(51) International Patent Classification (IPC):
**C09K 5/04** $^{(2006.01)}$

(52) Cooperative Patent Classification (CPC):
**C09K 5/04; F25B 1/00**

(86) International application number:
**PCT/JP2020/017777**

(87) International publication number:
**WO 2020/218544 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.04.2019 JP 2019084708**

(71) Applicant: DAIKIN INDUSTRIES, LTD.
**Osaka-shi, Osaka 530-8323 (JP)**

(72) Inventors:
• ITANO, Mitsushi
**Osaka-shi, Osaka 530-8323 (JP)**
• OHKUBO, Shun
**Osaka-shi, Osaka 530-8323 (JP)**
• TSUCHIYA, Tatsumi
**Osaka-shi, Osaka 530-8323 (JP)**
• GOBOU, Kenji
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **COOLANT CONTAINING FLUORINATED HYDROCARBON AND CARBON DIOXIDE, USE OF SAME, REFRIGERATING MACHINE COMPRISING SAME AND METHOD FOR OPERATING SAID REFRIGERATING MACHINE**

(57)    An object is to provide a mixed refrigerant that has desired properties as an alternative refrigerant for R410A. As a solution to achieve the object, a composition containing a refrigerant that contains difluoromethane (R32), carbon dioxide ($CO_2$), pentafluoroethane (R125), 1,1,1,2-tetrafluoroethane (R134a), and 2,3,3,3-tetrafluoropropene (R1234yf) in a specific mixture ratio is provided.

Fig. 12

Ternary Composition Diagram (41% R1234yf))
GWP=750 (r=0.25)
WCF Non-Flammability Point
WCF Non-Flammability Limit Line
ASHRAE Non-Flammability Limit Point
ASHRAE Non-Flammability Limit Line

# EP 3 960 832 A1

**Description**

Technical Field

The present disclosure relates to a refrigerant containing a fluorinated hydrocarbon and carbon dioxide, use of the refrigerant, a refrigerating machine containing the refrigerant, and a method for operating the refrigerating machine.

Background Art

Fluorocarbon-based fluids are widely used industrially for cooling, air conditioning, and heat pumps.

PTL 1 discloses the use of a heat transfer composition containing difluoromethane (R32), 1,1,1,3-tetrafluoropropene (R1234ze), and a compound selected from the group consisting of n-butane, isobutane, and combinations thereof in a specific mixture ratio as an alternative for R410A and/or R32.

PTL 2 discloses the use of a working fluid for heat cycle containing trifluoroethylene (HFO-1123), 2,3,3,3-tetrafluoropropene (R1234yf), and difluoromethane (R32) in a specific mixture ratio as an alternative for R410A.

PTL 3 discloses the use of a composition containing R1234yf, R32, pentafluoroethane (R125), and 1,1,1,2-tetrafluoroethane (R134a) in a specific mixture ratio as a refrigerant with a lower GWP that replaces R22, R134a, R404A, R407C, and/or R410A.

PTL 4 discloses the use of a heat transfer composition containing R32, R125, R134a, and R1234yf in a specific mixture ratio as an alternative refrigerant for R134a, R410A, or R404A.

Citation List

Patent Literature

PTL 1: WO2014/085973A
PTL 2: JP2016-028119A
PTL 3: WO2010/059677A
PTL 4: WO2011/163117A

Summary of Invention

Technical Problem

The present inventors conceived that a refrigerant composition that has a COP and a refrigerating capacity equivalent to those of R410A and a low GWP, as well as ASHRAE non-flammability, had not yet been developed in the art. They conducted studies and determined the desired properties of an alternative refrigerant for R410A on their own accord. The following are the desired properties: (1) a GWP of 750 or less, (2) WCF non-flammability or ASHRAE non-flammability, and (3) a COP and refrigerating capacity equivalent to those of R410A. An object of the present disclosure is to solve this unique problem.

Solution to Problem

The present inventors conducted extensive research to solve the problem, and found that a mixed refrigerant that contains difluoromethane (R32), carbon dioxide ($CO_2$), pentafluoroethane (R125), 1,1,1,2-tetrafluoroethane (R134a), and 2,3,3,3-tetrafluoropropene (R1234yf) in predetermined proportions has the properties described above.

After conducting further research based on this finding, the inventors completed the present disclosure. The present disclosure includes the following embodiments.

Item 1. A composition comprising a refrigerant,

the refrigerant comprising difluoromethane (R32), carbon dioxide ($CO_2$), pentafluoroethane (R125), 1,1,1,2-tetrafluoroethane (R134a), and 2,3,3,3-tetrafluoropropene (R1234yf),

wherein

when the mass% of R32 is a, the mass% of $CO_2$ is b, the mass% of R125 is $c_1$, the mass% of R134a is $c_2$, the mass% of the sum of R125 and R134a is c, the mass% of R1234yf is x, and $c_1/(c_1+c_2)$ is r based on the sum of R32, $CO_2$, R125, R134a, and R1234yf in the refrigerant,

in a ternary composition diagram having R32 at a point of (100-x) mass%, $CO_2$ at a point of (100-x) mass%, and the sum of R125 and R134a at a point of (100-x) mass% as vertices,

1-1-1) when $43.8 \geq x \geq 41$, and $0.5 \geq r \geq 0.25$, coordinates (a,b,c) fall within a quadrangular region surrounded by line segments that connect the following points:

point A (-0.6902x+43.307, 100-a-x, 0.0),
point $O_{r=0.25 \, to \, 0.5}$ ((-2.2857x+87.314) $r^2$+ (1.7143x-55.886) r+ (-0.9643x+55.336), (2.2857x-112.91) $r^2$+ (-1.7143x+104.69) r+ (-0.25x+11.05), 100-a-b-x),
point $D_{r=0.25 \, to \, 0.5}$ (0.0, -28.8$r^2$+54.0r+ (-x+49.9) , 100-b-x) , and
point Q (0.0, 100-x, 0.0),
or on the line segments, excluding any point on line segment $D_{r=0.25 \, to \, 0.5}$ to Q, and line segment QA, or

1-1-2) when $43.8 \geq x \geq 41$, and $1.0 \geq r \geq 0.5$, coordinates (a,b,c) fall within a quadrangular region surrounded by line segments that connect the following points:

point A (-0.6902x+43.307, 100-a-x, 0.0),
point $O_{r=0.5 \, to \, 1.0}$ ((-0.2857x+8.5143) $r^2$+ (0.5x-10.9) r+ (-0.8571x+52.543), (-0.2857x+4.5143) $r^2$+ (0.5x+0.9) r+ (-0.7143x+33.586), 100-a-b-x),
point $D_{r=0.5 \, to \, 1.0}$ (0.0, (-0.5714x+12.229) $r^2$+ (0.8571x-0.3429) r+ (-1.2857x+66.814), 100-b-x), and
point Q (0.0, 100-x, 0.0),
or on the line segments, excluding any point on line segment $D_{r=0.5 \, to \, 1.0}$ to Q and line segment QA,
or on the line segments, or

1-2-1) when $46.5 \geq x \geq 43.8$, and $0.5 \geq r \geq 0.25$, coordinates (a,b,c) fall within a quadrangular region surrounded by line segments that connect the following points:

point A (-0.6902x+43.307, 100-a-x, 0.0),
point $O_{r=0.25 \, to \, 0.5}$ ((1.1852x-64.711) $r^2$+ (-0.7407x+51.644) r+ (-0.5556x+37.433), (-2.3704x+91.022) $r^2$+ (2.0741x-61.244) r+ (-0.963x+42.278), 100-a-b-x),
point $D_{r=0.25 \, to \, 0.5}$ (0.0, -28.8$r^2$+54.0r+ (-x+49.9) , 100-b-x), and
point Q (0.0, 100-x, 0.0),
or on the line segments, excluding any point on line segment $D_{r=0.25 \, to \, 0.5}$ to Q and line segment QA, or

1-2-2) when $46.5 \geq x \geq 43$, and $1.0 \geq r \geq 0.5$, coordinates (a,b,c) fall within a quadrangular region surrounded by line segments that connect the following points:

point A (-0.6902x+43.307, 100-a-x, 0.0),
point $O_{r-0.5 \, to \, 1.0}$ ((0.2963x-16.978) r2+ (-0.3704x+27.222) r+ (-0.5185x+37.711), -8.0r2+22.8r+(-0.5185x+25.011), 100-a-b-x),
point $D_{r=0.5 \, to \, 1.0}$ (0.0, -12.8$r^2$+37.2r+ (-x+54.3) , 100-b-x), and
point Q (0.0, 100-x, 0.0),
or on the line segments, excluding any point on line segment $D_{r=0.5 \, to \, 1.0}$ to Q and line segment QA,

1-3-1) when $50 \geq x \geq 46.5$, and $0.5 \geq r \geq 0.25$, coordinates (a,b,c) fall within a quadrangular region surrounded by line segments that connect the following points:

point A (-0.6902x+43.307, 100-a-x, 0.0),
point $O_{r=0.25 \, to \, 0.5}$ (-9.6$r^2$+17.2r+ (-0.6571x+42.157) ,-19.2$r^2$+(0.2286x+24.571)r+(-0.6286x+26.729), 100-a-b-x),
point $D_{r=0.25 \, to \, 0.5}$ (0.0, (0.9143x-71.314) $r^2$+ (-0.5714x+80.571) r+ (-0.9143x+45.914), 100-b-x), and
point Q (0.0, 100-x, 0.0),
or on the line segments, excluding any point on line segment $D_{r=0.25 \, to \, 0.5}$ to Q and line segment QA, or

1-3-2) when $50 \geq x \geq 46.5$, and $1.0 \geq r \geq 0.5$, coordinates (a,b,c) fall within a quadrangular region surrounded by line segments that connect the following points:

point A (-0.6902x+43.307, 100-a-x, 0.0),
point $O_{r=0.5 \, to \, 1.0}$ ( (-0.2286x+7.4286) $r^2$+ (0.4x-8.6) r+ (-0.8x+50.8),

(0.2286x-18.629) $r^2$+ (-0.2857x+36.086) r+ (-0.4286x+20.829), 100-a-b-x),

point $D_{r=0.5\ to\ 1.0}$ (0.0, (0.2286x-23.429) $r^2$+ (-0.4x+55.8) r+ (-0.8286x+46.329), 100-b-x), and

point Q (0.0, 100-x, 0.0),

or on the line segments, excluding any point on line segment $D_{r=0.5\ to\ 1.0}$ to Q and line segment QA.

Item 2. A composition comprising a refrigerant,

the refrigerant comprising R32, $CO_2$, R125, R134a, and R1234yf,

wherein

when the mass% of R32 is a, the mass% of $CO_2$ is b, the mass% of R125 is $c_1$, the mass% of R134a is $c_2$, the mass% of the sum of R125 and R134a is c, the mass% of R1234yf is x, and $c_1/(c_1+c_2)$ is r based on the sum of R32, $CO_2$, R125, R134a, and R1234yf in the refrigerant,

in a ternary composition diagram having R32 at a point of (100-x) mass%, $CO_2$ at a point of (100-x) mass%, and the sum of R125 and R134a at a point of (100-x) mass% as vertices,

2-1-1) when 43.8≥x≥41, and 0.5≥r≥0.25, coordinates (a,b,c) fall within a triangular region surrounded by line segments that connect the following points:

point $F_{r=0.25\ to\ 0.5}$ (0.0, (-1.1429x+37.257) $r^2$+ (1.2857x-38.714) r- (-1.7143x+106.89), 100-b-x),

point $P_{r=0.25\ to\ 0.5}$ ((-1.1429x+34.057) $r^2$+ (1.0x-21.0) r+ (-0.4643x+27.636), (2.2857x-119.31) $r^2$+ (-2.0x+122.0) r+ (-0.3929x+19.907), 100-a-b-x), and

point $D_{r=0.25\ to\ 0.5}$ (0.0, -28.8$r^2$+54.0r+ (-x+49.9), 100-b-x) ,

or on the line segments, excluding any point on line segment $D_{r=0.25\ to\ 0.5}$ to $F_{r=0.25\ to\ 0.5}$, or

2-1-2) when 43.8≥x≥41, and 1.0≥r≥0.5, coordinates (a,b,c) fall within a triangular region surrounded by line segments that connect the following points:

point $F_{r=0.5\ to\ 1.0}$ (0.0, (3.7143x-159.49) $r^2$+ (-5.0714x+222.53)r+(0.25x+25.45), 100-b-x),

point $P_{r=0.5\ to\ 1.0}$ ((3.4286x-138 .17) $r^2$+ (-5.4286x+203.57) r+ (1.6071x-41.593), (-2.8571x+106.74) $r^2$+ (4.5714x-143.63) r+ (-2.3929x+96.027), 100-a-b-x), and

point $D_{r=0.5\ to\ 1.0}$ (0.0, (-0. 5714x+12 .229) $r^2$+ (0.8571x-0.3429) r+ (-1.2857x+66.814), 100-b-x),

or on the line segments, excluding any point on line segment $D_{r=0.5\ to\ 1.0}$ to $F_{r=0.5\ to\ 1.0}$, or

2-2-1) when 46.5≥x≥43, and 0.5≥r≥0.25, coordinates (a,b,c) fall within a triangular region surrounded by line segments that connect the following points:

point $F_{r=0.25\ to\ 0.5}$ (0.0, (9.4815x-428.09) $r^2$+ (-7.1111x+329.07) r+ (-0.2593x+43.156), 100-b-x),

point $P_{r=0.25\ to\ 0.5}$ ((-8.2963x+347.38) $r^2$+ (4.8889x-191.33) r+ (-0.963x+49.478), (7.1111x-330.67) $r^2$+ (-4.1481x+216.09) r+ (-0.2593x+14.056), 100-a-b-x), and

point $D_{r=0.25\ to\ 0.5}$ (0.0, -28.8$r^2$+54.0r+ (-x+49.9), 100-b-x),

or on the line segments, excluding any point on line segment $D_{r=0.25\ to\ 0.5}$ to $F_{r=0.25\ to\ 0.5}$, or

2-2-2) when 46.5≥x≥43, and 1.0≥r≥0.5, coordinates (a,b,c) fall within a triangular region surrounded by line segments that connect the following points:

point $F_{r=0.5\ to\ 1.0}$ (0.0, (-4.7407x+210.84) $r^2$+ (6.963x-304.58) r+ (-3.7407x+200.24), 100-b-x),

point $P_{r=0.5\ to\ 1.0}$ ((0.2963x-0.9778) $r^2$+ (0.2222x-43.933) r+ (-0.7778x+62.867), (-0.2963x-5.4222) $r^2$+ (-0.0741x+59.844) r+ (-0.4444x+10.867), 100-a-b-x), and

point $D_{r=0.5\ to\ 1.0}$ (0.0, -12.8$r^2$+37.2r+ (-x+54.3) , 100-b-x),

or on the line segments, excluding any point on line segment $D_{r=0.5\ to\ 1.0}$ to $F_{r=0.5\ to\ 1.0}$, or

2-3-1) when 50≥x≥46.5, and 0.37≥r≥0.25, coordinates (a,b,c) fall within a triangular region surrounded by line segments that connect the following points:

point $F_{r=0.25\ to\ 0.37}$ (0.0, (-35.714x+1744.0) $r^2$+ (23.333x-1128.3) r+ (-5.144x+276.32), 100-b-x),

point $P_{r=0.25\ to\ 0.37}$ ((11.905x-595.24) $r^2$+ (-7.6189x+392.61) r+ (0.9322x-39.027), (-27.778x+1305.6) $r^2$+ (17.46x-796.35) r+ (-3.5147x+166.48), 100-a-b-x), and

point $D_{r=0.25\ to\ 0.37}$ (0.0, (0.9143x-71.314) $r^2$+ (-0.5714x+80.571) r+ (-0.9143x+45.914), 100-b-x),

or on the line segments, excluding any point on line segment $D_{r=0.25\ to\ 0.37}$ to $F_{r=0.25\ to\ 0.37}$, or

2-3-2) when $50 \geq x \geq 46.5$, and $1.0 \geq r \geq 0.5$, coordinates (a,b,c) fall within a triangular region surrounded by line segments that connect the following points:

point $F_{r=0.5 \text{ to } 1.0}$ (0.0, (2.2857x-115.89) $r^2$+ (-3.0857x+162.69) r+ (-0.3714x+43.571), 100-b-x),

point $P_{r=0.5 \text{ to } 1.0}$ ((-3.2x+161.6) $r^2$+ (4.4571x-240.86) r+ (-2.0857x+123.69), (2.5143x-136.11) $r^2$+ (-3.3714x+213.17) r+ (0.5429x-35.043), 100-a-b-x), and

point $D_{r=0.5 \text{ to } 1.0}$ (0.0, (0.2286x-23.429) $r^2$+ (-0.4x+55.8) r+ (-0.8286x+46.329), 100-b-x),

or on the line segments, excluding any point on line segment $D_{r=0.5 \text{ to } 1.0}$ to $F_{r=0.5 \text{ to } 1.0}$.

Item 3. The composition according to Item 1 or 2, comprising R32, $CO_2$, R125, R134a, and R1234yf in a total amount of 99.5 mass% or more based on the entire refrigerant.

Item 4. The composition according to any one of Items 1 to 3, comprising a refrigeration oil.

Item 5. The composition according to any one of Items 1 to 4, wherein the refrigerant is for use as an alternative refrigerant for R410A.

Item 6. A refrigerating machine comprising the composition of any one of Items 1 to 5.

Item 7. The refrigerating machine according to Item 6, comprising a heat exchanger in which a flow of the refrigerant and a flow of an external heat medium are in countercurrent flow.

Item 8. The refrigerating machine according to Item 6 or 7, comprising a heat-source-side heat exchanger and a user-side heat exchanger, wherein when the user-side heat exchanger functions as an evaporator, the evaporating temperature of the refrigerant is 0°C or below.

Item 9. A refrigerating machine comprising

a refrigerant comprising R32, $CO_2$, R125, R134a, and R1234yf, and
a heat exchanger in which a flow of the refrigerant and a flow of an external heat medium are in countercurrent flow.

Item 10. A refrigerating machine comprising

a refrigerant comprising R32, $CO_2$, R125, R134a, and R1234yf,
a heat-source-side heat exchanger, and
a user-side heat exchanger,
wherein when the user-side heat exchanger functions as an evaporator, the evaporating temperature of the refrigerant is 0°C or below.

Advantageous Effects of Invention

The refrigerant according to the present disclosure has the following properties, which are typically required in alternative refrigerants for R410A: (1) a GWP of 750 or less, (2) WCF non-flammability or ASHRAE non-flammability, and (3) a COP and a refrigerating capacity equivalent to those of R410A.

Brief Description of Drawings

Fig. 1 is a diagram that shows a device used in a flammability test.
Fig. 2 is a schematic view that shows examples of countercurrent heat exchangers.
Fig. 3 is a schematic view that shows examples of countercurrent heat exchangers. Fig. 3(a) is a plan view, and Fig. 3(b) is a perspective view.
Fig. 4 is a schematic view that shows an embodiment of refrigerant circuits in the refrigerating machine according to the present disclosure.
Fig. 5 is a schematic view that shows an example of modified versions of the refrigerant circuit of Fig. 4.
Fig. 6 is a schematic view that shows an example of modified versions of the refrigerant circuit of Fig. 5.
Fig. 7 is a schematic view that shows an example of modified versions of the refrigerant circuit of Fig. 5.
Fig. 8 is a schematic view that explains off-cycle defrost.
Fig. 9 is a schematic view that explains heating defrost.
Fig. 10 is a schematic view that explains reverse-cycle hot-gas defrost.
Fig. 11 is a schematic view that explains normal-cycle hot-gas defrost.
Fig. 12 shows a straight line $C_{r=0.25}$ to $D_{r=0.25}$ that shows GWP is 750, the WCF non-flammability limit points shown in Tables 2 to 5, a straight line $AB_{r=0.25}$, which connects point A and point $B_{r=0.25}$, the ASHRAE non-flammability limit points shown in Tables 6 to 9, and a straight line $F_{r=0.25}$ to $P_{r=0.25}$, which connects point $F_{r=0.25}$ and point $P_{r=0.25}$, when r=0.25 in a ternary composition diagram having R32 at a point of (100-x) mass%, $CO_2$ at a point of (100-x) mass%, and the sum of R125 and R134a at a point of (100-x) mass% as vertices.

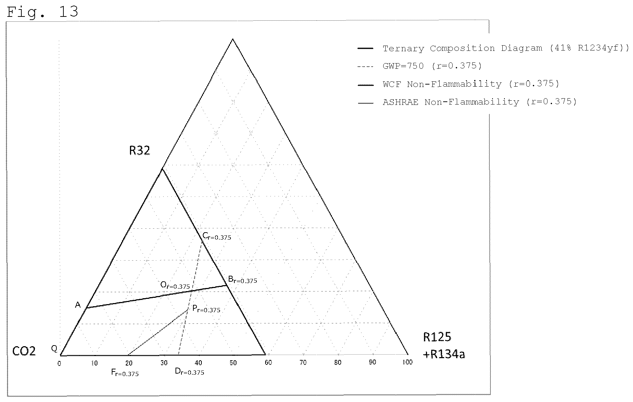

Fig. 13 shows a straight line $C_{r=0.375}$ to $D_{r=0.375}$ that shows GWP is 750, a straight line $AB_{r=0.375}$ that shows the WCF non-flammability limit line shown in Table 10, and a straight line $F_{r=0.375}$ to $P_{r=0.375}$ that shows the ASHRAE non-flammability limit line shown in Table 14, when r=0.375, in a ternary composition diagram having R32 at a point of (100-x) mass%, $CO_2$ at a point of (100-x) mass%, and the sum of R125 and R134a at a point of (100-x) mass% as vertices.

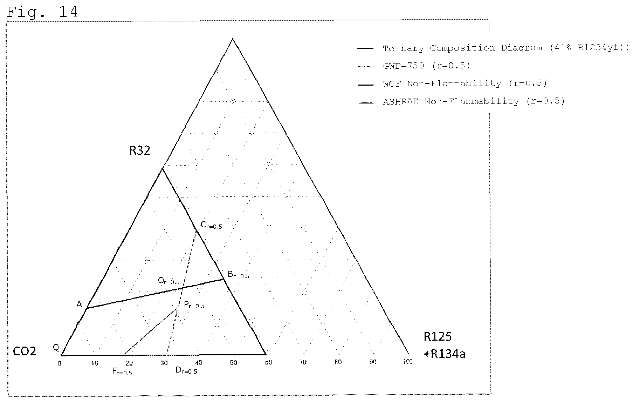

Fig. 14 shows a straight line $C_{r=0.5}$ to $D_{r=0.5}$ that shows GWP is 750, a straight line $AB_{r=0.5}$ that shows the WCF non-flammability limit shown in Table 10, a straight line $F_{r=0.5}$ to $P_{r=0.5}$ that shows the ASHRAE non-flammability limit shown in Table 14, when r=0.5, in a ternary composition diagram having R32 at a point of (100-x) mass%, $CO_2$ at a point of (100-x) mass%, and the sum of R125 and R134a at a point of (100-x) mass% as vertices.

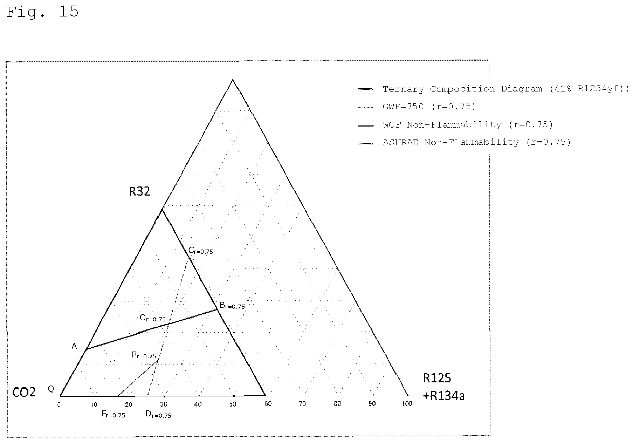

Fig. 15 shows a straight line $C_{r=0.75}$ to $D_{r=0.75}$ that shows GWP is 750, a straight line $AB_{r=0.75}$ that shows the WCF non-flammability limit shown in Table 10, and a straight line $F_{r=0.75}$ to $P_{r=0.75}$ that shows the ASHRAE non-flammability limit shown in Table 14, when r=0.75, in a ternary composition diagram having R32 at a point of (100-x) mass%, $CO_2$ at a point of (100-x) mass%, and the sum of R125 and R134a at a point of (100-x) mass% as vertices.

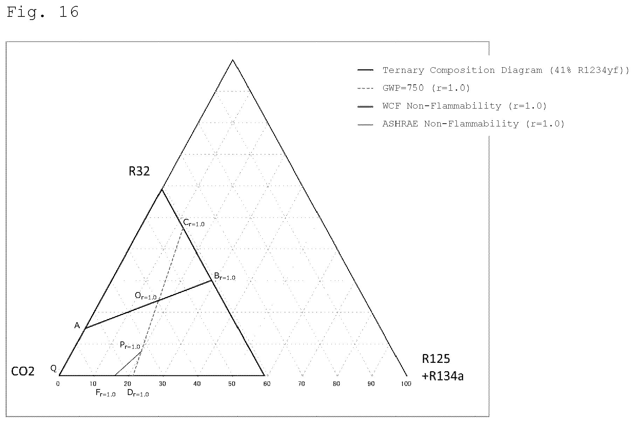

Fig. 16 shows a straight line $C_{r=1.0}$ to $D_{r=1.0}$ that shows GWP is 750, a straight line $AB_{r=1.0}$ that shows the WCF non-flammability limit shown in Table 10, and a straight line $F_{r=1.0}$ to $P_{r=1.0}$ that shows the ASHRAE non-flammability limit shown in Table 14, when r=1.0, in a ternary composition diagram having R32 at a point of (100-x) mass%, $CO_2$ at a point of (100-x) mass%, and the sum of R125 and R134a at a point of (100-x) mass% as vertices.

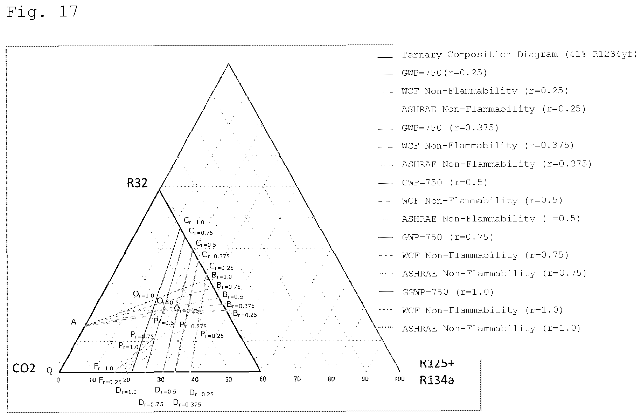

Fig. 17 is a ternary diagram that summarizes Figs. 12 to 16 and that shows points A, $O_{r=0.25 \text{ to } 1}$, $D_{r=0.25 \text{ to } 1}$, $C_{r=0.25 \text{ to } 1}$, $F_{r=0.25 \text{ to } 1}$, $P_{r=0.25 \text{ to } 1}$, and Q when the concentration of R1234yf is 41 mass%.

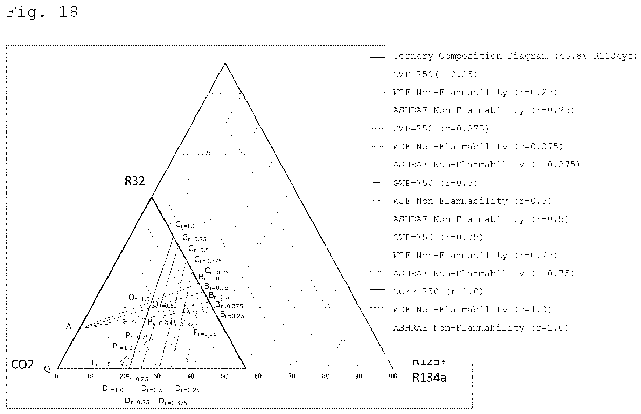

Fig. 18 is a ternary diagram that shows points A, $O_{r=0.25 \text{ to } 1}$, $D_{r=0.25 \text{ to } 1}$, $C_{r=0.25 \text{ to } 1}$, $F_{r=0.25 \text{ to } 1}$, $P_{r=0.25 \text{ to } 1}$, and Q when the concentration of R1234yf is 43.8 mass%.

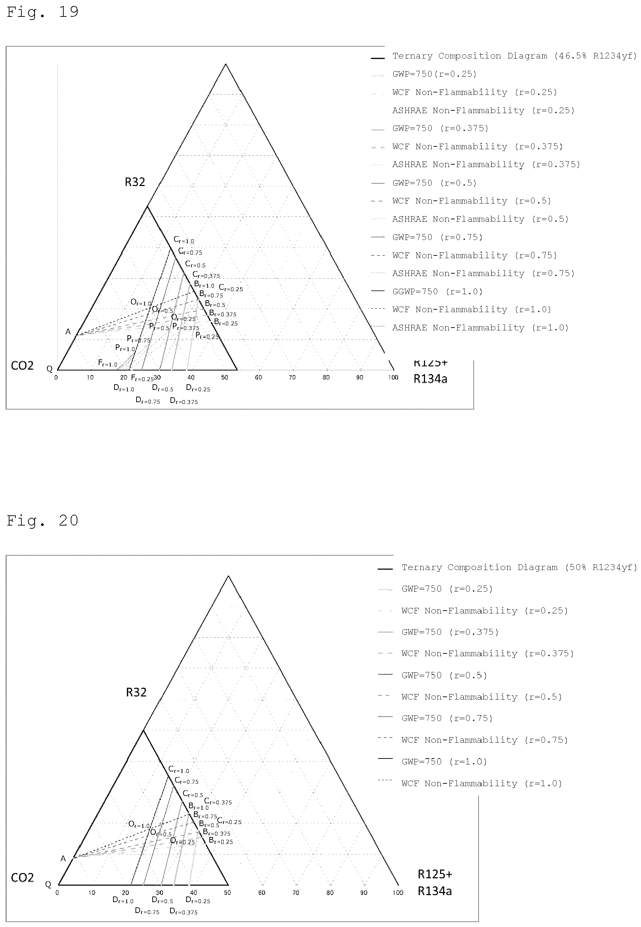

Fig. 19 is a ternary diagram that shows points A, $O_{r=0.25 \text{ to } 1}$, $D_{r=0.25 \text{ to } 1}$, $C_{r=0.25 \text{ to } 1}$, $F_{r=0.25 \text{ to } 1}$, $P_{r=0.25 \text{ to } 1}$, and Q, when the concentration of R1234yf is 46.5 mass%.

Fig. 20 is a ternary diagram that shows points A, $O_{r=0.25 \text{ to } 1}$, $D_{r=0.25 \text{ to } 1}$, $C_{r=0.25 \text{ to } 1}$, $P_{r=0.25 \text{ to } 1}$, and Q when the concentration of R1234yf is 50.0 mass%.

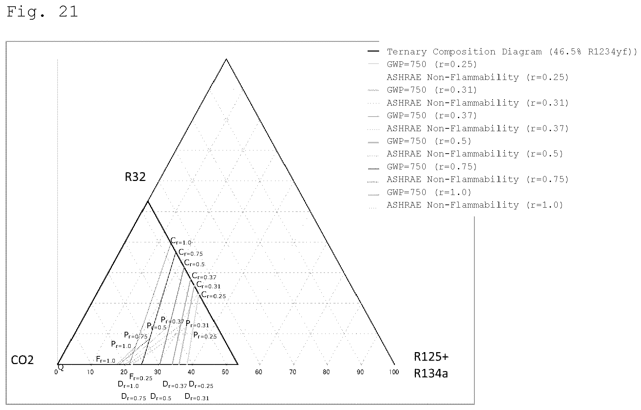

Fig. 21 is a ternary diagram that shows points $D_{r=0.25 \text{ to } 1}$, $C_{r=0.25 \text{ to } 1}$, $F_{r=0.25 \text{ to } 0.37}$, $F_{r=0.5 \text{ to } 1}$, $P_{r=0.25 \text{ to } 0.37}$, $P_{r=0.50 \text{ to } 1}$, and Q when the concentration of R1234yf is 46.5 mass%.

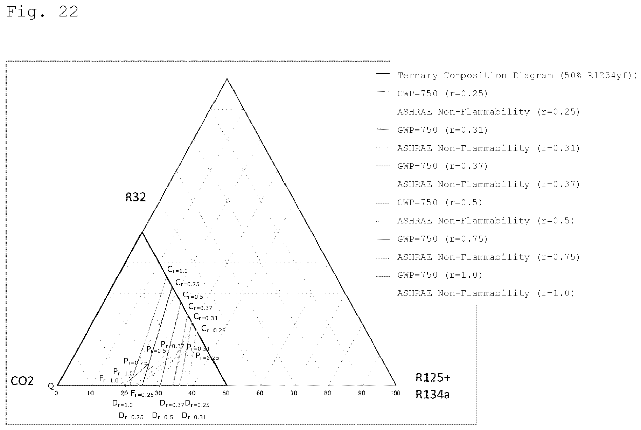

Fig. 22 is a ternary diagram that shows points $D_{r=0.25 \text{ to } 1}$, $C_{r=0.25 \text{ to } 1}$, $F_{r=0.25 \text{ to } 0.37}$, $F_{r=0.37 \text{ to } 1}$, $P_{r=0.25 \text{ to } 0.37}$, $P_{r=0.37 \text{ to } 1}$, and Q when the concentration of R1234yf is 50.0 mass%.

Description of Embodiment

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present disclosure, "non-flammability" means that the WCF (worst case of formulation for flammability) formulation, which is the most flammable formulation within the refrigerant's allowable concentrations in the U.S. ANSI/ASHRAE 34-2013 Standard, is categorized into Class 1 (i.e., WCF non-flammability) or determined to be ASHRAE non-flammability. Specifically, ASHRAE non-flammability means that the WCF formulation or WCFF formulation can be identified as nonflammable in a test performed with the measurement equipment and the method in accordance with ASTM E681-2009 Standard Test Method for Concentration Limits of Flammability of Chemicals (Vapors and Gases), and the WCF formulation and WCFF formulation are each classified as Class 1 ASHRAE non-flammability (WCF non-flammability) or Class 1 ASHRAE non-flammability (WCFF non-flammability). The WCFF formulation (worst case of fractionation for flammability: most flammable formulation) is determined by conducting a test for leakage in storage, transport, and use in accordance with ANSI/ASHRAE 34-2013.

## 1. Refrigerant

### 1.1 Refrigerant Component

The refrigerant according to the present disclosure is a mixed refrigerant comprising R32, $CO_2$, R125, R134a, and R1234yf.

The refrigerant according to the present disclosure has the following properties that are typically required for alternative refrigerants for R410A: (1) a GWP of 750 or less, (2) WCF non-flammability or ASHRAE non-flammability, and (3) a COP and a refrigerating capacity equivalent to those of R410A.

In addition to the properties described above, the refrigerant according to the present disclosure, due to its temperature glide, can also have effects in improving energy efficiency and/or refrigerating capacity when used in a refrigerating machine equipped with a heat exchanger in which the flow of the refrigerant and the flow of the external heat medium are in countercurrent flow.

The refrigerant according to the present disclosure that satisfies the following requirements 1-1-1 to 1-3-2 is preferable, because such a refrigerant has a GWP of 750 or less, and WCF non-flammability. In the description below, the mass% of R32 is a, the mass% of $CO_2$ is b, the mass% of R125 is $c_1$, the mass% of R134a is $c_2$, the mass% of the sum of R125 and R134a is c, the mass% of R1234yf is x, and $c_1/(c_1+c_2)$ is r, based on the sum of R32, $CO_2$, R125, R134a, and R1234yf.

In a ternary composition diagram having R32 at a point of (100-x) mass%, $CO_2$ at a point of (100-x) mass%, and the sum of R125 and R134a at a point of (100-x) mass% as vertices, coordinates (a,b,c) are as defined below:

### Requirement 1-1-1)

When 43.8≥x≥41, and 0.5≥r≥0.25, coordinates (a,b,c) fall within a quadrangular region surrounded by line segments that connect the following points:

point A (-0.6902x+43.307, 100-a-x, 0.0),
point $O_{r=0.25\ to\ 0.5}$ ((-2.2857x+87.314) $r^2$+ (1.7143x-55.886) r+ (-0.9643x+55.336), (2.2857x-112.91) $r^2$+ (-1.7143x+104.69) r+ (-0.25x+11.05), 100-a-b-x),
point $D_{r=0.25\ to\ 0.5}$ (0.0, -28.8$r^2$+54.0r+ (-x+49.9), 100-b-x), and point Q (0.0, 100-x, 0.0),
or on the line segments, excluding any point on line segment $D_{r=0.25\ to\ 0.5}$ to Q, and line segment QA, or

### 1-1-2)

When 43.8≥x≥41, and 1.0≥r≥0.5, coordinates (a,b,c) fall within a quadrangular region surrounded by line segments that connect the following points:

point A (-0.6902x+43.307, 100-a-x, 0.0),
point $O_{r=0.5\,to\,1.0}$ ((-0.2857x+8.5143) $r^2$+ (0.5x-10.9) r+ (-0.8571x+52.543), (-0.2857x+4.5143) $r^2$+ (0.5x+0.9) r+ (-0.7143x+33.586), 100-a-b-x),
point $D_{r=0.5\,to\,1.0}$ (0.0, (-0.5714x+12 .229) $r^2$+ (0.8571x-0.3429) r+ (-1.2857x+66.814), 100-b-x), and
point Q (0.0, 100-x, 0.0),
or on the line segments, excluding any point on line segment $D_{r=0.5\,to\,1.0}$ to Q, and line segment QA, or

1-2-1)

when 46.5≥x≥43.8, and 0.5≥r≥0.25, coordinates (a,b,c) fall within a quadrangular region surrounded by line segments that connect the following points:

point A (-0.6902x+43.307, 100-a-x, 0.0),
point $O_{r=0.25\,to\,0.5}$ ((1.1852x-64.711) $r^2$+ (-0.7407x+51.644) r+ (-0.5556x+37.433), (-2.3704x+91.022) $r^2$+ (2.0741x-61.244) r+ (-0.963x+42.278), 100-a-b-x),
point $D_{r=0.25\,to\,0.5}$ (0.0, -28.8r2+54.0r+ (-x+49.9), 100-b-x), and point Q (0.0, 100-x, 0.0),
or on the line segments, excluding any point on line segment $D_{r=0.25\,to\,0.5}$ to Q, and line segment QA, or

Requirement 1-2-2)

When 46.5≥x≥43, and 1.0≥r≥0.5, coordinates (a,b,c) fall within a quadrangular region surrounded by line segments that connect the following points:

point A (-0.6902x+43.307, 100-a-x, 0.0),
point $O_{r=0.5\,to\,1.0}$ ((0.2963x-16.978) $r^2$+ (-0.3704x+27.222) r+ (-0.5185x+37.711), -8.0r2+22.8r+(-0.5185x+25.011), 100-a-b-x), point $D_{r=0.5\,to\,1.0}$ (0.0, -12.8r2+37.2r+ (-x+54.3) , 100-b-x), and point Q (0.0, 100-x, 0.0),
or on the line segments, excluding any point on line segment $D_{r=0.5\,to\,1.0}$ to Q and line segment QA,

Requirement 1-3-1)

When 50≥x≥46.5, and 0.5≥r≥0.25, coordinates (a,b,c) fall within a quadrangular region surrounded by line segments that connect the following points:

point A (-0.6902x+43.307, 100-a-x, 0.0),
point $O_{r=0.25\,to\,0.5}$ (-9.6r2+17.2r+ (-0.6571x+42.157),-19.2r2+ (0.2286x+24.571) r+ (-0.6286x+26.729), 100-a-b-x),
point $D_{r=0.25\,to\,0.5}$ (0.0, (0.9143x-71.314) $r^2$+ (-0.5714x+80.571) r+ (-0.9143x+45.914), 100-b-x), and
point Q (0.0, 100-x, 0.0),
or on the line segments, excluding any point on line segment $D_{r=0.25\,to\,0.5}$ to Q and line segment QA, or

1-3-2)

When 50≥x≥46.5, and 1.0≥r≥0.5, coordinates (a,b,c) fall within a quadrangular region surrounded by line segments that connect the following points:

point A (-0.6902x+43.307, 100-a-x, 0.0),
point $O_{r=0.5\,to\,1.0}$ ((-0.2286x+7.4286) $r^2$+ (0.4x-8.6) r+ (-0.8x+50.8), (0.2286x-18.629) $r^2$+ (-0.2857x+36.086) r+ (-0.4286x+20.829), 100-a-b-x),
point $D_{r=0.5\,to\,1.0}$ (0.0, (0.2286x-23.429) $r^2$+ (-0.4x+55.8) r+ (-0.8286x+46.329), 100-b-x), and
point Q (0.0, 100-x, 0.0),
or on the line segments, excluding any point on line segment $D_{r=0.5\,to\,1.0}$ to Q and line segment QA.

The refrigerant according to the present disclosure that satisfies the following requirements 2-1-1 to 2-3-2 is preferable, because such a refrigerant has a GWP of 750 or less, and ASHRAE non-flammability.

Requirement 2-1-1)

When 43.8≥x≥41, and 0.5≥r≥0.25, coordinates (a,b,c) fall within a triangular region surrounded by line segments that connect the following points:

point $F_{r=0.25\ to\ 0.5}$ (0.0, (-1.1429x+37.257) $r^2$+ (1.2857x-38.714) r- (-1.7143x+106.89), 100-b-x),
point $P_{r=0.25\ to\ 0.5}$ ((-1.1429x+34.057) $r^2$+ (1.0x-21.0) r+ (-0.4643x+27.636), (2.2857x-119.31) $r^2$+ (-2.Ox+122.0) r+ (-0.3929x+19.907), 100-a-b-x), and
point $D_{r=0.25\ to\ 0.5}$ (0.0, -28.8$r^2$+54.0r+ (-x+49.9), 100-b-x),
or on the line segments, excluding any point on line segment $D_{r=0.25\ to\ 0.5}$ to $F_{r=0.25\ to\ 0.5}$, or

2-1-2)

When 43.8≥x≥41, and 1.0≥r≥0.5, coordinates (a,b,c) fall within a triangular region surrounded by line segments that connect the following points:

point $F_{r=0.5\ to\ 1.0}$ (0.0, (3.7143x-159.49) $r^2$+ (-5.0714x+222.53)r+(0.25x+25.45), 100-b-x),
point $P_{r=0.5\ to\ 1.0}$ ((3.4286x-138.17) $r^2$+ (-5.4286x+203.57) r+ (1.6071x-41.593), (-2.8571x+106.74) $r^2$+ (4.5714x-143.63) r+ (-2.3929x+96.027), 100-a-b-x), and
point $D_{r=0.5\ to\ 1.0}$ (0.0, (-0. 5714x+12 .229) $r^2$+ (0.8571x-0.3429) r+ (-1.2857x+66.814), 100-b-x),
or on the line segments, excluding any point on line segment $D_{r=0.5\ to\ 1.0}$ to $F_{r=0.5\ to\ 1.0}$, or

2-2-1)

When 46.5≥x≥43, and 0.5≥r≥0.25, coordinates (a,b,c) fall within a triangular region surrounded by line segments that connect the following points:

point $F_{r=0.25\ to\ 0.5}$ (0.0, (9.4815x-428.09) $r^2$+ (-7.1111x+329.07) r+ (-0.2593x+43.156), 100-b-x),
point $P_{r=0.25\ to\ 0.5}$ ((-8.2963x+347.38) $r^2$+ (4.8889x-191.33) r+ (-0.963x+49.478), (7.1111x-330.67) $r^2$+ (-4.1481x+216.09) r+ (-0.2593x+14.056), 100-a-b-x), and
point $D_{r=0.25\ to\ 0.5}$ (0.0, -28.8$r^2$+54.0r+ (-x+49.9), 100-b-x),
or on the line segments, excluding any point on line segment $D_{r=0.25\ to\ 0.5}$ to $F_{r=0.25\ to\ 0.5}$, or

2-2-2)

When 46.5≥x≥43, and 1.0≥r≥0.5, coordinates (a,b,c) fall within a triangular region surrounded by line segments that connect the following points:

point $F_{r=0.5\ to\ 1.0}$ (0.0, (-4.7407x+210.84) $r^2$+ (6.963x-304.58) r+ (-3.7407x+200.24), 100-b-x),
point $P_{r=0.5\ to\ 1.0}$ ((0.2963x-0.9778) $r^2$+ (0.2222x-43.933) r+ (-0.7778x+62.867), (-0.2963x-5.4222) $r^2$+ (-0.0)741x+59.844) r+ (-0.4444x+10.867), 100-a-b-x), and
point $D_{r=0.5\ to\ 1.0}$ (0.0, -12.8$r^2$+37.2r+ (-x+54.3), 100-b-x),
or on the line segments, excluding any point on line segment $D_{r=0.5\ to\ 1.0}$ to $F_{r=0.5\ to\ 1.0}$, or

2-3-1)

When 50≥x≥46.5, and 0.37≥r≥0.25, coordinates (a,b,c) fall within a triangular region surrounded by line segments that connect the following points:

point $F_{r=0.25\ to\ 0.37}$ (0.0, (-35.714x+1744.0) $r^2$+ (23.333x-1128.3) r+ (-5.144x+276.32), 100-b-x),
point $P_{r=0.25\ to\ 0.37}$ ((11.905x-595.24) $r^2$+ (-7.6189x+392.61) r+ (0.9322x-39.027), (-27.778x+1305.6) $r^2$+ (17.46x-796.35) r+ (-3.5147x+166.48), 100-a-b-x), and
point $D_{r=0.25\ to\ 0.37}$ (0.0, (0.9143x-71.314) $r^2$+ (-0.5714x+80.571) r+ (-0.9143x+45.914), 100-b-x),
or on the line segments, excluding any point on line segment $D_{r=0.25\ to\ 0.37}$ to $F_{r=0.25\ to\ 0.37}$, or

2-3-2)

When 50≥x≥46.5, and 1.0≥r≥0.5, coordinates (a,b,c) fall within a triangular region surrounded by line segments that connect the following points:

point $F_{r=0.5\ to\ 1.0}$ (0.0, (2.2857x-115.89) $r^2$+ (-3.0857x+162.69) r+ (-0.3714x+43.571), 100-b-x),
point $P_{r=0.5\ to\ 1.0}$ ((-3.2x+161.6) $r^2$+ (4.4571x-240.86) r+ (-2.0857x+123.69), (2.5143x-136.11) $r^2$+ (-3.3714x+213.17) r+ (0.5429x-35.043), 100-a-b-x), and

point $D_{r=0.5\ to\ 1.0}$ (0.0, (0.2286x-23.429) $r^2$+ (-0.4x+55.8) r+ (-0.8286x+46.329), 100-b-x),
or on the line segments, excluding any point on line segment $D_{r=0.5\ to\ 1.0}$ to $F_{r=0.5\ to\ 1.0}$.

The refrigerant according to the present disclosure may further comprise other additional refrigerants and/or unavoidable impurities in addition to R32, $CO_2$, R125, R134a, and R1234yf, as long as the above properties and effects are not impaired. In this respect, the refrigerant according to the present disclosure preferably comprises R32, $CO_2$, R125, R134a, and R1234yf in a total amount of 99.5 mass% or more based on the entire refrigerant. In this case, the total amount of one or more additional refrigerants and unavoidable impurities is 0.5 mass% or less based on the entire refrigerant. In this respect, the refrigerant comprises R32, $CO_2$, R125, R134a, and R1234yf in a total amount of more preferably 99.75 mass% or more, and still more preferably 99.9 mass% or more based on the entire refrigerant.

Such additional refrigerants are not limited, and can be selected from a wide range of refrigerants. The mixed refrigerant may comprise a single additional refrigerant, or two or more additional refrigerants.

### 1.2 Application

The refrigerant according to the present disclosure can be suitably used in (A) a refrigerating machine equipped with a heat exchanger in which the flow of the refrigerant and the flow of the external heat medium are in countercurrent flow; and/or (B) a refrigerating machine equipped with a heat-source-side heat exchanger and a user-side heat exchanger, with the evaporating temperature of the refrigerant being 0°C or below when the user-side heat exchanger functions as an evaporator. Details of these specific refrigerating machines (A) and (B) are described later.

The refrigerant according to the present disclosure is suitable for use as an alternative refrigerant for R410A.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

### 2.1. Water

The refrigerant composition according to the present disclosure may contain a small amount of water. The water content of the refrigerant composition is preferably 0.1 parts by mass or less, per 100 parts by mass of the refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon or a fluoroether.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitrobenzene and nitrostyrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 parts by mass, and more preferably 0.05 to 2 parts by mass, per 100 parts by mass of the refrigerant.

2.6. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 parts by mass, and more preferably 0.05 to 2 parts by mass, per 100 parts by mass the refrigerant.

3. Refrigeration Oil-Containing Working Fluid

The refrigeration oil-containing working fluid according to the present disclosure comprises at least the refrigerant or refrigerant composition according to the present disclosure and a refrigeration oil, and is used as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

3.1. Refrigeration Oil

The refrigeration oil-containing working fluid according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally comprise at least one additive. Examples of additives include the compatibilizing agents described below.

3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Refrigerating Machine

Below, refrigerating machines according to embodiments of the present disclosure are described with reference to drawings. The use of the refrigerant according to the present disclosure in these refrigerating machines can provide the excellent effects described above. Thus, the refrigerant according to the present disclosure is particularly suitable for use in these refrigerating machines.

4.1 Refrigerating Machine (A)

A refrigerating machine (A) comprises a countercurrent heat exchanger in which the flow of the refrigerant and the flow of the external heat medium are in countercurrent flow. "Countercurrent" means that the flow of a refrigerant is opposite to the flow of an external heat medium in a heat exchanger (i.e., the refrigerant flows from downstream to upstream in the direction in which the external heat medium flows); and thus differs from concurrent, in which the flow of the refrigerant is in the forward direction of the flow of the external heat medium (the refrigerant flows from upstream to downstream in the direction in which the external heat medium flows).

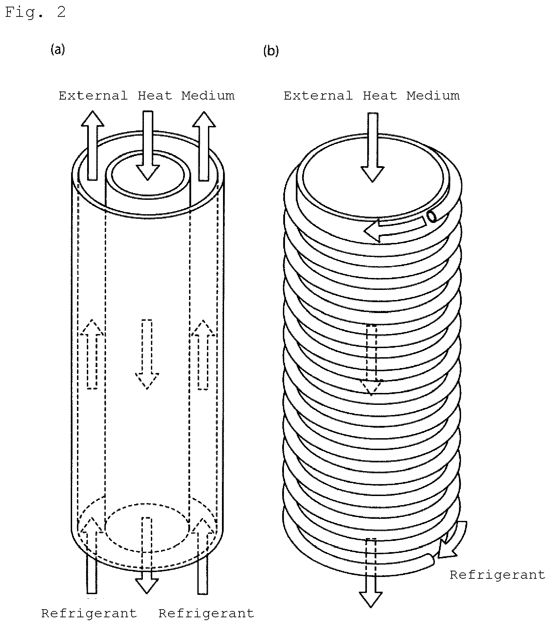

Specifically, when the external heat medium is water, a double-pipe heat exchanger as shown in Fig. 2(a) may be used as a heat exchanger. For example, the external heat medium is allowed to flow from one side to the other through an inner pipe P1 of the double pipe (from upstream to downstream in Fig. 2(a)), and the refrigerant is allowed to flow through an outer pipe P2 from the other side to the one side (from downstream to upstream in Fig. 2(a)); this makes the flow of the refrigerant countercurrent with the flow of the external heat medium. When a cylindrical pipe P3 wound with a spiral pipe P4 on its outer circumference as shown in Fig. 2(b) is used as a heat exchanger, the external heat medium is allowed to flow through the cylindrical pipe P3, for example, from one side to the other (from upstream to downstream in Fig. 2(b)), and the refrigerant is allowed to flow through the spiral pipe P4 from the other side to the one side (from downstream to upstream in Fig. 2(b)); this makes the flow of the refrigerant countercurrent with the flow of the external heat medium. Additionally, known heat exchangers in which the refrigerant flows in the direction opposite to the flow of the external heat medium, such as a plate heat exchanger (not shown), are also usable.

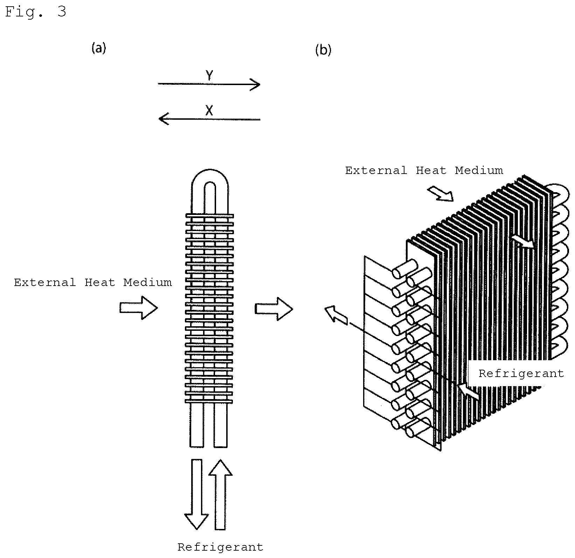

When the external heat medium is air, a finned tube heat exchanger as shown in Fig. 3 may be used as a heat exchanger. The finned tube heat exchanger comprises a plurality of fins F that are arranged at a predetermined interval, and a heat transfer tube P5 that appears winding in a planar view. The heat transfer tube P5 is provided such that multiple straight portions (two portions in Fig. 3) of the heat transfer tube P5 that are in parallel to each other pass through the plurality of fins F. Of the two ends of the heat transfer tube P5, one end serves as an inlet for the refrigerant, and the other serves as an outlet for the refrigerant. Allowing a refrigerant to flow from downstream to upstream as indicated by arrow X in Fig. 3 in the direction of air flow Y makes the flow of the refrigerant countercurrent with the flow of the external heat medium.

The refrigerant according to the present disclosure is a zeotropic composition, and the temperature of the heat medium increases or decreases during isobaric evaporation or condensation.

A refrigeration cycle that involves temperature change (temperature glide) during evaporation or condensation is called a "Lorenz cycle." In a Lorenz cycle, when the evaporator and the condenser that function as a heat exchanger for exchanging heat are of countercurrent type, this decreases the difference in the temperature of the refrigerant between during evaporation and during condensation. However, a difference in temperature sufficiently large to effectively transfer heat between the refrigerant and the external heat medium is maintained, enabling efficient heat exchange. Another advantage of refrigerating machines equipped with a countercurrent heat exchanger is the minimum difference in pressure. Thus, the use of the refrigerant according to the present disclosure in a countercurrent refrigerating machine improves energy efficiency and/or capacity, as compared with the use of the refrigerant in conventional refrigerating machines.

4.2 Refrigerating Machine (B)

A refrigerating machine (B) comprises a heat-source-side heat exchanger and a user-side heat exchanger, with the evaporating temperature of the refrigerant being 0°C or below when the user-side heat exchanger functions as an evaporator. The evaporating temperature of the refrigerant can be measured by detecting the temperature of the refrigerant at the outlet of the user-side heat exchanger. The heat exchanger of the refrigerating machine (B) does not have to be of countercurrent type.

4.3 Combination of Refrigerating Machines (A) and (B)

In the present disclosure, a refrigerating machine that has the characteristics of both the refrigerating machine (A) and the refrigerating machine (B) may be used. Specifically, a refrigerating machine is usable that comprises a countercurrent heat exchanger in which the flow of the refrigerant and the flow of the external heat medium are in countercurrent flow, with the evaporating temperature of the refrigerant being 0°C or below when the heat exchanger functions as an evaporator.

The refrigerating machine according to the present disclosure can be suitably used as a shipping refrigerating machine provided to shipping containers for overland or marine transport, or as a showcase refrigerating machine provided to refrigerating showcases or freezing showcases installed in shops.

4.4 More Detailed Structure of Refrigerating Machine

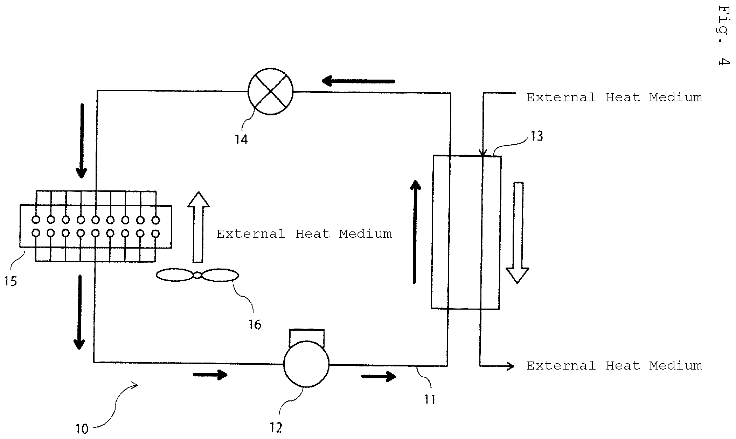

The refrigerating machines (A) and (B) may comprise a refrigerant circuit that includes a compressor, a heat-source-side heat exchanger, an expansion mechanism, and a user-side heat exchanger, in this order. Fig. 4 shows an embodiment of the refrigerant circuit in a refrigerating machine 10. A refrigerant circuit 11 mainly includes a compressor 12, a heat-source-side heat exchanger 13, an expansion mechanism 14, and a user-side heat exchanger 15; and is configured such that these devices 12 to 15 and other devices are sequentially connected. The refrigerant circuit 11 uses the mixture of fluorinated hydrocarbons described above as a refrigerant; the refrigerant circulates in the direction of the solid-line arrow in Fig. 4.

The compressor 12 is a device that compresses a low-pressure gas refrigerant, and ejects a high-temperature high-pressure gas refrigerant; the compressor 12 is installed in a space outside the machine, or in an outdoor space. The high-pressure gas refrigerant ejected from the compressor 12 is supplied to the heat-source-side heat exchanger 13.

The heat-source-side heat exchanger 13 is a device that condenses (liquefies) the high-temperature high-pressure gas refrigerant compressed in the compressor 12; and is installed in a space outside the machine, or in an outdoor space. The high-pressure liquid refrigerant ejected from the heat-source-side heat exchanger 13 passes through the expansion mechanism 14.

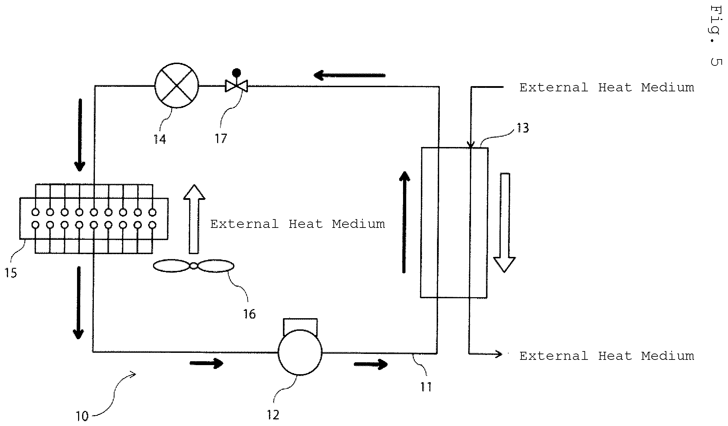

The expansion mechanism 14 is a device that depressurizes the high-pressure liquid refrigerant that released heat in the heat-source-side heat exchanger 13 to a low pressure in a refrigeration cycle; and is installed in a space inside the machine, or in an indoor space. The expansion mechanism 14 for use may be, for example, an electronic expansion valve; and is preferably a thermostatic expansion valve, as shown in Fig. 5. A thermostatic expansion valve used as the expansion mechanism 14 detects the temperature of the refrigerant that has passed the user-side heat exchanger 15 by a thermostatic cylinder directly connected to the expansion valve, and controls the degree of opening of the expansion valve based on the detected refrigerant temperature. Thus, for example, when the user-side heat exchanger 15, an expansion valve, and a thermostatic cylinder are provided inside the user-side unit, control of the expansion valve is completed only inside the user-side unit. This eliminates the need for communications in regards to the expansion valve between the heat-source-side unit provided with the heat-source-side heat exchanger 13 and the user-side unit, leading to low costs and reduced work. When a thermostatic expansion valve is used as the expansion mechanism 14, an electromagnetic valve 17 is provided to the expansion mechanism 14 on the side where the heat-source-side heat exchanger 13 is present. The low-pressure liquid refrigerant that has passed through the expansion mechanism 14 is supplied to the user-side heat exchanger 15.

The user-side heat exchanger 15 is a device that evaporates (vaporizes) the low-pressure liquid refrigerant; and is installed in a space inside the machine, or in an indoor space. The low-pressure gas refrigerant ejected from the user-side heat exchanger 15 is supplied to the compressor 12, and recirculates the refrigerant circuit 11.

In the refrigerating machine, the heat-source-side heat exchanger 13 functions as a condenser, and the user-side heat exchanger 15 functions as an evaporator.

In the refrigerating machine (A), two heat exchangers (heat-source-side heat exchanger 13 and user-side heat exchanger 15) are of a countercurrent heat exchanger. In Figs. 4 and 5, and Figs. 6 to 11, which are explained below, the heat-source-side heat exchanger 13 is configured as a heat exchanger using water as an external heat medium (e.g., a double-pipe heat exchanger), and the user-side heat exchanger 15 is configured as a heat exchanger using air as an external heat medium (e.g., a finned tube heat exchanger); however, the exchangers 13 and 15 are not limited to these exchangers. The heat-source-side heat exchanger 13 may be configured as a heat exchanger using air as an external heat medium, and the user-side heat exchanger 15 may be configured as a heat exchanger using water as an external heat medium. Alternatively, the heat-source-side heat exchanger 13 and the user-side heat exchanger 15 may both be configured as a heat exchanger using air as an external heat medium, or as a heat exchanger using water as an external heat medium.

In the refrigerating machine (B), the evaporating temperature of the refrigerant is 0°C or below when the user-side heat exchanger 15 functions as an evaporator. In the refrigerating machine (B), the heat-source-side heat exchanger 13 and the user-side heat exchanger 15 do not have to be of countercurrent type.

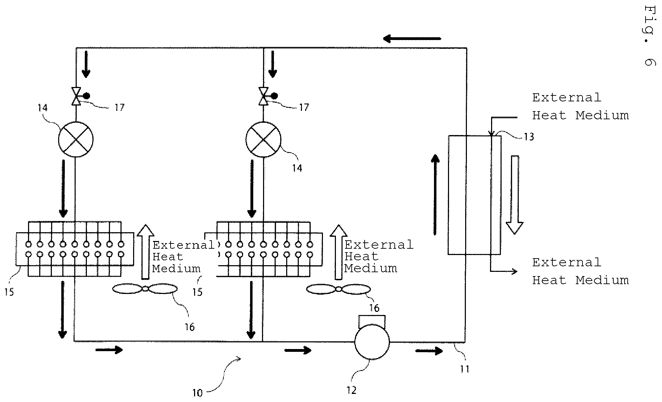

In the refrigerating machine 10 configured as described above, the refrigerant circuit 11, as shown in Fig. 6, may have a plurality of expansion mechanisms 14 and a plurality of user-side heat exchangers 15 (two for each in Fig. 6) arranged in parallel.

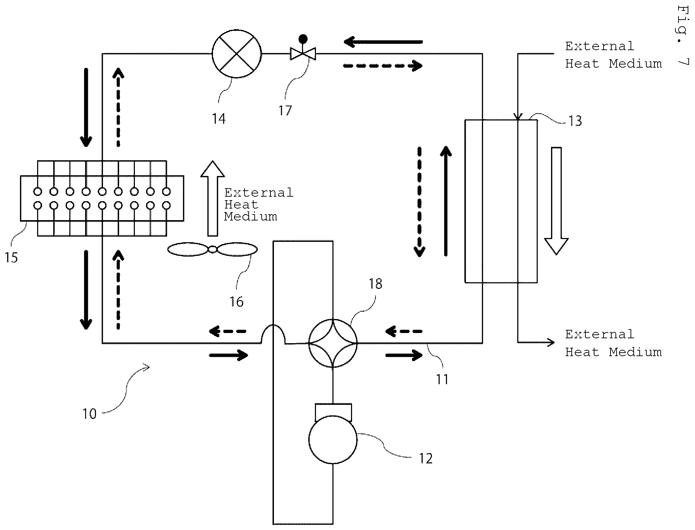

In the refrigerating machine 10 configured as described above, the refrigerant circuit 11, as shown in Fig. 7, may further comprise a four-way switching valve 18 that switches the flow of the high-temperature high-pressure gas refrigerant compressed by the compressor 12 toward either the heat-source-side heat exchanger 13 or the user-side heat exchanger 15. The four-way switching valve 18 can switch the operation between the normal-cycle operation, in which the heat-source-side heat exchanger 13 functions as a radiator, while the user-side heat exchanger 15 functions as an evaporator (the direction of the solid-line arrow) and the reverse-cycle operation, in which the heat-source-side heat exchanger 13 functions as an evaporator, while the user-side heat exchanger 15 functions as a radiator (the direction of the dashed-line arrow).

In the refrigerating machine 10 configured as described above, when the evaporating temperature of the refrigerant in the user-side heat exchanger 15 (evaporator) reaches 0°C or below, the user-side heat exchanger 15 (evaporator) may undergo frost formation. Frost formation decreases the heat-exchange efficiency of the user-side heat exchanger 15 (evaporator), increasing the power consumption and/or decreasing the cooling capacity. Thus, it is preferable to remove frost adhered to the user-side heat exchanger 15 (evaporator) by performing a defrosting operation (defrost) under predetermined conditions.

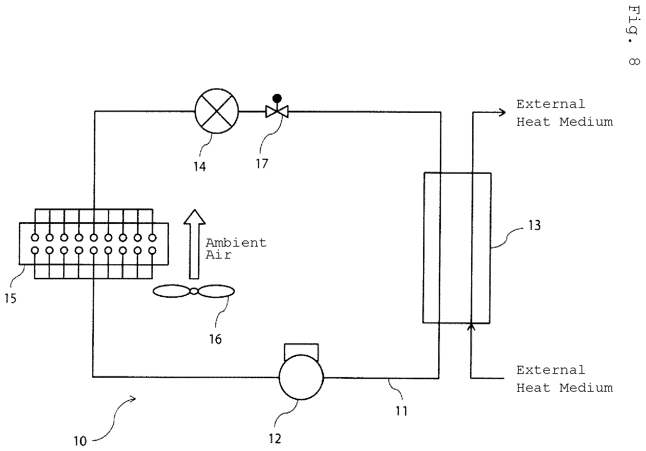

The defrosting operation (defrost) may be off-cycle defrost performed by, as shown in Fig. 8, stopping the operation of the compressor 12, and then activating a fan 16 without flowing the refrigerant to the user-side heat exchanger 15. The off-cycle defrost sends an external heat medium to the user-side heat exchanger 15 by the fan 16 to defrost the user-side heat exchanger 15. The user-side heat exchanger 15 configured with a heat exchanger that uses water as an external heat medium is provided with the fan 16.

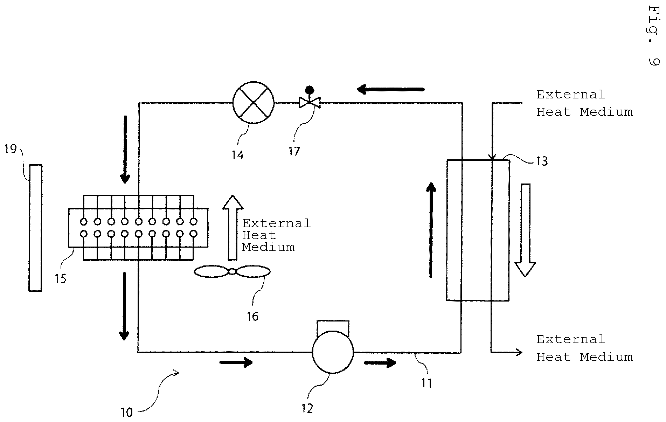

The defrosting operation (defrost) may be heating defrost performed by, as shown in Fig. 9, further adding a heating means 19 for heating the user-side heat exchanger 15 to the refrigerating machine 10, and activating the heating means 19. The heating defrost heats the user-side heat exchanger 15 by the heating means 19 to melt the frost adhered to the user-side heat exchanger 15, thereby defrosting the user-side heat exchanger 15. Examples of the heating means 19 for use include electric heaters.

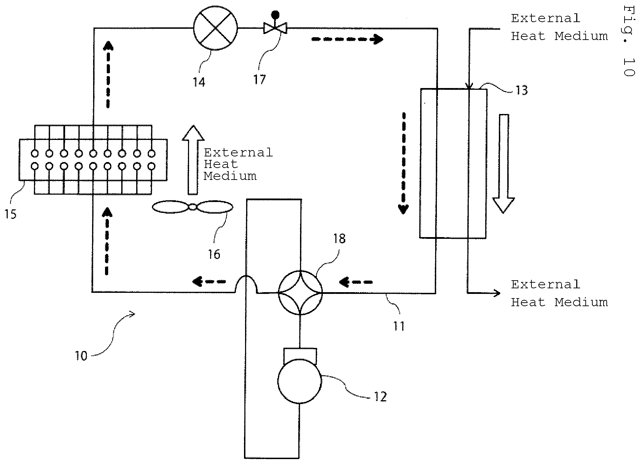

The defrosting operation (defrost) may be reverse-cycle hot-gas defrost performed by, as shown in Fig. 10, activating the reverse-cycle operation described above. Activating the reverse-cycle operation supplies the high-temperature high-pressure gas refrigerant compressed by the compressor 12 to the user-side heat exchanger 15 to melt the frost adhered to the user-side heat exchanger 15, thereby defrosting the user-side heat exchanger 15.

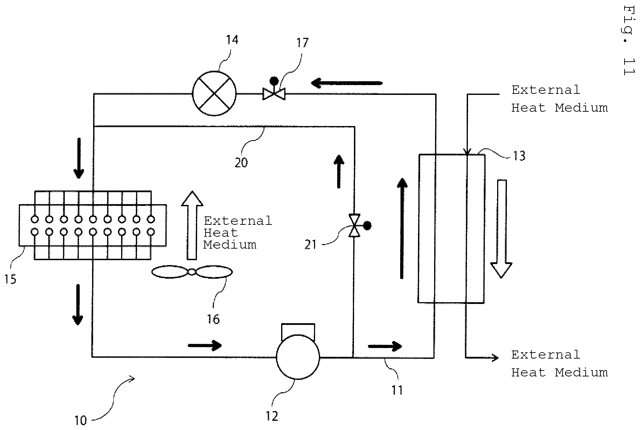

The defrosting operation (defrost) may be normal-cycle hot-gas defrost as shown in Fig. 11. In Fig. 11, the refrigerant circuit 11 is provided with a bypass flow path 20 that is connected to the discharge side of the compressor 12 at one end, and to the inlet side of the user-side heat exchanger 15 at the other end. The normal-cycle hot-gas defrost opens a bypass valve 21, while circulating the refrigerant, to directly supply the high-temperature high-pressure gas refrigerant compressed by the compressor 12 to the user-side heat exchanger 15 through the bypass flow path 20. This melts the frost adhered to the user-side heat exchanger 15, thereby defrosting the user-side heat exchanger 15. The high-temperature high-pressure gas refrigerant compressed by the compressor 12 may be bypassed after being depressurized through the expansion mechanism 14 at the inlet side of the user-side heat exchanger 15.

The predetermined conditions under which the defrosting operation (defrost) is performed may be configured such that, for example, a temperature sensor (not shown) detects the inflow refrigerant temperature at the user-side heat exchanger 15 and outside air temperature, and, for example, a control unit determines whether frost is formed in the user-side heat exchanger 15 based on these temperatures; and performs the defrosting operation (defrost) triggered by the determination that frost has been formed.

4. Method for Operating Refrigerating Machine

The method for operating a refrigerating machine according to the present disclosure is a method for operating the refrigerating machine (A) or (B) using the refrigerant according to the present disclosure.

Specifically, the method for operating a refrigerating machine according to the present disclosure comprises circulating the refrigerant according to the present disclosure in the refrigerating machine (A) or (B).

When the refrigerating machine has the following structure, the method for operating a refrigerating machine according to the present disclosure may comprise switching the operation between a normal-cycle operation and a reverse-cycle operation by the four-way switching valve described below:

> A refrigerating machine comprising a refrigerant circuit that includes a compressor, a heat-source-side heat exchanger, an expansion mechanism, and a user-side heat exchanger in this order,
> the refrigerant circuit including a four-way switching valve that switches the flow of a refrigerant compressed by the compressor toward either the heat-source-side heat exchanger or the user-side heat exchanger,
> the four-way switching valve capable of switching an operation between a normal-cycle operation in which the heat-source-side heat exchanger functions as a radiator while the user-side heat exchanger functions as an evaporator, and a reverse-cycle operation in which the heat-source-side heat exchanger functions as an evaporator while the user-side heat exchanger functions as a radiator.

Additionally, the method for operating the refrigerating machine according to the present disclosure may further comprise performing reverse-cycle hot-gas defrost by the reverse-cycle operation.

When the refrigerating machine has the following structure, the method for operating a refrigerating machine according to the present disclosure may comprise performing off-cycle defrost by stopping the operation of the compressor described below, and operating the user-side fan described below:

> A refrigerating machine comprising a refrigerant circuit that includes a compressor, a heat-source-side heat exchanger, an expansion mechanism, and a user-side heat exchanger in this order,
> the user-side heat exchanger being provided with a user-side fan.

When the refrigerating machine has the following structure, the method for operating a refrigerating machine according to the present disclosure may comprise performing heating defrost by heating the user-side heat exchanger with the heating means described below:
A refrigerating machine comprising a refrigerant circuit that includes a compressor, a heat-source-side heat exchanger, an expansion mechanism, and a user-side heat exchanger in this order; and further comprising a heating means for heating the user-side heat exchanger.

When the refrigerating machine has the following structure, the method for operating a refrigerating machine according to the present disclosure may comprise performing normal-cycle hot-gas defrost by supplying a refrigerant compressed by the compressor to the user-side heat exchanger through the bypass flow path:
A refrigerating machine comprising a refrigerant circuit that includes a bypass flow path that is connected to the discharge side of the compressor at one end, and to the inlet side of the user-side heat exchanger at the other end.

Examples

The present disclosure is described in more detail below with reference to Examples. However, the present disclosure is not limited to the Examples.

1. Calculation of WCF Non-Flammability Limit and ASHRAE Non-Flammability Limit (WCF & WCFF Non-Flammability)

The formulation of a mixed refrigerant composed only of R32, $CO_2$, R125, R134a, and R1234yf is described as below. Specifically, the formulation of this mixed refrigerant is identified by coordinates (a,b,c) in a ternary composition diagram having R32 at a point of (100-x) mass%, $CO_2$ at a point of (100-x) mass%, and the sum of R125 and R134a at a point of (100-x) mass% as vertices, in which the mass% of R32 is a, the mass% of $CO_2$ is b, the mass% of R125 is $c_1$, the mass% of R134a is $c_2$, the mass% of the sum of R125 and R134a is c, the mass% of R1234yf is x, and $c_1/(c_1+c_2)$ is r, based on the sum of R32, $CO_2$, R125, R134a, and R1234yf.

The following describes the method for determining the WCF non-flammability limit and ASHRAE non-flammability limit when x=41 mass% and r=0.25.

To determine the non-flammability limits in a ternary composition diagram, first, the non-flammability limit of a binary mixed refrigerant of a flammable refrigerant (R32 and 1234yf) and a non-flammable refrigerant ($CO_2$, R134a, and R125) must be determined. How to determine the non-flammability limit of the binary mixed refrigerant is described below.

[1] Non-Flammability Limit of Binary Mixed Refrigerant of Flammable Refrigerant (R32 and 1234yf) and Non-Flammable Refrigerant ($CO_2$, R134a, and R125)

The non-flammability limit of the binary mixed refrigerant was determined with the measurement device and measurement method of the combustion test according to ASTM E681-2009.

Specifically, in order to visually observe and video-record the state of combustion, a spherical glass flask (inner volume: 12 liters) was used. The upper lid of the glass flask was set to release gas when excessive pressure was applied on the glass flask by combustion. The ignition was initiated by discharge from electrodes held at a height one-third from the bottom. The test conditions are as described below.

Test Conditions

Test Vessel: 280 mm in diameter, spherical (inner volume: 12 liters)
Test Temperature: 60°C $\pm$ 3°C
Pressure: 101.3 kPa $\pm$ 0.7 kPa
Water Content: 0.0088 g $\pm$ 0.0005 g per g of dry air Mixture Ratio of Binary Refrigerant Composition/Air: per vol% $\pm$ 0.2 vol%
Mixing of Binary Refrigerant Composition: $\pm$ 0.1 mass%
Ignition Method: AC discharge, voltage 15 kV, current 30 mA, neon transformer
Electrode Interval: 6.4 mm (1/4 inch)
Spark: 0.4 seconds $\pm$ 0.05 seconds

Determination Criteria:

- In the case in which a flame propagates at a frame angle of more than 90° from around the ignition point = combustion (propagation)
- In the case in which a flame propagates at a frame angle of 90° or less from around the ignition point = no flame propagation (non-flammable)

The test was performed on the combinations of a flammable refrigerant and a non-flammable refrigerant shown in Table 1. A non-flammable refrigerant was added to a flammable refrigerant in stages.

As a result, the mixed refrigerant of a flammable refrigerant R32 and a non-flammable refrigerant R134a exhibited no flame propagation from the point at which R32=43.0 mass%, and R134a=57.0 mass%. This formulation was determined to be a non-flammability limit. Additionally, flame propagation was not observed in flammable refrigerant R32 and non-flammable refrigerant R125 from the point at which R32=63.0 mass%, and R125=37.0 mass%; in flammable refrigerant R32 and non-flammable refrigerant $CO_2$ from the point at which R32=43.5 mass%, and $CO_2$=56.5 mass%; in flammable refrigerant 1234yf and non-flammable refrigerant R134a from the point at which 1234yf=62.0 mass% and R134a=38.0 mass%; in flammable refrigerant 1234yf and non-flammable refrigerant R125 from the point at which 1234yf=79.0 mass%, and R125=21.0 mass%; and in flammable refrigerant 1234yf and non-flammable refrigerant $CO_2$ from the point at which 1234yf=63.0 mass%, and $CO_2$=37.0 mass%. These formulations were determined to be non-flammability limits. Table 1 summarizes the results.

Table 1

| Item | Flammable Refrigerant | Non-Flammable Refrigerant |
|---|---|---|
| Combination of Binary Mixed Refrigerant | R32 | R134a |
| Non-Flammability Limit (wt%) | 43.0 | 57.0 |
| Combination of Binary Mixed Refrigerant | R32 | R125 |
| Non-Flammability Limit (wt%) | 63.0 | 37.0 |
| Combination of Binary Mixed Refrigerant | R32 | $CO_2$ |
| Non-Flammability Limit (wt%) | 43.5 | 56.5 |
| Combination of Binary Mixed Refrigerant | 1234yf | R134a |
| Non-Flammability Limit (wt%) | 62.0 | 38.0 |
| Combination of Binary Mixed Refrigerant | 1234yf | R125 |
| Non-Flammability Limit (wt%) | 79.0 | 21.0 |

(continued)

| Item | Flammable Refrigerant | Non-Flammable Refrigerant |
|---|---|---|
| Combination of Binary Mixed Refrigerant | 1234yf | $CO_2$ |
| Non-Flammability Limit (wt%) | 63.0 | 37.0 |

Subsequently, the non-flammability limit when x=41 mass%, and r=0.25 was determined based on the non-flammability limit of the binary mixed refrigerants determined in section [1] above as described below.

1) When x=41 mass%, r=0.25, and c=0 mass%; point A (a,b,0)

With the setting of a+b=59 mass%, whether the mixture formulation is a non-flammability limit formulation was investigated in accordance with the following procedure.

```
(1) The R32-converted flammable refrigerant concentration = the
concentration of R32 + the concentration of R1234yf ×
((21/79)×(63/37)+(38/62)×(43/57))/2

(2) The R32-converted non-flammable refrigerant concentration =
the concentration of R125×(63/37)+the concentration of
R134a×(43/57)+the concentration of CO₂×(43.5/56.5)
```

A positive and minimum value determined by subtracting the R32-converted flammable refrigerant formulation from the R32-converted non-flammable refrigerant formulation was taken as the calculated non-flammability limit formulation. Table 2 shows the calculation results. Point A (15.0, 44.0, 0) was the calculated non-flammability limit formulation.

Table 2

| Formulation Example | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Flammability Limit | 15.10 | 0.00 | 41.00 | 0.00 | 43.90 | 33.86 | 33.80 | -0.06 |
| Non-Flammability Limit | 15.00 | 0.00 | 41.00 | 0.00 | 44.00 | 33.76 | 33.88 | 0.12 |

2) When x=41 mass%, r=0.25, and b=30 mass%; point (a,30,c)

With the setting of a+c=29 mass%, the non-flammability limit formulation was determined in accordance with the procedure described above. Table 3 shows the results.

Table 3

| Formulation Example | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Flammability Limit | 16.70 | 3.10 | 41.00 | 9.20 | 30.00 | 35.46 | 35.32 | -0.14 |
| Non-Flammability Limit | 16.60 | 3.10 | 41.00 | 9.30 | 30.00 | 35.36 | 35.39 | 0.03 |

3) When x=41 mass%, r=0.25, and b=15 mass%; point (a,15,c)

With the setting of a+c=44 mass%, the non-flammability limit formulation was determined in accordance with the procedure described above. Table 4 shows the results.

Table 4

| Formulation Example | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Flammability Limit | 18.30 | 6.40 | 41.00 | 19.30 | 15.00 | 37.06 | 37.01 | -0.05 |
| Non-Flammability Limit | 18.20 | 6.50 | 41.00 | 19.30 | 15.00 | 36.96 | 37.18 | 0.22 |

4) When x=41 mass%, r=0.25, and b=0 mass%; point $B_{r=0.25}$ (a,0,c)

With the setting of a+c=59 mass%, the non-flammability limit formulation was determined in accordance with the procedure described above. Table 5 shows the results.

Table 5

| Formulation Example | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Flammability Limit | 20.00 | 9.80 | 41.00 | 29.20 | 0.00 | 38.76 | 38.71 | -0.04 |
| Non-Flammability Limit | 19.90 | 9.80 | 41.00 | 29.30 | 0.00 | 38.66 | 38.79 | 0.13 |

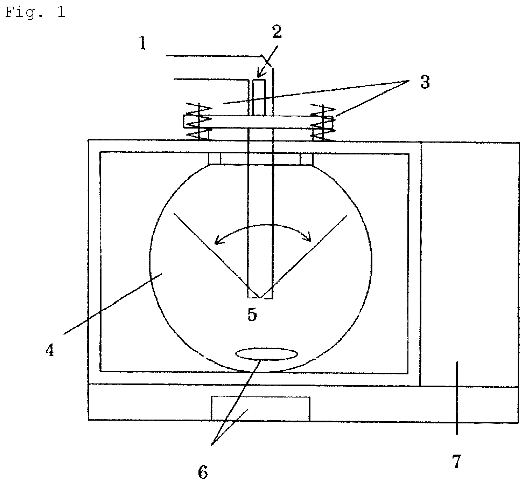

The ternary composition diagram of Fig. 1 shows the results of investigation of the calculated non-flammability limit formulations. The line formed by connecting these points is $AB_{r=0.25}$ of Fig. 1.

[2] Verification of the WCF non-flammability limit point determined from the non-flammability limit of the binary mixed refrigerant obtained in [1] by combustion test

A combustion test was performed in accordance with ASTM E681 described in section [1], with the following formulations:

Formulation shown in Table 2

Flammability limit formulation-1-1)
$(R32/CO_2/R125/R134a)=(15.1/43.9/0.0/0.0)$
Non-flammability limit formulation-1-2)
$(R32/CO_2/R125/R134a)=(15.0/44.0/0.0/0.0)$

Formulation shown Table 4

Flammability limit formulation-2-1)
$(R32/CO_2/R125/R134a)=(18.3/15.0/6.4/19.3)$
Non-flammability limit formulation-2-2)
$(R32/CO_2/R125/R134a)=(18.2/15.0/6.5/19.3)$

In formulation -1-1) and formulation -2-1), flame propagation was observed, while in formulation 1-1-2) and formulation -2-2), flame propagation was not observed. Thus, the non-flammability limit of a mixed refrigerant determined from the non-flammability limit of a binary mixed refrigerant is considered to indicate the actual non-flammability limit.

In this specification, the non-flammability limit formulation of a mixed refrigerant determined from the non-flammability limit of a binary mixed refrigerant is taken as the WCF non-flammability limit point. Additionally, because the WCF non-flammability limit point is on line segment $AB_{r=0.25}$ as shown in Fig. 1, line segment $AB_{r=0.25}$ determined from two points, point A and point $B_{r=0.25}$, is taken as the WCF non-flammability limit line.

The ASHRAE non-flammability (WCF non-flammability and WCFF non-flammability) means that a mixed refrigerant becomes nonflammable in the most flammable formulation of the mixed refrigerant (WCF) and in the most flammable formulation under the worst conditions (WCFF) in a test for leakage in storage and transport, a test for leakage from equipment, and a test for leakage and refill conducted based on the WCF formulation. The WCFF concentrations were determined below by performing leakage simulations under various conditions with the NIST Standard Reference Database Refleak Version 4.0 ("Refleak" below). The fact that the obtained WCFF formulation was at the non-flammability limit was confirmed by the method for determining the non-flammability limit of a mixed refrigerant from the non-flammability limit of a binary mixed refrigerant shown in the WCF non-flammability limit.

How to determine the ASHRAE non-flammability limit when x=41 mass% and r=0.25 is described below.

5) When x=41 mass%, r=0.25, and a=0 mass%; point $B_{r=0.25}$ (0.0, b, c (c1+c2))

A test for leakage in storage and transport, a test for leakage from equipment, and a test for leakage and refill were conducted with Refleak. The most flammable conditions were leak conditions in storage and transport, and also leakage at -40°C. Thus, the ASHRAE non-flammability limit was determined by performing the test for leakage in storage and transport at -40°C with the Refleak leakage simulation in accordance with the following procedure. Table 6 shows typical values indicating the limit of flammability or non-flammability in the leakage simulation. At the initial formulation of (0.0, 39.5, 19.5 (4.9+14.6)), the pressure was atmospheric pressure at -40°C and at 52% release under transport and storage conditions. At this point, the liquid side concentration was x=67.0 mass% (0.0, 2.5, 30.5(6.1+24.4)), and was the limit of non-flammability under atmospheric pressure in the non-flammability determination described above. However, at an initial formulation of (0.0, 39.6, 19.4 (4.9+14.5)), the pressure was atmospheric pressure at -40°C and at 52% release. At this point, the liquid side concentration was x=67.1% (0.0, 2.6, 30.3 (6.1+24.2)), and was flammable in the non-flammability determination described above. Thus, when the initial formulation takes (0.0, 39.5, 19.5 (4.9+14.6)) as the WCF formulation, both the WCF formulation and the WCFF formulation are determined to be non-flammable in calculation. Thus, (0.0, 39.5, 19.5 (4.9+14.6)) is the ASHRAE non-flammability limit formulation.

Table 6

| Leakage Simulation in Storage/ Transport | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Initial Formulation ① (=WCF) | 0.0 | 4.9 | 41.0 | 14.6 | 39.5 | 18.76 | 49.77 | 31.01 |
| Liquid Side Formulation at -40°C and 52% Release (Atmospheric Pressure Reached) (=WCFF) | 0.0 | 6.1 | 67.0 | 24.4 | 2.5 | 30.65 | 30.72 | 0.07 |
| Liquid Side Formulation at -40°C and 52% Release (Below Atmospheric Pressure) | 0.0 | 6.0 | 67.8 | 24.7 | 1.6 | 31.02 | 30.08 | -0.94 |
| Initial Formulation ② | 0.0 | 4.9 | 41.0 | 14.5 | 39.6 | 18.76 | 49.77 | 31.01 |
| Liquid Side Formulation at -40°C and 52% Release (Atmospheric Pressure Reached) | 0.0 | 6.1 | 67.1 | 24.2 | 2.6 | 30.70 | 30.64 | -0.05 |
| Liquid Side Formulation at -40°C and 52% Release (Below Atmospheric Pressure) | 0.0 | 6.0 | 67.8 | 24.5 | 1.7 | 31.02 | 30.01 | -1.01 |

EP 3 960 832 A1

6) Point $P_{r=0.25}$ (a,b,c (c1+c2)) when GWP=750 with x=41 mass%, r=0.25, and a mass%

When X=41.0 mass%, and r=0.25, the point at which GWP=750 in a ternary composition diagram that is shown by a+b+c=100-x=59 mass% is on the straight line $C_{r=0.25}$ to $D_{r=0.25}$ that connects point $C_{r=0.25}$ (31.6, 0.0, 27.4 (6.9+20.5)) and point $D_{r=0.25}$ (0.0, 20.6, 38.4(9.6+28.8)) as shown in Fig. 1. This straight line is indicated by c1=-0.085a+9.6. For $P_{r=0.25}$ (a, -0.085c1+9.6, c), which is the ASHRAE non-flammability limit at GWP=750, the initial formulation was set with this condition, and the ASHRAE non-flammability limit formulation was determined by performing -40°C simulation under storage and transport conditions with Refleak, as shown in Table 7.

Table 7

| Leakage Simulation in Storage/ Transport | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Initial Formulation ① (=WCF) | 12.8 | 8.5 | 41.0 | 25.5 | 12.0 | 31.56 | 42.95 | 11.39 |
| Gas Side Formulation at -40°C and 38% Release (Atmospheric Pressure Reached) (=WCFF) | 21.8 | 12.4 | 40.1 | 20.6 | 5.1 | 40.15 | 40.58 | 0.44 |
| Gas Side Formulation at -40°C and 40% Release (Below Atmospheric Pressure) | 21.3 | 12.4 | 41.1 | 21.4 | 3.8 | 40.10 | 40.18 | 0.08 |
| Initial Formulation ② | 12.9 | 8.5 | 41.0 | 25.5 | 12.1 | 31.66 | 43.03 | 11.37 |
| Gas Side Formulation at -40°C and 38% Release (Atmospheric Pressure Reached) | 21.4 | 12.4 | 41.1 | 21.3 | 3.8 | 40.20 | 40.11 | -0.10 |
| Gas Side Formulation at -40°C and 40% Release (Below Atmospheric Pressure) | 20.8 | 12.4 | 42.0 | 22.1 | 2.8 | 40.01 | 39.94 | -0.07 |

7) Point (a, b, c(c1+c2)) when x=41 mass%, r=0.25, and a=10.0 mass%

Table 8 shows the results of the study performed in the same manner as above.

Table 8

| Leakage Simulation in Storage/ Transport | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Initial Formulation ① (=WCF) | 10.0 | 7.0 | 41.0 | 20.8 | 21.2 | 28.76 | 43.93 | 15.18 |
| Gas Side Formulation at -40°C and 46% Release (Atmospheric Pressure Reached) (=WCFF) | 18.3 | 11.2 | 44.6 | 19.5 | 6.4 | 38.70 | 38.71 | 0.004 |
| Gas Side Formulation at -40°C and 48% Release (Below Atmospheric Pressure) | 17.7 | 11.3 | 46.1 | 20.4 | 4.6 | 38.79 | 38.17 | -0.62 |
| Initial Formulation ② | 10.0 | 6.9 | 41.0 | 20.8 | 21.3 | 28.76 | 43.84 | 15.08 |
| Gas Side Formulation at -40°C and 46% Release (Atmospheric Pressure Reached) | 18.3 | 11.1 | 44.6 | 19.5 | 6.5 | 38.70 | 38.61 | -0.09 |
| Gas Side Formulation at -40°C and 48% Release (Below Atmospheric Pressure) | 17.1 | 11.1 | 46.1 | 20.4 | 4.6 | 38.19 | 37.83 | -0.36 |

8) point (a,b,c(c1+c2)) when x=41 mass%, r=0.25, and a=5.8 mass%

Table 9 shows the results of the study performed in the same manner as above.

Table 9

| Leakage Simulation in Storage/ Transport | R32 (a) | R125 (cl) | R1234yf (x) | R134a (c2) | $CO_2$ (b) | R32-Converted Flammable Refrigerant Concentration | R32-Converted Non-Flammable Refrigerant Concentration | Non-Flammability-Flammability (Positive Value: Non-Flammability) |
|---|---|---|---|---|---|---|---|---|
| | wt% | wt% | wt% | wt% | wt% | wt% | wt% | |
| Initial Formulation ① (=WCF) | 5.8 | 5.8 | 41.0 | 17.4 | 30.0 | 24.56 | 46.10 | 21.54 |
| Liquid Side Formulation at -40°C and 50% Release (Atmospheric Pressure Reached) (=WCFF) | 4.1 | 6.4 | 61.2 | 27.2 | 1.1 | 32.10 | 32.26 | 0.165 |
| Liquid Side Formulation at -40°C and 52% Release (Below Atmospheric Pressure) | 3.8 | 6.2 | 61.7 | 27.5 | 0.8 | 32.03 | 31.92 | -0.11 |
| Initial Formulation ② | 5.8 | 5.8 | 41.0 | 17.3 | 30.1 | 24.56 | 46.10 | 21.54 |
| Liquid Side Formulation at -40°C and 50% Release (Atmospheric Pressure Reached) | 4.1 | 6.4 | 61.4 | 27.0 | 1.1 | 32.19 | 32.11 | -0.08 |
| Liquid Side Formulation at -40°C and 52% Release (Below Atmospheric Pressure) | 3.8 | 6.2 | 61.9 | 27.5 | 0.6 | 32.12 | 31.76 | -0.35 |

[2] Verification of the ASHRAE non-flammability limit point determined from the non-flammability limit of the binary mixed refrigerant obtained in [1] by combustion test

A combustion test was performed in accordance with ASTM E681 described in section [1], with the following formulations. In formulation -3-1), formulation -4-1), and formulation 5-1), flame propagation was not observed; while in formulation -3-2), formulation -4-2), and formulation -5-2), flame propagation was observed. Thus, the ASHRAE non-flammability limits shown by the calculation of Tables 6, 7, and 9 are considered to indicate the actual non-flammability limits.

Formulation 3-1)

The liquid-side formulation at -40°C and 52% release of x=R1234yf=41.0 mass%, $(R32/CO_2/R125/R134a)=(0.0/39.5/4.9/14.6)$: x=67.0%, $(R32/CO_2/R125/R134a)=(0.0/2.5/6.1/24.4)$

Formulation 3-2)

The liquid-side formulation at -40°C and 52% release of x=R1234yf=41.0 mass%, $(R32/CO_2/R125/R134a)=(0.0/39.6/4.9/14.5)$: x=67.1%, $(R32/CO_2/R125/R134a)=(0.0/2.6/6.1/24.2)$

Formulation 4-1)

The gas-side formulation at -40°C and 38% release of x=R1234yf=41.0 mass%, $(R32/CO_2/R125/R134a)=(12.8/12.2/8.5/25.5)$: x=40.1%, $(R32/CO_2/R125/R134a)=(21.8/5.1/12.4/20.6)$

Formulation 4-2)

The gas-side formulation at -40°C and 38% release of x=R1234yf=41.0 mass%, $(R32/CO_2/R125/R134a)=(12.9/12.1/8.5/25.5)$: x=41.1%, $(R32/CO_2/R125/R134a)=(21.4/3.8/12.4/21.3)$

Formulation 5-1)

The liquid side formulation at -40°C and 50% release of x=R1234yf=41.0 mass%, $(R32/CO_2/R125/R134a)=(5.8/30.0/5.8/17.4)$: x=61.2%, $(R32/CO_2/R125/R134a)=(4.1/1.1/6.4/27.2)$

Formulation 5-2)

the liquid side formulation at -40°C and 50% release of x=R1234yf=41.0 mass%, $(R32/CO_2/R125/R134a)=(5.8/30.1/5.8/17.3)$: x=61.4%, $(R32/CO_2/R125/R134a)=(4.1/1.1/6.4/27.0)$

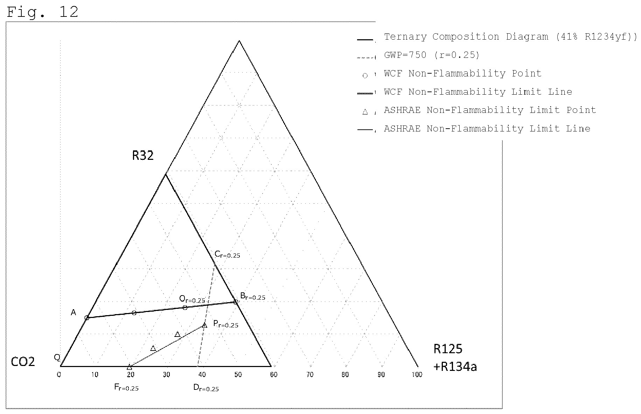

Fig. 12 shows the ASHRAE non-flammability limit points shown in Tables 6, 7, 8, and 9, and straight line $F_{r=0.25}$ to $P_{r=0.25}$ that connect point $F_{r=0.25}$ and point $P_{r=0.25}$. The ASHRAE non-flammability limit points are present on the flammable refrigerant R32 side when viewed from straight line $F_{r=0.25}$ to $P_{r=0.25}$, as shown in Fig. 12. However, taking safety factors into account, straight line $F_{r=0.25}$ to $P_{r=0.25}$ obtained by determining point $F_{r=0.25}$ and point $P_{r=0.25}$ is defined as the ASHRAE non-flammability limit line.

The WCF non-flammability limit line determined from the non-flammability limits of binary mixed refrigerants and the ASHRAE non-flammability limit line determined from the non-flammability limits of binary mixed refrigerants based on the WCFF formulations determined from the leakage simulation with Refleak individually matched their actual non-flammability limit lines. Thus, individual non-flammability limits are determined by this method below. Line segment ABr is defined as the WCF non-flammability limit line, and line segment FrPr is defined as the ASHRAE non-flammability limit line.

Tables 10 to 13 show the WCF non-flammability limit points of mixed refrigerants determined from the non-flammability limit of binary mixed refrigerants. Tables 14 to 17 show the ASHRAE non-flammability limit points determined from the leakage simulation and the non-flammability limits of binary mixed refrigerants.

Table 10

| Item | | Unit | Comparative Example 2 | Comparative Example 3 | Comparative Example 7 | Comparative Example 11 | Comparative Example 15 | Comparative Example 19 |
|---|---|---|---|---|---|---|---|---|
| | | | A | $B_{r=0.25}$ | $B_{r=0.375}$ | $B_{r=0.5}$ | $B_{r=0.75}$ | $B_{r=1.C}$ |
| WCF Concentration | R32 | mass% | 15.0 | 19.9 | 22.1 | 24.1 | 27.4 | 30.2 |
| | $CC_2$ | mass% | 44.0 | 0.0 | 0.C | 0.C | 0.C | 0.0 |
| | R125 | mass% | 0.0 | 9.8 | 13.8 | 17.5 | 23.7 | 28.8 |
| | R134a | mass% | 0.0 | 29.3 | 23.1 | 17.4 | 7.9 | 0.0 |
| | R1234yf | mass% | 41.0 | 41.0 | 41.C | 41.C | 41.C | 41.0 |
| Non-Flammability Determination | | | Non-flammable | Non-flammable | Non-flammable | Non-flammable | Non-flammable | Non-flammable |

Table 11

| Item | | Unit | Comparative Example 23 | Comparative Example 24 | Comparative Example 28 | Comparative Example 32 | Comparative Example 36 | Comparative Example 40 |
|---|---|---|---|---|---|---|---|---|
| | | | A | $B_{r=0.25}$ | $B_{r=0.375}$ | $B_{r=0.5}$ | $B_{r=0.75}$ | $B_{r=1.C}$ |
| WCF Concentration | R32 | mass% | 13.1 | 17.9 | 20.C | 21.9 | 25.2 | 27.9 |
| | $CC_2$ | mass% | 43.1 | 0.0 | 0.C | 0.C | 0.C | 0.0 |
| | R125 | mass% | 0.0 | 9.6 | 13.6 | 17.2 | 23.3 | 28.3 |
| | R134a | mass% | 0.0 | 28.7 | 22.6 | 17.1 | 7.7 | 0.0 |
| | R1234yf | mass% | 43.8 | 43.8 | 43.8 | 43.8 | 43.8 | 43.8 |
| Non-Flammability Determination | | | Non-flammable | Non-flammable | Non-flammable | Non-flammable | Non-flammable | Non-flammable |

Table 12

| Item | | Unit | Comparative Example 44 | Comparative Example 45 | Comparative Example 49 | Comparative Example 53 | Comparative Example 57 | Comparative Example 61 | Comparative Example 65 | Comparative Example 69 |
|---|---|---|---|---|---|---|---|---|---|---|
| | | | A | $B_{r=0.25}$ | $B_{r=0.375}$ | $B_{r=0.5}$ | $B_{r=0.75}$ | $B_{r=1.0}$ | $B_{r=0.31}$ | $B_{r=0.37}$ |
| WCF Concentration | R32 | mass% | 11.2 | 15.9 | 16.9 | 17.9 | 18.0 | 19.9 | 23.1 | 25.8 |
| | $CC_2$ | mass% | 42.3 | 0.C | 0.0 | 0.0 | 0.0 | 0.0 | 0.C | 0.0 |
| | R125 | mass% | 0.0 | 9.4 | 11.3 | 13.2 | 13.3 | 16.8 | 22.8 | 27.7 |
| | R134a | mass% | 0.0 | 28.2 | 25.3 | 22.4 | 22.2 | 16.8 | 7 . 6 | 0.0 |
| | R1234yf | mass% | 46.5 | 46.5 | 46.5 | 46.5 | 46.5 | 46.5 | 46.5 | 46.5 |
| Non-Flammability Determination | | | Non-flammable | Non-flammable | Non-flammable | Non-flammable | Non-flammable | Non-flammable | Non-flammable | Non-flammable |

33

Table 13

| Item | | Unit | Comparative Example 73 | Comparative Example 74 | Comparative Example 78 | Comparative Example 82 | Comparative Example 86 | Comparative Example 90 | Comparative Example 94 | Comparative Example 98 |
|---|---|---|---|---|---|---|---|---|---|---|
| | | | A | $B_{r=0.25}$ | $B_{r=0.375}$ | $B_{r=0.5}$ | $B_{r=0.75}$ | $B_{r=1.C}$ | $B_{r=0.31}$ | $B_{r=0.37}$ |
| WCF Concentration | R32 | mass% | 8.8 | 13.4 | 14.4 | 15.3 | 15.4 | 17.3 | 20.4 | 23.C |
| | $CO_2$ | mass% | 41.2 | 0.C | 0.C | 0.0 | 0.0 | 0.0 | 0.0 | 0.C |
| | R125 | mass% | 0.0 | 9.2 | 11.0 | 12.8 | 13.0 | 16.4 | 22.2 | 27.C |
| | R134a | mass% | 0.0 | 27.4 | 24.6 | 21.9 | 21.6 | 16.3 | 7.4 | 0.0 |
| | R1234yf | mass% | 50.0 | 50.C | 50.C | 50.0 | 50.0 | 50.0 | 50.0 | 50.C |
| Non-Flammability Determination | | | Non-flammable | Non-flammable | Non-flammable | Non-flammable | Non-flammable | Non-flammable | Non-flammable | Non-flammable |

Table 14

| Item | | Unit | Comp. Ex. 6 | Example 2 | Comp. Ex. 1C | Example 4 | Comp. Ex. 14 | Example 6 | Comp. Ex. 18 | Example 8 | Comp. Ex. 22 | Example 10 |
|---|---|---|---|---|---|---|---|---|---|---|---|---|
| | | | $F_{r=0.25}$ | $P_{r=0.25}$ | $F_{r=0.375}$ | $P_{r=0.375}$ | $F_{r=0.5}$ | $P_{r=0.5}$ | $F_{r=0.75}$ | $P_{r=0.75}$ | $F_{r=1.0}$ | $P_{r=1.0}$ |
| WCF Concentration | R32 | mass % | 0.0 | 12.8 | 0.C | 14.3 | 0.0 | 15.4 | 0.0 | 11.4 | 0.0 | 7.7 |
| | $CO_2$ | mass % | 39.5 | 12.2 | 40.5 | 15.2 | 41.2 | 17.4 | 42.6 | 25.1 | 43.1 | 31.5 |
| | R125 | mass % | 4.9 | 8.5 | 6.9 | 11.1 | 8.9 | 13.1 | 12.3 | 16.9 | 15.9 | 19.8 |
| | R134a | mass % | 14.6 | 25.5 | 11.6 | 18.4 | 8.9 | 13.1 | 4.1 | 5.6 | 0.0 | 0.0 |
| | R1234yf | mass % | 41.0 | 41.0 | 41.C | 41.C | 41.0 | 41.0 | 41.0 | 41.C | 41.0 | 41.0 |
| Non-Flammability Determination | | | Non-flammable | Non-flammable | Non-flammable | Non-flammable | Non-flammable | Non-flammable | Non-flammable | Non-flammable | Non-flammable | Non-flammable |
| Leakage Conditions That Lead to WCFF | | | Storage/Transport -40°C, 52% Leak, Liquid Phase | Storage/Transport -40°C, 38% Leak, Gas Phase | Storage/Transport -40°C, 54% Leak, Liquid Phase | Storage/Transport -40°C, 48% Leak, Gas Phase | Storage/Transport -40°C, 56% Leak, Liquid Phase | Storage/Transport -40°C, 56% Leak, Gas Phase | Storage/Transport -40°C, 58% Leak, Liquid Phase | Storage/Transport -40°C, 62% Leak, Liquid Phase | Storage/Transport -40°C, 62% Leak, Liquid Phase | Storage/Transport -40°C, 64% Leak, Liquid Phase |
| WCFF Concentration | R32 | mass % | 0.0 | 21.8 | 0.C | 22.1 | 0.0 | 21.5 | 0.0 | 16.2 | 0.0 | 12.1 |
| | $CO_2$ | mass % | 2.5 | 5.1 | 2.3 | 2.6 | 1.9 | 1.3 | 2.0 | 1.5 | 1.2 | 2.6 |
| | R125 | mass % | 6.1 | 12.4 | 8.7 | 16.C | 11.3 | 18.7 | 16.2 | 26.3 | 20.5 | 33.7 |
| | R134a | mass % | 24.4 | 20.6 | 19.9 | 16.6 | 15.7 | 13.2 | 7.5 | 6.5 | 0.0 | 0.0 |
| | R1234yf | mass % | 67.0 | 40.1 | 69.1 | 42.7 | 71.1 | 45.3 | 74.3 | 49.5 | 78.3 | 51.6 |
| Non-Flammability Determination | | | Non-flammable | Non-flammable | Non-flammable | Non-flammable | Non-flammable | Non-flammable | Non-flammable | Non-flammable | Non-flammable | Non-flammable |

Note: Comp. Ex. denotes "Comparative Example."

Table 15

| Item | | Unit | Comp. Ex. 27 | Example 12 | Comp. Ex. 31 | Example 14 | Comp. Ex. 35 | Example 16 | Comp. Ex. 39 | Example 18 | Comp. Ex. 43 | Example 20 |
|---|---|---|---|---|---|---|---|---|---|---|---|---|
| | | | Fr=0.25 | Fr=0.25 | Fr=0.375 | Fr=0.375 | Fr=0.5 | Fr=0.5 | Fr=0.75 | Fr=0.75 | Fr=1.0 | Fr=1.0 |
| WCF Concentration | R32 | mass% | 0.0 | 12.0 | 0.0 | 13.6 | 0.0 | 14.7 | 0.0 | 9.9 | 0.0 | 6.6 |
| | $CO_2$ | mass% | 35.4 | 10.1 | 36.6 | 12.9 | 37.4 | 15.1 | 38.5 | 23.5 | 40.0 | 29.6 |
| | R125 | mass% | 5.2 | 8.5 | 7.4 | 11.2 | 9.4 | 13.2 | 13.3 | 17.1 | 16.2 | 20.0 |
| | R134a | mass% | 15.6 | 25.6 | 12.2 | 18.5 | 9.4 | 13.2 | 4.4 | 5.7 | 0.0 | 0.0 |
| | R1234yf | mass% | 43.8 | 43.8 | 43.8 | 43.8 | 43.8 | 43.8 | 43.8 | 43.8 | 43.8 | 43.8 |
| Non-Flammability Determination | | | Non-flammable | Non-flammable | Non-flammable | Non-flammable | Non-flammable | Non-flammable | Non-flammable | Non-flammable | Non-flammable | Non-flammable |
| Leakage Conditions That Lead to WCFF | | | Storage/Transport -40°C, 48% Leak, Liquid Phase | Storage/Transport -40°C, 36% Leak, Gas Phase | Storage/Transport -40°C, 50% Leak, Liquid Phase | Storage/Transport -40°C, 44% Leak, Gas Phase | Storage/Transport -40°C, 52% Leak, Liquid Phase | Storage/Transport -40°C, 52% Leak, Gas Phase | Storage/Transport -40°C, 56% Leak, Liquid Phase | Storage/Transport -40°C, 56% Leak, Liquid Phase | Storage/Transport -40°C, 58% Leak, Liquid Phase | Storage/Transport -40°C, 60% Leak, Liquid Phase |
| WCFF Concentration | R32 | mass% | 0.0 | 20.5 | 0.0 | 21.5 | 0.0 | 21.1 | 0.0 | 5.4 | 0.0 | 3.5 |
| | $CO_2$ | mass% | 2.4 | 4.3 | 2.3 | 3.0 | 2.1 | 1.6 | 1.4 | 0.4 | 1.5 | 0.4 |
| | R125 | mass% | 6.2 | 12.3 | 8.9 | 16.0 | 11.4 | 18.7 | 16.2 | 17.4 | 20.3 | 21.8 |
| | R134a | mass% | 24.3 | 20.7 | 19.6 | 15.9 | 15.4 | 12.6 | 7.6 | 9.3 | 0.0 | 0.0 |
| | R1234yf | mass% | 67.1 | 42.2 | 69.2 | 43.6 | 71.1 | 46.0 | 74.8 | 67.5 | 78.2 | 74.3 |
| Non-Flammability Determination | | | Non-flammable | Non-flammable | Non-flammable | Non-flammable | Non-flammable | Non-flammable | Non-flammable | Non-flammable | Non-flammable | Non-flammable |

Table 16

| Item | | Unit | Comparative Example 48 | Example 22 | Comparative Example 52 | Example 24 | Comparative Example 56 | Example 26 | Comparative Example 60 |
|---|---|---|---|---|---|---|---|---|---|
| | | | $F_r=0.25$ | $P_r=0.25$ | $F_r=0.375$ | $P_r=0.375$ | $F_r=0.5$ | $P_r=0.5$ | $F_r=0.75$ |
| WCM Concentration | R32 | mass% | 0.0 | 11.3 | 0.0 | 12.8 | 0.0 | 13.1 | 0.0 |
| | $CO_2$ | mass% | 31.5 | 7.8 | 32.3 | 10.7 | 33.5 | 13.6 | 35.3 |
| | R125 | mass% | 5.5 | 8.6 | 8.2 | 11.3 | 10.0 | 13.4 | 13.7 |
| | R134a | mass% | 16.5 | 25.8 | 13.0 | 18.7 | 10.0 | 13.4 | 4.5 |
| | R1234yf | mass% | 46.5 | 46.5 | 46.5 | 46.5 | 46.5 | 46.5 | 46.5 |
| Non-Flammability Determination | | | Non-flammable | Non-flammable | Non-flammable | Non-flammable | Non-flammable | Non-flammable | Non-flammable |
| Leakage Conditions That Lead to WCFF | | | Storage/ Transport -40°C, 44% Leak, Liquid Phase | Storage/ Transport -40°C, 32% Leak, Gas Phase | Storage/ Transport -40°C, 46% Leak, Liquid Phase | Storage/ Transport -40°C, 40% Leak, Gas Phase | Storage/ Transport -40°C, 48% Leak, Liquid Phase | Storage/ Transport -40°C, 48% Leak, Liquid Phase | Storage/ Transport -40°C, 52% Leak, Liquid Phase |
| WCFF Concentration | R32 | mass% | 0.0 | 19.7 | 0.0 | 20.8 | 0.0 | 7.1 | 0.0 |
| | $CO_2$ | mass% | 2.5 | 4.5 | 2.2 | 3.4 | 2.1 | 0.3 | 1.7 |
| | R125 | mass% | 6.2 | 12.4 | 9.4 | 15.9 | 11.6 | 12.2 | 16.2 |
| | R134a | mass% | 24.2 | 20.2 | 19.5 | 15.5 | 15.4 | 19.0 | 7.3 |
| | R1234yf | mass% | 67.1 | 43.2 | 68.9 | 44.4 | 70.9 | 61.4 | 74.8 |
| Non-Flammability Determination | | | Non-flammable | Non-flammable | Non-flammable | Non-flammable | Non-flammable | Non-flammable | Non-flammable |

| Item | | Unit | Example 28 | Comparative Example 64 | Example 30 | Comparative Example 68 | Example 32 | Comparative Example 72 | Example 34 |
|---|---|---|---|---|---|---|---|---|---|
| | | | $P_{r=0.75}$ | $F_{r=1.0}$ | $P_{r=1.0}$ | $F_{r=0.31}$ | $P_{r=0.31}$ | $F_{r=0.37}$ | $P_{r=0.37}$ |
| WCM Concentration | R32 | mass% | 8.7 | 0.0 | 5.9 | 0.0 | 12.2 | 0.0 | 12.8 |
| | $CO_2$ | mass% | 21.7 | 35.9 | 27.4 | 31.7 | 9.2 | 32.5 | 10.7 |
| | R125 | mass% | 17.3 | 17.6 | 20.2 | 6.8 | 10.0 | 7.8 | 11.1 |
| | R134a | mass% | 5.8 | 0.0 | 0.0 | 15.0 | 22.1 | 13.2 | 18.9 |
| | R1234yf | mass% | 46.5 | 46.5 | 46.5 | 46.5 | 46.5 | 46.5 | 46.5 |
| Non-Flammability Determination | | | Non-flammable | Non-flammable | Non-flammable | Non-flammable | Non-flammable | Non-flammable | Non-flammable |
| Leakage Conditions That Lead to WCFF | | | Storage/ Transport -40°C, 52% Leak, Liquid Phase | Storage/ Transport -40°C, 54% Leak, Liquid Phase | Storage/ Transport -40°C, 56% Leak, Liquid Phase | Storage/ Transport -40°C, 44% Leak, Liquid Phase | Storage/ Transport -40°C, 36% Leak, Gas Phase | Storage/ Transport -40°C, 46% Leak, Liquid Phase | Storage/ Transport -40°C, 40% Leak, Gas Phase |
| WCFF Concentration | R32 | mass% | 4.9 | 0.0 | 3.2 | 0.0 | 20.5 | 0.0 | 20.8 |
| | $CO_2$ | mass% | 0.5 | 1.6 | 0.6 | 1.9 | 3.9 | 2.3 | 3.3 |
| | R125 | mass% | 17.4 | 21.1 | 21.7 | 7.6 | 14.2 | 9.0 | 15.7 |
| | R134a | mass% | 8.9 | 0.0 | 0.0 | 22.3 | 17.7 | 19.8 | 15.7 |
| | R1234yf | mass% | 68.3 | 77.3 | 74.5 | 68.2 | 43.7 | 68.9 | 44.5 |
| Non-Flammability Determination | | | Non-flammable | Non-flammable | Non-flammable | Non-flammable | Non-flammable | Non-flammable | Non-flammable |

Table 17

| Item | | Unit | Comparative Example 77 | Example 36 | Comparative Example 81 | Example 38 | Comparative Example 85 | Example 40 | Comparative Example 89 |
|---|---|---|---|---|---|---|---|---|---|
| | | | $F_{r=0.25}$ | $P_{r=0.25}$ | $F_{r=0.375}$ | $P_{r=0.375}$ | $F_{r=0.5}$ | $P_{r=0.5}$ | $F_{r=0.75}$ |
| WCF Concentration | R32 | mass% | 0.0 | 10.5 | 0.C | 11.9 | 0.0 | 10.8 | 0.0 |
| | CC$_2$ | mass% | 26.1 | 4.7 | 27.6 | 8.C | 28.8 | 11.8 | 30.4 |
| | R125 | mass% | 6.0 | 8.7 | 8.5 | 11.3 | 10.6 | 13.7 | 14.7 |
| | R134a | mass% | 17.9 | 26.1 | 13.9 | 18.8 | 10.6 | 13.7 | 4.9 |
| | R1234yf | mass% | 50.0 | 50.0 | 50.C | 50.C | 50.0 | 50.0 | 50.0 |
| Non-Flammability Determination | | | Non-flammable | Non-flammable | Non-flammable | Non-flammable | Non-flammable | Non-flammable | Non-flammable |
| Leakage Conditions That Lead to WCFF | | | Storage/ Transport -40°C, 40% Leak, Liquid Phase | Storage/ Transport -40°C, 32% Leak, Gas Phase | Storage/ Transport -4C°C, 42% Leak, Liquid Phase | Storage/ Transport -4C°C, 36% Leak, Gas Phase | Storage/ Transport -40°C, 44% Leak, Liquid Phase | Storage/ Transport -40°C, 42% Leak, Liquid Phase | Storage/ Transport -40°C, 48% Leak, Liquid Phase |
| WCFF Concentration | R32 | mass% | 0 | 17.3 | C | 19.7 | 0 | 6.1 | 0 |
| | CC$_2$ | mass% | 2 | 2.4 | 1.9 | 3.2 | 1.8 | 0.4 | 1.5 |
| | R125 | mass% | 6.4 | 12.3 | 9.2 | 15.9 | 11.6 | 12.4 | 16.2 |
| | R134a | mass% | 24.4 | 21.3 | 19.5 | 15.1 | 15.3 | 18.2 | 7.4 |
| | R1234yf | mass% | 67.2 | 46.7 | 69.4 | 46.1 | 71.3 | 62.9 | 74.9 |
| Non-Flammability Determination | | | Non-flammable | Non-flammable | Non-flammable | Non-flammable | Non-flammable | Non-flammable | Non-flammable |

| Item | | Unit | Example 42 | Comparative Example 93 | Example 44 | Comparative Example 97 | Example 46 | Comparative Example 101 | Example 48 |
|---|---|---|---|---|---|---|---|---|---|
| | | | $P_{r=0.75}$ | $F_{r=1.0}$ | $P_{r=1.0}$ | $F_{r=0.31}$ | $P_{r=0.31}$ | $F_{r=0.37}$ | $P_{r=0.37}$ |
| WCF Concentration | R32 | mass% | 7.3 | 0.0 | 3.9 | 0.0 | 11.2 | 0.0 | 11.9 |
| | $CO_2$ | mass% | 19.3 | 31.8 | 25.5 | 27.0 | 6.5 | 27.6 | 7.7 |
| | R125 | mass% | 17.6 | 18.2 | 20.6 | 7.3 | 10.0 | 8.5 | 11.2 |
| | R134a | mass% | 5.8 | 0.0 | 0.0 | 15.7 | 22.3 | 13.9 | 19.2 |
| | R1234yf | mass% | 50.0 | 50.0 | 50.0 | 50.0 | 50.0 | 50.0 | 50.0 |
| Non-Flammability Determination | | | Non-flammable | Non-flammable | Non-flammable | Non-flammable | Non-flammable | Non-flammable | Non-flammable |
| Leakage Conditions That Lead to WCFF | | | Storage/ Transport -40°C, 48% Leak, Liquid Phase | Storage/ Transport -40°C, 50% Leak, Liquid Phase | Storage/ Transport -40°C, 52% Leak, Liquid Phase | Storage/ Transport -40°C, 40% Leak, Liquid Phase | Storage/ Transport -40°C, 38% Leak, Gas Phase | Storage/ Transport -40°C, 42% Leak, Liquid Phase | Storage/ Transport -40°C, 34% Leak, Gas Phase |
| WCFF Concentration | R32 | mass% | 4 | 0 | 2.1 | 0 | 17.2 | 0 | 20.2 |
| | $CO_2$ | mass% | 0.5 | 1.6 | 0.7 | 2.3 | 1.7 | 1.9 | 3.9 |
| | R125 | mass% | 17.2 | 20.7 | 21.5 | 7.9 | 14 | 9.2 | 15.7 |
| | R134a | mass% | 8.4 | 0 | 0 | 21.7 | 19 | 19.5 | 15 |
| | R1234yf | mass% | 69.9 | 77.7 | 75.7 | 68.2 | 48.1 | 69.4 | 45.2 |
| Non-Flammability Determination | | | Non-flammable | Non-flammable | Non-flammable | Non-flammable | Non-flammable | Non-flammable | Non-flammable |

40

Examples 1 to 222 and Comparative Examples 1 to 206

The GWP of compositions each containing R410A and a mixture of R32, R125, R1234yf, R134a, and $CO_2$ was evaluated based on the values stated in the Fourth Assessment Report of the Intergovernmental Panel on Climate Change (IPCC). The refrigerating capacity of compositions each containing R410A and a mixture of R410A, R32, R125, R1234yf, R134a, and $CO_2$ was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

Evaporating temperature: -10°C
Condensation temperature: 45°C
Superheating temperature: 20K
Subcooling temperature: 5K
Compressor efficiency: 70%

Tables 18 to 30 show GWP, COP, refrigerating capacity, and condensation glide (condensation temperature glide), which were calculated based on these results. The COP and refrigerating capacity are percentages relative to R410A.

The coefficient of performance (COP) was determined by the following formula.

```
COP = (refrigerating capacity or heating capacity)/power
consumption
[0129]
```

Table 18

## 41%R1234yf,r=0.25

| Item | Unit | Comparative Example 1 | Comparative Example 2 | Comparative Example 3 | Comparative Example 4 | Comparative Example 5 | Comparative Example 6 | Example 1 | Example 2 |
|---|---|---|---|---|---|---|---|---|---|
| | | | A | $B_{r=0.25}$ | $C_{r=0.25}$ | $D_{r=0.25}$ | $F_{r=0.25}$ | $O_{r=0.25}$ | $P_{r=0.25}$ |
| R32 | mass% | R410A | 15.0 | 19.9 | 31.6 | 0.0 | 0.0 | 19.0 | 12.8 |
| $CO_2$ | mass% | | 44.0 | 0.0 | 0.0 | 20.6 | 39.5 | 8.2 | 12.2 |
| R125 | mass% | | 0.0 | 9.8 | 6.9 | 9.6 | 4.9 | 7.9 | 8.5 |
| R134a | mass% | | 0.0 | 29.3 | 20.5 | 28.8 | 14.6 | 23.9 | 25.5 |
| R1234yf | mass% | | 41.0 | 41.0 | 41.0 | 41.0 | 41.0 | 41.0 | 41.0 |
| GWP | – | 2088 | 103 | 898 | 750 | 750 | 382 | 750 | 750 |
| COP Ratio | % (relative to R410A) | 100 | 87.6 | 104.7 | 103.8 | 98.6 | 92.0 | 101.0 | 100.0 |
| Refrigerating Capacity Ratio | % (relative to R410A) | 100 | 157.7 | 63.8 | 72.8 | 94.9 | 139.9 | 80.6 | 84.9 |
| Condensation Glide | °C | 0.1 | 17.6 | 4.9 | 4.5 | 25.5 | 25.0 | 13.2 | 17.3 |

## 41%R1234yf,r=0.375

| Item | Unit | Comparative Example 7 | Comparative Example 8 | Comparative Example 9 | Comparative Example 10 | Example 3 | Example 4 |
|---|---|---|---|---|---|---|---|
| | | $B_{r=0.375}$ | $C_{r=0.375}$ | $D_{r=0.375}$ | $F_{r=0.375}$ | $C_{r=0.375}$ | $P_{r=0.375}$ |
| R32 | mass% | 22.1 | 36.2 | 0.0 | 0.0 | 20.3 | 14.3 |
| $CO_2$ | mass% | 0.0 | 0.0 | 25.1 | 40.5 | 11.0 | 15.2 |
| R125 | mass% | 13.8 | 8.6 | 12.7 | 6.9 | 10.4 | 11.1 |
| R134a | mass% | 23.1 | 14.2 | 21.2 | 11.6 | 17.3 | 18.4 |
| R1234yf | mass% | 41.0 | 41.0 | 41.0 | 41.0 | 41.0 | 41.0 |
| GWP | – | 964 | 750 | 750 | 409 | 750 | 750 |
| COP Ratio | % (relative to R410A) | 104.0 | 103.2 | 96.9 | 91.1 | 99.5 | 98.5 |
| Refrigerating Capacity Ratio | % (relative to R410A) | 67.0 | 77.1 | 107.4 | 142.7 | 89.2 | 94.3 |
| Condensation Glide | °C | 4.8 | 4.0 | 25.6 | 24.3 | 14.2 | 17.8 |

42

41%R1234yf, r=0.5

| Item | Unit | Comparative Example 11 Br=0.5 | Comparative Example 12 Cr=0.5 | Comparative Example 13 Dr=0.5 | Comparative Example 14 Fr=0.5 | Example 5 Cr=0.5 | Example 6 Pr=0.5 |
|---|---|---|---|---|---|---|---|
| R32 | mass% | 24.1 | 39.5 | 0.0 | 0.0 | 21.4 | 15.4 |
| $CO_2$ | mass% | 0.0 | 0.0 | 28.7 | 41.2 | 13.2 | 17.4 |
| R125 | mass% | 17.5 | 9.8 | 15.2 | 8.9 | 12.2 | 13.1 |
| R134a | mass% | 17.4 | 9.7 | 15.1 | 8.9 | 12.2 | 13.1 |
| R1234yf | mass% | 41.0 | 41.0 | 41.0 | 41.0 | 41.0 | 41.0 |
| GWP | - | 1026 | 750 | 750 | 441 | 750 | 750 |
| COP Ratio | % (relative to R410A) | 103.4 | 102.7 | 95.2 | 90.3 | 98.3 | 97.3 |
| Refrigerating Capacity Ratio | % (relative to R410A) | 70.0 | 80.2 | 117.3 | 144.8 | 95.9 | 101.3 |
| Condensation Glide | °C | 4.6 | 3.6 | 25.0 | 23.6 | 14.6 | 17.8 |

41%R1234yf, r=0.75

| Item | Unit | Comparative Example 15 Br=0.75 | Comparative Example 16 Cr=0.75 | Comparative Example 17 Dr=0.75 | Comparative Example 18 Fr=0.75 | Example 7 Cr=0.75 | Example 8 Pr=0.75 |
|---|---|---|---|---|---|---|---|
| R32 | mass% | 27.4 | 43.9 | 0.0 | 0.0 | 22.8 | 11.4 |
| $CO_2$ | mass% | 0.0 | 0.0 | 33.9 | 42.6 | 16.3 | 25.1 |
| R125 | mass% | 23.7 | 11.3 | 18.8 | 12.3 | 14.9 | 16.9 |
| R134a | mass% | 7.9 | 3.8 | 6.3 | 4.1 | 5.0 | 5.6 |
| R1234yf | mass% | 41.0 | 41.0 | 41.0 | 41.0 | 41.0 | 41.0 |
| GWP | - | 1129 | 750 | 750 | 491 | 750 | 750 |
| COP Ratio | % (relative to R410A) | 102.4 | 102.2 | 92.2 | 88.8 | 96.6 | 94.3 |
| Refrigerating Capacity Ratio | % (relative to R410A) | 75.1 | 84.4 | 131.0 | 148.8 | 105.5 | 118.1 |
| Condensation Glide | °C | 4.0 | 2.9 | 23.4 | 22.2 | 14.6 | 19.4 |

41%R1234yf,r=1.0

| Item | Unit | Comparative Example 19 | Comparative Example 20 | Comparative Example 21 | Comparative Example 22 | Example 9 | Example 10 |
| --- | --- | --- | --- | --- | --- | --- | --- |
| | | $B_{r=1.0}$ | $C_{r=1.0}$ | $D_{r=1.0}$ | $F_{r=1.0}$ | $C_{r=1.0}$ | $P_{r=1.0}$ |
| R32 | mass% | 30.2 | 46.7 | 0.0 | 0.0 | 23.8 | 7.7 |
| $CO_2$ | mass% | 0.0 | 0.0 | 37.7 | 43.1 | 18.5 | 31.5 |
| R125 | mass% | 28.8 | 12.3 | 21.3 | 15.9 | 16.7 | 19.8 |
| R134a | mass% | 0.0 | 0.0 | 0.0 | 0.0 | 0.0 | 0.0 |
| R1234yf | mass% | 41.0 | 41.0 | 41.0 | 41.0 | 41.0 | 41.0 |
| GWP | – | 1213 | 750 | 750 | 559 | 750 | 750 |
| COP Ratio | % (relative to R410A) | 101.5 | 101.9 | 89.7 | 87.8 | 95.4 | 91.6 |
| Refrigerating Capacity Ratio | % (relative to R410A) | 79.5 | 87.1 | 140.5 | 150.9 | 112.3 | 131.4 |
| Condensation Glide | °C | 3.4 | 2.5 | 21.8 | 21.2 | 14.2 | 19.8 |

Table 19

43.8%R1234yf,r=0.25

| Item | Unit | Comparative Example 23 | Comparative Example 24 | Comparative Example 25 | Comparative Example 26 | Comparative Example 27 | Example 11 | Example 12 |
|---|---|---|---|---|---|---|---|---|
| | | A | Br=0.25 | Cr=0.25 | Dr=0.25 | Er=0.25 | Or=0.25 | Pr=0.25 |
| R32 | mass% | 13.1 | 17.9 | 27.3 | 0.0 | 0.0 | 17.1 | 12.0 |
| CO$_2$ | mass% | 43.1 | 0.0 | 0.0 | 17.8 | 35.4 | 6.7 | 10.1 |
| R125 | mass% | 0.0 | 9.6 | 7.2 | 9.6 | 5.2 | 8.1 | 8.5 |
| R134a | mass% | 0.0 | 28.7 | 21.7 | 28.8 | 15.6 | 24.3 | 25.6 |
| R1234yf | mass% | 43.8 | 43.8 | 43.8 | 43.8 | 43.8 | 43.8 | 43.8 |
| GWP | - | 91 | 869 | 750 | 750 | 407 | 750 | 750 |
| COP Ratio | % (relative to R410A) | 88.4 | 104.8 | 104.1 | 99.4 | 94.0 | 101.8 | 100.8 |
| Refrigerating Capacity Ratio | % (relative to R410A) | 154.6 | 62.2 | 69.6 | 87.7 | 130.7 | 75.7 | 79.3 |
| Condensation Glide | °C | 18.9 | 5.0 | 4.8 | 24.7 | 26.3 | 12.3 | 16.2 |

43.8%R1234yf,r=0.375

| Item | Unit | Comparative Example 28 $B_{r=0.375}$ | Comparative Example 29 $C_{r=0.375}$ | Comparative Example 30 $D_{r=0.375}$ | Comparative Example 31 $F_{r=0.375}$ | Example 13 $C_{r=0.375}$ | Example 14 $P_{r=0.375}$ |
|---|---|---|---|---|---|---|---|
| R32 | mass% | 20.0 | 32.1 | 0.0 | 0.0 | 18.5 | 13.6 |
| $CO_2$ | mass% | 0.0 | 0.0 | 22.3 | 36.6 | 9.4 | 12.9 |
| R125 | mass% | 13.6 | 9.0 | 12.7 | 7.4 | 10.6 | 11.2 |
| R134a | mass% | 22.6 | 15.1 | 21.2 | 12.2 | 17.7 | 18.5 |
| R1234yf | mass% | 43.8 | 43.8 | 43.8 | 43.8 | 43.8 | 43.8 |
| GWP | – | 936 | 750 | 750 | 436 | 750 | 750 |
| COP Ratio | % (relative to R410A) | 104.2 | 103.4 | 97.8 | 93.1 | 100.3 | 99.4 |
| Refrigerating Capacity Ratio | % (relative to R410A) | 65.3 | 74.2 | 100.3 | 134.1 | 84.1 | 88.3 |
| Condensation Glide | °C | 4.9 | 4.4 | 25.5 | 25.6 | 13.8 | 17.1 |

43.8%R1234yf,r=0.5

| Item | Unit | Comparative Example 32 $B_{r=0.5}$ | Comparative Example 33 $C_{r=0.5}$ | Comparative Example 34 $D_{r=0.5}$ | Comparative Example 35 $F_{r=0.5}$ | Example 15 $C_{r=0.5}$ | Example 16 $P_{r=0.5}$ |
|---|---|---|---|---|---|---|---|
| R32 | mass% | 21.9 | 35.6 | 0.0 | 0.0 | 19.5 | 14.7 |
| $CO_2$ | mass% | 0.0 | 0.0 | 25.9 | 37.4 | 11.7 | 15.1 |
| R125 | mass% | 17.2 | 10.3 | 15.2 | 9.4 | 12.5 | 13.2 |
| R134a | mass% | 17.1 | 10.3 | 15.1 | 9.4 | 12.5 | 13.2 |
| R1234yf | mass% | 43.8 | 43.8 | 43.8 | 43.8 | 43.8 | 43.8 |
| GWP | – | 996 | 750 | 750 | 466 | 750 | 750 |
| COP Ratio | % (relative to R410A) | 103.6 | 102.9 | 96.3 | 92.3 | 99.0 | 98.2 |
| Refrigerating Capacity Ratio | % (relative to R410A) | 68.2 | 77.6 | 110.3 | 136.6 | 91.0 | 95.3 |
| Condensation Glide | °C | 4.8 | 3.9 | 25.4 | 24.9 | 14.5 | 17.4 |

## 43.8%R1234yf, r=0.75

| Item | Unit | Comparative Example 36 $B_{r=0.75}$ | Comparative Example 37 $C_{r=0.75}$ | Comparative Example 38 $D_{r=0.75}$ | Comparative Example 39 $F_{r=0.75}$ | Example 17 $C_{r=0.75}$ | Example 18 $P_{r=0.75}$ |
|---|---|---|---|---|---|---|---|
| R32 | mass% | 25.2 | 40.3 | 0.0 | 0.0 | 21.0 | 9.9 |
| $CO_2$ | mass% | 0.0 | 0.0 | 31.2 | 38.5 | 14.9 | 23.5 |
| R125 | mass% | 23.3 | 11.9 | 18.8 | 13.3 | 15.2 | 17.1 |
| R134a | mass% | 7.7 | 4.0 | 6.2 | 4.4 | 5.1 | 5.7 |
| R1234yf | mass% | 43.8 | 43.8 | 43.8 | 43.8 | 43.8 | 43.8 |
| GWP | – | 1097 | 750 | 750 | 531 | 750 | 750 |
| COP Ratio | % (relative to R410A) | 102.5 | 102.3 | 93.6 | 91.0 | 97.3 | 95.2 |
| Refrigerating Capacity Ratio | % (relative to R410A) | 73.2 | 82.0 | 124.6 | 140.2 | 100.9 | 113.1 |
| Condensation Glide | °C | 4.3 | 3.3 | 24.3 | 23.7 | 14.8 | 20.2 |

## 43.8%R1234yf, r=1.0

| Item | Unit | Comparative Example 40 $B_{r=1.0}$ | Comparative Example 41 $C_{r=1.0}$ | Comparative Example 42 $D_{r=1.0}$ | Comparative Example 43 $F_{r=1.0}$ | Example 19 $C_{r=1.0}$ | Example 20 $P_{r=1.0}$ |
|---|---|---|---|---|---|---|---|
| R32 | mass% | 27.9 | 43.2 | 0.0 | 0.0 | 22.0 | 6.6 |
| $CO_2$ | mass% | 0.0 | 0.0 | 34.9 | 40.0 | 17.1 | 29.6 |
| R125 | mass% | 28.3 | 13.0 | 21.3 | 16.2 | 17.1 | 20.0 |
| R134a | mass% | 0.0 | 0.0 | 0.0 | 0.0 | 0.0 | 0.0 |
| R1234yf | mass% | 43.8 | 43.8 | 43.8 | 43.8 | 43.8 | 43.8 |
| GWP | – | 1181 | 748 | 748 | 569 | 750 | 750 |
| COP Ratio | % (relative to R410A) | 101.6 | 101.9 | 91.4 | 89.7 | 96.1 | 92.7 |
| Refrigerating Capacity Ratio | % (relative to R410A) | 77.4 | 84.8 | 134.2 | 144.4 | 107.7 | 126.2 |
| Condensation Glide | °C | 3.7 | 2.8 | 23.0 | 22.6 | 14.6 | 20.8 |

Table 20
46.5%R1234yf, r=0.25

| Item | Unit | Comparative Example 44 | Comparative Example 45 | Comparative Example 46 | Comparative Example 47 | Comparative Example 48 | Example 21 | Example 22 |
|---|---|---|---|---|---|---|---|---|
| | | A | Br=0.25 | Cr=0.25 | Dr=0.25 | Er=0.25 | Or=0.25 | Pr=0.25 |
| R32 | mass% | 11.2 | 15.9 | 23.1 | 0.0 | 0.0 | 15.3 | 11.3 |
| $CO_2$ | mass% | 42.3 | 0.0 | 0.0 | 15.1 | 31.5 | 5.1 | 7.8 |
| R125 | mass% | 0.0 | 9.4 | 7.6 | 9.6 | 5.5 | 8.3 | 8.6 |
| R134a | mass% | 0.0 | 28.2 | 22.8 | 28.8 | 16.5 | 24.8 | 25.8 |
| R1234yf | mass% | 46.5 | 46.5 | 46.5 | 46.5 | 46.5 | 46.5 | 46.5 |
| GWP | - | 78 | 841 | 750 | 750 | 431 | 750 | 750 |
| COP Ratio | % (relative to R410A) | 89.1 | 104.9 | 104.3 | 100.0 | 95.7 | 102.5 | 101.7 |
| Refrigerating Capacity Ratio | % (relative to R410A) | 151.8 | 60.5 | 66.3 | 80.7 | 121.5 | 70.7 | 73.3 |
| Condensation Glide | °C | 20.2 | 5.0 | 5.0 | 23.4 | 27.2 | 11.1 | 14.4 |

## 46.5%R1234yf,r=0.375

| Item | Unit | Comparative Example 49 | Comparative Example 50 | Comparative Example 51 | Comparative Example 52 | Example 23 | Example 24 |
| --- | --- | --- | --- | --- | --- | --- | --- |
| | | $B_{r=0.375}$ | $C_{r=0.375}$ | $D_{r=0.375}$ | $F_{r=0.375}$ | $C_{r=0.375}$ | $P_{r=0.375}$ |
| R32 | mass% | 18.0 | 28.3 | 0.0 | 0.0 | 16.7 | 12.8 |
| $CO_2$ | mass% | 0.0 | 0.0 | 19.6 | 32.3 | 8.0 | 10.7 |
| R125 | mass% | 13.3 | 9.5 | 12.7 | 8.2 | 10.8 | 11.3 |
| R134a | mass% | 22.2 | 15.7 | 21.2 | 13.0 | 18.0 | 18.7 |
| R1234yf | mass% | 46.5 | 46.5 | 46.5 | 46.5 | 46.5 | 46.5 |
| GWP | – | 906 | 750 | 750 | 475 | 750 | 750 |
| COP Ratio | % (relative to R410A) | 104.3 | 103.6 | 98.6 | 95.0 | 100.9 | 100.2 |
| Refrigerating Capacity Ratio | % (relative to R410A) | 63.6 | 71.4 | 93.3 | 124.3 | 79.4 | 82.4 |
| Condensation Glide | °C | 5.0 | 4.7 | 25.0 | 26.5 | 13.2 | 16.1 |

## 46.5%R1234yf,r=0.5

| Item | Unit | Comparative Example 53 | Comparative Example 54 | Comparative Example 55 | Comparative Example 56 | Example 25 | Example 26 |
| --- | --- | --- | --- | --- | --- | --- | --- |
| | | $B_{r=0.5}$ | $C_{r=0.5}$ | $D_{r=0.5}$ | $F_{r=0.5}$ | $C_{r=0.5}$ | $P_{r=0.5}$ |
| R32 | mass% | 19.9 | 31.9 | 0.0 | 0.0 | 17.3 | 13.1 |
| $CO_2$ | mass% | 0.0 | 0.0 | 23.2 | 33.1 | 10.6 | 13.6 |
| R125 | mass% | 16.8 | 10.8 | 15.2 | 10.2 | 12.8 | 13.4 |
| R134a | mass% | 16.8 | 10.8 | 15.1 | 10.2 | 12.8 | 13.4 |
| R1234yf | mass% | 46.5 | 46.5 | 46.5 | 46.5 | 46.5 | 46.5 |
| GWP | – | 964 | 750 | 750 | 505 | 750 | 750 |
| COP Ratio | % (relative to R410A) | 103.7 | 103.1 | 97.3 | 94.3 | 99.6 | 98.9 |
| Refrigerating Capacity Ratio | % (relative to R410A) | 66.4 | 74.9 | 103.4 | 126.8 | 86.7 | 90.4 |
| Condensation Glide | °C | 4.9 | 4.3 | 25.4 | 26.0 | 14.5 | 17.3 |

46.5%R1234yf,r=0.75

| Item | Unit | Comparative Example 57 | Comparative Example 58 | Comparative Example 59 | Comparative Example 60 | Example 27 | Example 28 |
|---|---|---|---|---|---|---|---|
| | | $B_{r=0.75}$ | $C_{r=0.75}$ | $D_{r=0.75}$ | $F_{r=0.75}$ | $O_{r=0.75}$ | $P_{r=0.75}$ |
| R32 | mass% | 23.1 | 36.8 | 0.0 | 0.0 | 19.3 | 8.7 |
| $CO_2$ | mass% | 0.0 | 0.0 | 28.5 | 35.3 | 13.5 | 21.7 |
| R125 | mass% | 22.8 | 12.5 | 18.8 | 13.7 | 15.5 | 17.3 |
| R134a | mass% | 7.6 | 4.2 | 6.2 | 4.5 | 5.2 | 5.8 |
| R1234yf | mass% | 46.5 | 46.5 | 46.5 | 46.5 | 46.5 | 46.5 |
| GWP | − | 1064 | 750 | 750 | 546 | 750 | 750 |
| COP Ratio | % (relative to R410A) | 102.7 | 102.4 | 94.9 | 92.7 | 97.9 | 96.1 |
| Refrigerating Capacity Ratio | % (relative to R410A) | 71.3 | 79.6 | 118.0 | 133.0 | 96.3 | 107.8 |
| Condensation Glide | °C | 4.6 | 3.7 | 24.9 | 24.8 | 14.9 | 20.7 |

46.5%R1234yf,r=1.0

| Item | Unit | Comparative Example 61 | Comparative Example 62 | Comparative Example 63 | Comparative Example 64 | Example 29 | Example 30 |
|---|---|---|---|---|---|---|---|
| | | $B_{r=1.0}$ | $C_{r=1.0}$ | $D_{r=1.0}$ | $F_{r=1.0}$ | $O_{r=1.0}$ | $P_{r=1.0}$ |
| R32 | mass% | 25.8 | 39.8 | 0.0 | 0.0 | 20.4 | 5.9 |
| $CO_2$ | mass% | 0.0 | 0.0 | 32.2 | 35.9 | 15.7 | 27.4 |
| R125 | mass% | 27.7 | 13.7 | 21.3 | 17.6 | 17.4 | 20.2 |
| R134a | mass% | 0.0 | 0.0 | 0.0 | 0.0 | 0.0 | 0.0 |
| R1234yf | mass% | 46.5 | 46.5 | 46.5 | 46.5 | 46.5 | 46.5 |
| GWP | − | 1146 | 750 | 750 | 618 | 750 | 750 |
| COP Ratio | % (relative to R410A) | 101.8 | 102.0 | 92.8 | 91.7 | 96.7 | 93.9 |
| Refrigerating Capacity Ratio | % (relative to R410A) | 75.4 | 82.6 | 127.8 | 135.5 | 103.2 | 120.4 |
| Condensation Glide | °C | 4.1 | 3.2 | 23.9 | 23.9 | 14.8 | 21.6 |

Table 21

46.5%R1234yf,r=0.31

| Item | Unit | Comparative Example 65 | Comparative Example 66 | Comparative Example 67 | Comparative Example 68 | Example 31 | Example 32 |
| --- | --- | --- | --- | --- | --- | --- | --- |
| | | $B_{r=0.31}$ | $C_{r=0.31}$ | $D_{r=0.31}$ | $F_{r=0.31}$ | $C_{r=0.31}$ | $P_{r=0.31}$ |
| R32 | mass% | 16.9 | 25.9 | 0.0 | 0.0 | 16.0 | 12.2 |
| $CO_2$ | mass% | 0.0 | 0.0 | 17.5 | 31.6 | 6.6 | 9.2 |
| R125 | mass% | 11.3 | 8.6 | 11.2 | 5.5 | 9.6 | 10.0 |
| R134a | mass% | 25.3 | 19.0 | 24.8 | 16.4 | 21.3 | 22.1 |
| R1234yf | mass% | 46.5 | 46.5 | 46.5 | 46.5 | 46.5 | 46.5 |
| GWP | – | 873 | 750 | 750 | 429 | 750 | 750 |
| COP Ratio | % (relative to R410A) | 104.6 | 103.9 | 99.3 | 95.7 | 101.7 | 100.9 |
| Refrigerating Capacity Ratio | % (relative to R410A) | 61.9 | 69.1 | 87.4 | 121.8 | 75.1 | 77.9 |
| Condensation Glide | °C | 5.0 | 4.9 | 24.4 | 27.1 | 12.3 | 15.3 |

46.5%R1234yf,r=0.37

| Item | Unit | Comparative Example 69 $B_{r=0.37}$ | Comparative Example 70 $C_{r=0.37}$ | Comparative Example 71 $D_{r=0.37}$ | Comparative Example 72 $F_{r=0.37}$ | Example 33 $C_{r=0.37}$ | Example 34 $P_{r=0.37}$ |
|---|---|---|---|---|---|---|---|
| R32 | mass% | 17.9 | 28.0 | 0.0 | 0.C | 16.6 | 12.8 |
| CO2 | mass% | 0.0 | 0.0 | 19.5 | 31.7 | 8.C | 10.7 |
| R125 | mass% | 13.2 | 9.4 | 12.6 | 6.8 | 10.7 | 11.1 |
| R134a | mass% | 22.4 | 16.1 | 21.4 | 15.C | 18.2 | 18.9 |
| R1234yf | mass% | 46.5 | 46.5 | 46.5 | 46.5 | 46.5 | 46.5 |
| GWP | – | 905 | 750 | 750 | 455 | 75C | 750 |
| COP Ratio | % (relative to R410A) | 104.3 | 103.6 | 98.6 | 95.5 | 101.C | 100.2 |
| Refrigerating Capacity Ratio | % (relative to R410A) | 63.4 | 71.1 | 93.0 | 122.4 | 79.3 | 82.3 |
| Condensation Glide | °C | 5.0 | 4.7 | 25.0 | 26.9 | 13.2 | 16.1 |

52

Table 22

50%R1234yf,r=0.25

| Item | Unit | Comparative Example 73 | Comparative Example 74 | Comparative Example 75 | Comparative Example 76 | Comparative Example 77 | Example 35 | Example 36 |
|------|------|------|------|------|------|------|------|------|
| | | A | $B_{r=0.25}$ | $C_{r=0.25}$ | $D_{r=0.25}$ | $F_{r=0.25}$ | $O_{r=0.25}$ | $P_{r=0.25}$ |
| R32 | mass% | 8.8 | 13.4 | 17.9 | 0.0 | 0.0 | 13.0 | 10.5 |
| $CO_2$ | mass% | 41.2 | 0.0 | 0.0 | 11.6 | 26.1 | 3.1 | 4.7 |
| R125 | mass% | 0.0 | 9.2 | 8.0 | 9.6 | 6.0 | 8.5 | 8.7 |
| R134a | mass% | 0.0 | 27.4 | 24.1 | 28.8 | 17.9 | 25.4 | 26.1 |
| R1234yf | mass% | 50.0 | 50.0 | 50.0 | 50.0 | 50.0 | 50.0 | 50.0 |
| GWP | – | 62 | 806 | 750 | 750 | 468 | 750 | 750 |
| COP Ratio | % (relative to R410A) | 90.3 | 105.0 | 104.7 | 100.9 | 97.7 | 103.5 | 102.9 |
| Refrigerating Capacity Ratio | % (relative to R410A) | 148.0 | 58.3 | 62.1 | 71.8 | 108.2 | 64.3 | 65.5 |
| Condensation Glide | °C | 22.0 | 4.9 | 5.1 | 20.7 | 27.5 | 9.1 | 11.2 |

50%R1234yf, r=0.375

| Item | Unit | Comparative Example 78 $B_{r=0.375}$ | Comparative Example 79 $C_{r=0.375}$ | Comparative Example 80 $D_{r=0.375}$ | Comparative Example 81 $F_{r=0.375}$ | Example 37 $C_{r=0.375}$ | Example 38 $P_{r=0.375}$ |
|---|---|---|---|---|---|---|---|
| R32 | mass% | 15.4 | 23.3 | 0.0 | 0.C | 14.4 | 11.9 |
| $CO_2$ | mass% | 0.0 | 0.0 | 16.1 | 27.6 | 6.1 | 8.0 |
| R125 | mass% | 13.0 | 10.0 | 12.7 | 8.5 | 11.1 | 11.3 |
| R134a | mass% | 21.6 | 16.7 | 21.2 | 13.9 | 18.4 | 18.8 |
| R1234yf | mass% | 50.0 | 50.0 | 50.0 | 50.C | 50.C | 50.0 |
| GWP | – | 870 | 750 | 750 | 499 | 75C | 750 |
| COP Ratio | % (relative to R410A) | 104.4 | 103.9 | 99.5 | 96.8 | 101.8 | 101.3 |
| Refrigerating Capacity Ratio | % (relative to R410A) | 61.2 | 67.5 | 84.1 | 112.7 | 73.1 | 75.2 |
| Condensation Glide | °C | 5.1 | 5.0 | 23.7 | 27.2 | 12.1 | 14.3 |

Table 23

50%R1234yf,r=0.5

| Item | Unit | Comparative Example 82 | Comparative Example 83 | Comparative Example 84 | Comparative Example 85 | Example 39 | Example 40 |
|---|---|---|---|---|---|---|---|
| | | $B_{r=0.5}$ | $C_{r=0.5}$ | $D_{r=0.5}$ | $F_{r=0.5}$ | $C_{r=0.5}$ | $P_{r=0.5}$ |
| R32 | mass% | 17.2 | 27.2 | 0.0 | 0.0 | 15.5 | 10.8 |
| $CO_2$ | mass% | 0.0 | 0.0 | 19.8 | 28.8 | 8.5 | 11.8 |
| R125 | mass% | 16.4 | 11.4 | 15.1 | 10.6 | 13.0 | 13.7 |
| R134a | mass% | 16.4 | 11.4 | 15.1 | 10.6 | 13.0 | 13.7 |
| R1234yf | mass% | 50.0 | 50.0 | 50.0 | 50.0 | 50.0 | 50.0 |
| GWP | – | 926 | 748 | 747 | 525 | 748 | 750 |
| COP Ratio | % (relative to R410A) | 103.9 | 103.3 | 98.3 | 96.1 | 100.6 | 99.7 |
| Refrigerating Capacity Ratio | % (relative to R410A) | 63.9 | 71.4 | 94.5 | 116.4 | 80.3 | 84.1 |
| Condensation Glide | °C | 5.1 | 4.8 | 25.0 | 26.8 | 13.7 | 17.2 |

50%R1234yf,r=0.75

| Item | Unit | Comparative Example 86 | Comparative Example 87 | Comparative Example 88 | Comparative Example 89 | Example 41 | Example 42 |
| | | $B_{r=0.75}$ | $C_{r=0.75}$ | $D_{r=0.75}$ | $F_{r=0.75}$ | $C_{r=0.75}$ | $P_{r=0.75}$ |
| --- | --- | --- | --- | --- | --- | --- | --- |
| R32 | mass% | 20.4 | 32.3 | 0.0 | 0.0 | 17.1 | 7.3 |
| $CO_2$ | mass% | 0.0 | 0.0 | 25.0 | 30.4 | 11.7 | 19.3 |
| R125 | mass% | 22.2 | 13.3 | 18.8 | 14.7 | 15.9 | 17.6 |
| R134a | mass% | 7.4 | 4.4 | 6.2 | 4.9 | 5.3 | 5.8 |
| R1234yf | mass% | 50.0 | 50.0 | 50.0 | 50.0 | 50.0 | 50.0 |
| GWP | – | 1023 | 750 | 750 | 587 | 750 | 750 |
| COP Ratio | % (relative to R410A) | 102.9 | 102.6 | 96.3 | 94.9 | 98.8 | 97.2 |
| Refrigerating Capacity Ratio | % (relative to R410A) | 68.7 | 76.4 | 109.1 | 121.6 | 90.3 | 100.7 |
| Condensation Glide | °C | 4.9 | 4.2 | 25.3 | 25.9 | 14.8 | 21.1 |

50%R1234yf,r=1.0

| Item | Unit | Comparative Example 90 | Comparative Example 91 | Comparative Example 92 | Comparative Example 93 | Example 43 | Example 44 |
| | | $B_{r=1.0}$ | $C_{r=1.0}$ | $D_{r=1.0}$ | $F_{r=1.0}$ | $C_{r=1.0}$ | $P_{r=1.0}$ |
| --- | --- | --- | --- | --- | --- | --- | --- |
| R32 | mass% | 23.0 | 35.5 | 0.0 | 0.0 | 18.2 | 3.9 |
| $CO_2$ | mass% | 0.0 | 0.0 | 28.7 | 31.8 | 14.0 | 25.5 |
| R125 | mass% | 27.0 | 14.5 | 21.3 | 18.2 | 17.8 | 20.6 |
| R134a | mass% | 0.0 | 0.0 | 0.0 | 0.0 | 0.0 | 0.0 |
| R1234yf | mass% | 50.0 | 50.0 | 50.0 | 50.0 | 50.0 | 50.0 |
| GWP | – | 1102 | 750 | 750 | 639 | 750 | 750 |
| COP Ratio | % (relative to R410A) | 102.0 | 102.1 | 94.5 | 93.7 | 97.5 | 95.1 |
| Refrigerating Capacity Ratio | % (relative to R410A) | 72.8 | 79.6 | 119.2 | 126.0 | 97.4 | 114.2 |
| Condensation Glide | °C | 4.5 | 3.7 | 24.8 | 25.0 | 15.1 | 22.9 |

## 50%R1234yf, r=0.31

| Item | Unit | Comparative Example 94 | Comparative Example 95 | Comparative Example 96 | Comparative Example 97 | Example 45 | Example 46 |
|---|---|---|---|---|---|---|---|
| | | $B_{r=0.31}$ | $C_{r=0.31}$ | $D_{r=0.31}$ | $F_{r=0.31}$ | $C_{r=0.31}$ | $P_{r=0.31}$ |
| R32 | mass% | 14.4 | 20.6 | 0.0 | 0.0 | 13.8 | 11.2 |
| $CO_2$ | mass% | 0.0 | 0.0 | 14.0 | 27.0 | 4.6 | 6.5 |
| R125 | mass% | 11.0 | 9.1 | 11.2 | 7.3 | 9.8 | 10.0 |
| R134a | mass% | 24.6 | 20.3 | 24.8 | 15.7 | 21.8 | 22.3 |
| R1234yf | mass% | 50.0 | 50.0 | 50.0 | 50.0 | 50.0 | 50.0 |
| GWP | – | 836 | 750 | 750 | 482 | 750 | 750 |
| COP Ratio | % (relative to R410A) | 104.7 | 104.3 | 100.2 | 97.2 | 102.6 | 102.0 |
| Refrigerating Capacity Ratio | % (relative to R410A) | 59.7 | 64.8 | 78.3 | 110.9 | 68.7 | 70.7 |
| Condensation Glide | °C | 5.0 | 5.1 | 22.6 | 27.4 | 10.7 | 13.1 |

## 50%R1234yf, r=0.37

| Item | Unit | Comparative Example 98 | Comparative Example 99 | Comparative Example 100 | Comparative Example 101 | Example 47 | Example 48 |
|---|---|---|---|---|---|---|---|
| | | $B_{r=0.37}$ | $C_{r=0.37}$ | $D_{r=0.37}$ | $F_{r=0.37}$ | $C_{r=0.37}$ | $P_{r=0.37}$ |
| R32 | mass% | 15.3 | 23.1 | 0.0 | 0.0 | 14.4 | 11.9 |
| $CO_2$ | mass% | 0.0 | 0.0 | 16.0 | 27.6 | 6.0 | 7.7 |
| R125 | mass% | 12.8 | 10.0 | 12.6 | 8.5 | 11.0 | 11.2 |
| R134a | mass% | 21.9 | 16.9 | 21.4 | 13.9 | 18.6 | 19.2 |
| R1234yf | mass% | 50.0 | 50.0 | 50.0 | 50.0 | 50.0 | 50.0 |
| GWP | – | 866 | 750 | 749 | 499 | 750 | 749 |
| COP Ratio | % (relative to R410A) | 104.5 | 103.9 | 99.6 | 96.8 | 101.9 | 101.4 |
| Refrigerating Capacity Ratio | % (relative to R410A) | 61.1 | 67.3 | 83.9 | 112.7 | 72.9 | 74.5 |
| Condensation Glide | °C | 5.0 | 5.1 | 23.7 | 27.2 | 12.0 | 14.0 |

Table 24

41%R1234yf,r=0.25

| Item | Unit | Example 49 | Example 50 | Example 51 | Example 52 | Example 53 | Comparative Example 102 | Example 54 | Example 55 |
|---|---|---|---|---|---|---|---|---|---|
| R32 | mass% | 7.0 | 7.0 | 7.0 | 7.0 | 7.0 | 7.0 | 9.0 | 9.0 |
| CO$_2$ | mass% | 42.0 | 32.0 | 21.0 | 19.0 | 17.0 | 12.0 | 40.0 | 30.0 |
| R125 | mass% | 2.5 | 5.0 | 7.8 | 8.3 | 8.8 | 10.0 | 2.5 | 5.0 |
| R134a | mass% | 7.5 | 15.0 | 23.2 | 24.7 | 26.2 | 30.0 | 7.5 | 15.0 |
| R1234yf | mass% | 41.0 | 41.0 | 41.0 | 41.0 | 41.0 | 41.0 | 41.0 | 41.0 |
| GWP | - | 244 | 439 | 654 | 693 | 732 | 828 | 258 | 452 |
| COP Ratio | % (relative to R410A) | 89.5 | 94.0 | 97.8 | 98.4 | 99.0 | 100.4 | 90.2 | 94.4 |
| Refrigerating Capacity Ratio | % (relative to R410A) | 149.0 | 127.2 | 101.4 | 96.5 | 91.7 | 79.7 | 145.9 | 123.9 |
| Condensation Glide | °C | 21.3 | 23.2 | 22.8 | 22.3 | 21.5 | 18.8 | 21.0 | 22.6 |

41%R1234yf,r=0.25

| Item | Unit | Example 56 | Example 57 | Comparative Example 103 | Example 58 | Example 59 | Example 60 | Comparative Example 104 | Example 61 |
|---|---|---|---|---|---|---|---|---|---|
| R32 | mass% | 9.0 | 9.0 | 9.0 | 11.0 | 11.0 | 11.0 | 11.0 | 15.0 |
| CO$_2$ | mass% | 17.0 | 15.0 | 10.0 | 38.0 | 28.0 | 14.0 | 8.0 | 34.0 |
| R125 | mass% | 8.3 | 8.8 | 10.0 | 2.5 | 5.0 | 8.5 | 10.0 | 2.5 |
| R134a | mass% | 24.7 | 26.2 | 30.0 | 7.5 | 15.0 | 25.5 | 30.0 | 7.5 |
| R1234yf | mass% | 41.0 | 41.0 | 41.0 | 41.0 | 41.0 | 41.0 | 41.0 | 41.0 |
| GWP | - | 706 | 745 | 841 | 271 | 466 | 738 | 855 | 298 |
| COP Ratio | % (relative to R410A) | 98.8 | 99.4 | 101.0 | 90.8 | 94.9 | 99.6 | 101.6 | 92.0 |
| Refrigerating Capacity Ratio | % (relative to R410A) | 93.3 | 88.5 | 76.7 | 142.8 | 120.6 | 87.7 | 73.7 | 136.6 |
| Condensation Glide | °C | 20.9 | 20.0 | 16.7 | 20.6 | 21.9 | 18.9 | 14.6 | 19.8 |

41%R1234yf,r=0.25

| Item | Unit | Example 62 | Example 63 | Comparative Example 105 | Comparative Example 106 | Comparative Example 107 | Comparative Example 108 |
|---|---|---|---|---|---|---|---|
| R32 | mass% | 15.0 | 15.0 | 15.0 | 25.0 | 25.0 | 25.0 |
| CO$_2$ | mass% | 24.0 | 14.0 | 4.0 | 24.0 | 14.0 | 4.0 |
| R125 | mass% | 5.0 | 7.5 | 10.0 | 2.5 | 5.0 | 7.5 |
| R134a | mass% | 15.0 | 22.5 | 30.0 | 7.5 | 15.0 | 22.5 |
| R1234yf | mass% | 41.0 | 41.0 | 41.0 | 41.0 | 41.0 | 41.0 |
| GWP | – | 493 | 687 | 882 | 365 | 560 | 755 |
| COP Ratio | % (relative to R410A) | 95.9 | 99.2 | 103.0 | 94.9 | 98.4 | 102.4 |
| Refrigerating Capacity Ratio | % (relative to R410A) | 114.1 | 90.8 | 68.2 | 120.8 | 98.1 | 76.1 |
| Condensation Glide | °C | 20.2 | 17.7 | 9.9 | 16.9 | 14.9 | 8.8 |

41%R1234yf,r=0.375

| Item | Unit | Example 64 | Example 65 | Example 66 | Example 67 | Example 68 | Comparative Example 109 | Example 69 | Example 70 |
|---|---|---|---|---|---|---|---|---|---|
| R32 | mass% | 7.0 | 7.0 | 7.0 | 7.0 | 7.0 | 7.0 | 9.0 | 9.0 |
| CO$_2$ | mass% | 42.0 | 32.0 | 25.0 | 23.0 | 21.0 | 12.0 | 40.0 | 30.0 |
| R125 | mass% | 3.8 | 7.5 | 10.1 | 10.9 | 11.6 | 15.0 | 3.8 | 7.5 |
| R134a | mass% | 6.2 | 12.5 | 16.9 | 18.1 | 19.4 | 25.0 | 6.2 | 12.5 |
| R1234yf | mass% | 41.0 | 41.0 | 41.0 | 41.0 | 41.0 | 41.0 | 41.0 | 41.0 |
| GWP | – | 271 | 490 | 644 | 689 | 733 | 932 | 284 | 504 |
| COP Ratio | % (relative to R410A) | 89.3 | 93.6 | 96.1 | 96.7 | 97.3 | 100.0 | 89.9 | 94.1 |
| Refrigerating Capacity Ratio | % (relative to R410A) | 149.4 | 128.1 | 112.0 | 107.4 | 102.6 | 81.2 | 146.4 | 124.8 |
| Condensation Glide | °C | 21.0 | 22.7 | 22.7 | 22.5 | 22.1 | 18.2 | 20.7 | 22.0 |

41%R1234yf,r=0.375

| Item | Unit | Example 71 | Example 72 | Example 73 | Comparative Example 110 | Example 74 | Example 75 | Example 76 | Example 77 |
|---|---|---|---|---|---|---|---|---|---|
| R32 | mass% | 9.0 | 9.0 | 9.0 | 9.0 | 11.0 | 11.0 | 11.0 | 11.0 |
| $CO_2$ | mass% | 23.0 | 21.0 | 19.0 | 10.0 | 38.0 | 28.0 | 20.0 | 18.0 |
| R125 | mass% | 10.1 | 10.9 | 11.6 | 15.0 | 3.8 | 7.5 | 10.5 | 11.3 |
| R134a | mass% | 16.9 | 18.1 | 19.4 | 25.0 | 6.2 | 12.5 | 17.5 | 18.7 |
| R1234yf | mass% | 41.0 | 41.0 | 41.0 | 41.0 | 41.0 | 41.0 | 41.0 | 41.0 |
| GWP | – | 658 | 703 | 746 | 945 | 298 | 517 | 694 | 739 |
| COP Ratio | % (relative to R410A) | 96.5 | 97.1 | 97.7 | 100.5 | 90.6 | 94.5 | 97.2 | 97.9 |
| Refrigerating Capacity Ratio | % (relative to R410A) | 108.7 | 104.0 | 99.3 | 78.2 | 143.3 | 121.5 | 103.1 | 98.4 |
| Condensation Glide | °C | 21.7 | 21.4 | 20.9 | 16.2 | 20.3 | 21.3 | 20.5 | 19.9 |

41%R1234yf,r=0.375

| Item | Unit | Comparative Example 111 | Example 78 | Example 79 | Comparative Example 112 | Comparative Example 113 | Comparative Example 114 | Comparative Example 115 | Comparative Example 116 |
|---|---|---|---|---|---|---|---|---|---|
| R32 | mass% | 11.0 | 15.0 | 15.0 | 15.0 | 15.0 | 25.0 | 25.0 | 25.0 |
| $CO_2$ | mass% | 8.0 | 34.0 | 24.0 | 14.0 | 4.0 | 24.0 | 14.0 | 4.0 |
| R125 | mass% | 15.0 | 3.8 | 7.5 | 11.3 | 15.0 | 3.8 | 7.5 | 11.3 |
| R134a | mass% | 25.0 | 6.2 | 12.5 | 18.7 | 25.0 | 6.2 | 12.5 | 18.7 |
| R1234yf | mass% | 41.0 | 41.0 | 41.0 | 41.0 | 41.0 | 41.0 | 41.0 | 41.0 |
| GWP | – | 958 | 325 | 544 | 766 | 985 | 392 | 612 | 833 |
| COP Ratio | % (relative to R410A) | 101.1 | 91.8 | 95.5 | 98.8 | 102.6 | 94.7 | 98.2 | 102.0 |
| Refrigerating Capacity Ratio | % (relative to R410A) | 75.3 | 137.1 | 115.0 | 92.1 | 69.8 | 121.3 | 99.1 | 77.4 |
| Condensation Glide | °C | 14.1 | 19.5 | 19.7 | 17.1 | 9.6 | 16.6 | 14.5 | 8.5 |

Table 25

41%R1234yf, r=0.5

| Item | Unit | Example 80 | Example 81 | Example 82 | Example 83 | Example 84 | Comparative Example 117 | Example 85 | Example 86 |
|---|---|---|---|---|---|---|---|---|---|
| R32 | mass% | 7.0 | 7.0 | 7.0 | 7.0 | 7.0 | 7.0 | 9.0 | 9.0 |
| CO$_2$ | mass% | 42.0 | 32.0 | 29.0 | 27.0 | 25.0 | 12.0 | 40.0 | 30.0 |
| R125 | mass% | 5.0 | 10.0 | 11.5 | 12.5 | 13.5 | 20.0 | 5.0 | 10.0 |
| R134a | mass% | 5.0 | 10.0 | 11.5 | 12.5 | 13.5 | 20.0 | 5.0 | 10.0 |
| R1234yf | mass% | 41.0 | 41.0 | 41.0 | 41.0 | 41.0 | 41.0 | 41.0 | 41.0 |
| GWP | - | 296 | 542 | 616 | 665 | 715 | 1035 | 309 | 556 |
| COP Ratio | % (relative to R410A) | 89.1 | 93.1 | 94.2 | 94.9 | 95.6 | 99.5 | 89.7 | 93.7 |
| Refrigerating Capacity Ratio | % (relative to R410A) | 149.8 | 128.9 | 122.2 | 117.7 | 113.2 | 82.8 | 146.8 | 125.6 |
| Condensation Glide | °C | 20.7 | 22.2 | 22.3 | 22.2 | 22.1 | 17.5 | 20.4 | 21.5 |

41%R1234yf, r=0.5

| Item | Unit | Example 87 | Comparative Example 118 | Example 88 | Example 89 | Example 90 | Example 91 | Example 92 | Comparative Example 119 |
|---|---|---|---|---|---|---|---|---|---|
| R32 | mass% | 9.0 | 9.0 | 9.0 | 11.0 | 11.0 | 11.0 | 11.0 | 11.0 |
| CO$_2$ | mass% | 25.0 | 10.0 | 23.0 | 38.0 | 28.0 | 23.0 | 21.0 | 8.0 |
| R125 | mass% | 12.5 | 20.0 | 13.5 | 5.0 | 10.0 | 12.5 | 13.5 | 20.0 |
| R134a | mass% | 12.5 | 20.0 | 13.5 | 5.0 | 10.0 | 12.5 | 13.5 | 20.0 |
| R1234yf | mass% | 41.0 | 41.0 | 41.0 | 41.0 | 41.0 | 41.0 | 41.0 | 41.0 |
| GWP | - | 679 | 1048 | 728 | 323 | 569 | 692 | 742 | 1062 |
| COP Ratio | % (relative to R410A) | 95.4 | 100.0 | 96.0 | 90.4 | 94.2 | 95.9 | 96.5 | 100.7 |
| Refrigerating Capacity Ratio | % (relative to R410A) | 114.4 | 79.8 | 109.8 | 143.7 | 122.3 | 111.1 | 106.6 | 76.9 |
| Condensation Glide | °C | 21.3 | 15.6 | 21.1 | 20.0 | 20.8 | 20.4 | 20.1 | 13.6 |

## 41%R1234yf,r=0.5

| Item | Unit | Example 93 | Example 94 | Example 95 | Comparative Example 120 | Comparative Example 121 | Comparative Example 122 | Comparative Example 123 | Comparative Example 124 |
|---|---|---|---|---|---|---|---|---|---|
| R32 | mass% | 13.0 | 15.0 | 15.0 | 15.0 | 15.C | 25.0 | 25.0 | 25.0 |
| $CO_2$ | mass% | 20.0 | 34.0 | 24.0 | 14.0 | 4.C | 24.0 | 14.0 | 4.0 |
| R125 | mass% | 13.0 | 5.0 | 10.0 | 15.0 | 20.C | 5.0 | 10.0 | 15.0 |
| R134a | mass% | 13.0 | 5.0 | 10.0 | 15.0 | 20.C | 5.0 | 10.0 | 15.0 |
| R1234yf | mass% | 41.0 | 41.0 | 41.0 | 41.0 | 41.C | 41.0 | 41.0 | 41.0 |
| GWP | – | 730 | 350 | 596 | 843 | 1089 | 417 | 664 | 910 |
| COP Ratio | % (relative to R410A) | 96.7 | 91.6 | 95.2 | 98.4 | 102.1 | 94.6 | 97.9 | 101.6 |
| Refrigerating Capacity Ratio | % (relative to R410A) | 105.6 | 137.5 | 115.8 | 93.4 | 71.4 | 121.7 | 100.0 | 78.7 |
| Condensation Glide | °C | 19.2 | 19.2 | 19.2 | 16.5 | 9.2 | 16.4 | 14.1 | 8.1 |

## 41%R1234yf,r=0.75

| Item | Unit | Example 96 | Example 97 | Example 98 | Comparative Example 125 | Example 99 | Example 100 | Comparative Example 126 | Example 101 |
|---|---|---|---|---|---|---|---|---|---|
| R32 | mass% | 7.0 | 7.0 | 7.0 | 7.0 | 9.C | 9.0 | 9.C | 11.0 |
| $CO_2$ | mass% | 42.0 | 31.0 | 29.0 | 12.0 | 40.C | 28.0 | 10.C | 38.0 |
| R125 | mass% | 7.5 | 15.8 | 17.3 | 30.0 | 7.5 | 16.5 | 30.C | 7.5 |
| R134a | mass% | 2.5 | 5.2 | 5.7 | 10.0 | 2.5 | 5.5 | 10.C | 2.5 |
| R1234yf | mass% | 41.0 | 41.0 | 41.0 | 41.0 | 41.C | 41.0 | 41.C | 41.0 |
| GWP | – | 348 | 677 | 736 | 1242 | 361 | 719 | 1255 | 375 |
| COP Ratio | % (relative to R410A) | 88.6 | 92.6 | 93.3 | 98.4 | 89.3 | 93.5 | 98.9 | 89.9 |
| Refrigerating Capacity Ratio | % (relative to R410A) | 150.6 | 128.4 | 124.1 | 86.1 | 147.6 | 123.0 | 83.1 | 144.5 |
| Condensation Glide | °C | 20.1 | 21.1 | 21.0 | 16.2 | 19.8 | 20.4 | 14.4 | 19.4 |

41%R1234yf,r=0.75

| Item | Unit | Example 102 | Comparative Example 127 | Example 103 | Example 104 | Comparative Example 128 | Comparative Example 129 | Comparative Example 130 | Comparative Example 131 |
|---|---|---|---|---|---|---|---|---|---|
| R32 | mass% | 11.0 | 11.0 | 15.0 | 15.0 | 15.0 | 15.0 | 25.0 | 25.0 |
| $CO_2$ | mass% | 28.0 | 8.0 | 34.0 | 24.0 | 14.0 | 4.0 | 24.0 | 14.0 |
| R125 | mass% | 15.0 | 30.0 | 7.5 | 15.0 | 22.5 | 30.0 | 7.5 | 15.0 |
| R134a | mass% | 5.0 | 10.0 | 2.5 | 5.0 | 7.5 | 10.0 | 2.5 | 5.0 |
| R1234yf | mass% | 41.0 | 41.0 | 41.0 | 41.0 | 41.0 | 41.0 | 41.0 | 41.0 |
| GWP | − | 673 | 1269 | 401 | 700 | 998 | 1296 | 469 | 767 |
| COP Ratio | % (relative to R410A) | 93.4 | 99.6 | 91.2 | 94.5 | 97.5 | 101.0 | 94.2 | 97.3 |
| Refrigerating Capacity Ratio | % (relative to R410A) | 124.0 | 80.2 | 138.4 | 117.6 | 96.0 | 74.6 | 122.7 | 101.9 |
| Condensation Glide | °C | 19.8 | 12.5 | 18.7 | 18.2 | 15.4 | 8.5 | 15.8 | 13.3 |

41%R1234yf,r=0.75

| Item | Unit | Comparative Example 132 |
|---|---|---|
| R32 | mass% | 25.0 |
| $CO_2$ | mass% | 4.0 |
| R125 | mass% | 22.5 |
| R134a | mass% | 7.5 |
| R1234yf | mass% | 41.0 |
| GWP | − | 1065 |
| COP Ratio | % (relative to R410A) | 100.8 |
| Refrigerating Capacity Ratio | % (relative to R410A) | 81.4 |
| Condensation Glide | °C | 7.5 |

Table 26

43%R1234yf,r=0.25

| Item | Unit | Example 105 | Example 106 | Example 107 | Example 108 | Example 109 | Comparative Example 133 | Example 110 | Example 111 |
|---|---|---|---|---|---|---|---|---|---|
| R32 | mass% | 7.0 | 7.0 | 7.0 | 7.0 | 7.0 | 7.0 | 9.0 | 9.0 |
| $CO_2$ | mass% | 40.0 | 30.0 | 19.0 | 17.0 | 15.0 | 10.0 | 38.0 | 28.0 |
| R125 | mass% | 2.5 | 5.0 | 7.8 | 8.3 | 8.8 | 10.0 | 2.5 | 5.0 |
| R134a | mass% | 7.5 | 15.0 | 23.2 | 24.7 | 26.2 | 30.0 | 7.5 | 15.0 |
| R1234yf | mass% | 43.0 | 43.0 | 43.0 | 43.0 | 43.0 | 43.0 | 43.0 | 43.0 |
| GWP | – | 244 | 439 | 654 | 693 | 732 | 828 | 258 | 452 |
| COP Ratio | % (relative to R410A) | 90.6 | 94.8 | 98.4 | 99.0 | 99.6 | 101.1 | 91.2 | 95.3 |
| Refrigerating Capacity Ratio | % (relative to R410A) | 144.7 | 122.6 | 96.5 | 91.6 | 86.8 | 74.9 | 141.6 | 119.3 |
| Condensation Glide | °C | 22.1 | 23.6 | 22.4 | 21.7 | 20.7 | 17.3 | 21.7 | 22.8 |

43%R1234yf,r=0.25

| Item | Unit | Example 112 | Example 113 | Comparative Example 134 | Example 114 | Example 115 | Example 116 | Comparative Example 135 | Comparative Example 136 |
|---|---|---|---|---|---|---|---|---|---|
| R32 | mass% | 9.0 | 9.0 | 9.0 | 11.0 | 11.0 | 11.0 | 11.0 | 15.0 |
| $CO_2$ | mass% | 15.0 | 13.0 | 8.0 | 36.0 | 26.0 | 12.0 | 6.0 | 32.0 |
| R125 | mass% | 8.3 | 8.8 | 10.0 | 2.5 | 5.0 | 8.5 | 10.0 | 2.5 |
| R134a | mass% | 24.7 | 26.2 | 30.0 | 7.5 | 15.0 | 25.5 | 30.0 | 7.5 |
| R1234yf | mass% | 43.0 | 43.0 | 43.0 | 43.0 | 43.0 | 43.0 | 43.0 | 43.0 |
| GWP | – | 706 | 745 | 842 | 271 | 466 | 738 | 855 | 298 |
| COP Ratio | % (relative to R410A) | 99.4 | 100.0 | 101.7 | 91.8 | 95.7 | 100.2 | 102.4 | 92.9 |
| Refrigerating Capacity Ratio | % (relative to R410A) | 88.4 | 83.6 | 72.0 | 138.5 | 116.0 | 82.9 | 69.2 | 132.1 |
| Condensation Glide | °C | 20.1 | 19.0 | 15.0 | 21.2 | 22.0 | 17.8 | 12.6 | 20.2 |

## 43%R1234yf,r=0.25

| Item | Unit | Example 117 | Example 118 | Comparative Example 137 | Comparative Example 138 | Comparative Example 139 | Comparative Example 140 |
|---|---|---|---|---|---|---|---|
| R32 | mass% | 15.0 | 15.0 | 15.0 | 25.0 | 25.0 | 25.0 |
| CO2 | mass% | 22.0 | 12.0 | 2.0 | 22.0 | 12.0 | 2.0 |
| R125 | mass% | 5.0 | 7.5 | 10.0 | 2.5 | 5.0 | 7.5 |
| R134a | mass% | 15.0 | 22.5 | 30.0 | 7.5 | 15.0 | 22.5 |
| R1234yf | mass% | 43.0 | 43.0 | 43.0 | 43.0 | 43.0 | 43.0 |
| GWP | – | 493 | 687 | 882 | 365 | 560 | 755 |
| COP Ratio | % (relative to R410A) | 96.6 | 99.9 | 104.0 | 95.6 | 99.2 | 103.3 |
| Refrigerating Capacity Ratio | % (relative to R410A) | 109.4 | 86.1 | 63.9 | 116.2 | 93.6 | 71.9 |
| Condensation Glide | °C | 20.1 | 16.7 | 7.5 | 16.8 | 14.1 | 6.9 |

## 43%R1234yf,r=0.303

| Item | Unit | Example 119 | Example 120 | Example 121 | Example 122 | Example 123 | Comparative Example 141 | Example 124 | Example 125 |
|---|---|---|---|---|---|---|---|---|---|
| R32 | mass% | 7.0 | 7.0 | 7.0 | 7.0 | 7.0 | 7.0 | 9.0 | 9.0 |
| CO2 | mass% | 40.0 | 30.0 | 21.0 | 19.0 | 17.0 | 10.0 | 38.0 | 28.0 |
| R125 | mass% | 3.0 | 6.1 | 8.8 | 9.4 | 10.0 | 12.1 | 3.0 | 6.1 |
| R134a | mass% | 7.0 | 13.9 | 20.2 | 21.6 | 23.0 | 27.9 | 7.0 | 13.9 |
| R1234yf | mass% | 43.0 | 43.0 | 43.0 | 43.0 | 43.0 | 43.0 | 43.0 | 43.0 |
| GWP | – | 254 | 462 | 646 | 687 | 728 | 872 | 268 | 475 |
| COP Ratio | % (relative to R410A) | 90.5 | 94.7 | 97.7 | 98.3 | 98.8 | 100.9 | 91.1 | 95.1 |
| Refrigerating Capacity Ratio | % (relative to R410A) | 144.9 | 123.0 | 101.8 | 97.0 | 92.1 | 75.5 | 141.8 | 119.6 |
| Condensation Glide | °C | 22.0 | 23.4 | 22.7 | 22.1 | 21.4 | 17.0 | 21.6 | 22.6 |

43%R1234yf,r=0.303

| Item | Unit | Example 126 | Example 127 | Example 128 | Comparative Example 142 | Example 129 | Example 130 | Example 131 | Comparative Example 143 |
|---|---|---|---|---|---|---|---|---|---|
| R32 | mass% | 9.0 | 9.0 | 9.0 | 9.0 | 11.0 | 11.0 | 11.0 | 11.0 |
| $CO_2$ | mass% | 19.0 | 17.0 | 15.0 | 8.0 | 36.0 | 26.0 | 14.0 | 6.0 |
| R125 | mass% | 8.8 | 9.4 | 10.0 | 12.1 | 3.0 | 6.1 | 9.7 | 12.1 |
| R134a | mass% | 20.2 | 21.6 | 23.0 | 27.9 | 7.0 | 13.9 | 22.3 | 27.9 |
| R1234yf | mass% | 43.0 | 43.0 | 43.0 | 43.0 | 43.0 | 43.0 | 43.0 | 43.0 |
| GWP | – | 660 | 701 | 742 | 885 | 281 | 489 | 735 | 899 |
| COP Ratio | % (relative to R410A) | 98.1 | 98.7 | 99.3 | 101.5 | 91.7 | 95.6 | 99.4 | 102.2 |
| Refrigerating Capacity Ratio | % (relative to R410A) | 98.5 | 93.7 | 89.0 | 72.6 | 138.6 | 116.3 | 88.2 | 69.8 |
| Condensation Glide | °C | 21.4 | 20.7 | 19.8 | 14.8 | 21.1 | 21.8 | 18.7 | 12.4 |

43%R1234yf,r=0.303

| Item | Unit | Example 132 | Example 133 | Example 134 | Comparative Example 144 | Comparative Example 145 | Comparative Example 146 | Comparative Example 147 |
|---|---|---|---|---|---|---|---|---|
| R32 | mass% | 15.0 | 15.0 | 15.0 | 15.0 | 25.0 | 25.0 | 25.0 |
| $CO_2$ | mass% | 32.0 | 22.0 | 12.0 | 2.0 | 22.0 | 12.0 | 2.0 |
| R125 | mass% | 3.0 | 6.1 | 9.1 | 12.1 | 3.0 | 6.1 | 9.1 |
| R134a | mass% | 7.0 | 13.9 | 20.9 | 27.9 | 7.0 | 13.9 | 20.9 |
| R1234yf | mass% | 43.0 | 43.0 | 43.0 | 43.0 | 43.0 | 43.0 | 43.0 |
| GWP | – | 308 | 515 | 720 | 925 | 376 | 583 | 788 |
| COP Ratio | % (relative to R410A) | 92.8 | 96.5 | 99.8 | 103.8 | 95.6 | 99.0 | 103.1 |
| Refrigerating Capacity Ratio | % (relative to R410A) | 132.3 | 109.8 | 86.6 | 64.5 | 116.4 | 94.0 | 72.4 |
| Condensation Glide | °C | 20.1 | 19.9 | 16.5 | 7.4 | 16.7 | 13.9 | 6.8 |

Table 27

43%R1234yf,r=0.355

| Item | Unit | Example 135 | Example 136 | Example 137 | Example 138 | Example 139 | Comparative Example 148 | Example 140 | Example 141 |
|---|---|---|---|---|---|---|---|---|---|
| R32 | mass% | 7.0 | 7.0 | 7.0 | 7.0 | 7.0 | 7.0 | 9.0 | 9.0 |
| $CO_2$ | mass% | 40.0 | 30.0 | 23.0 | 21.0 | 19.0 | 10.0 | 38.0 | 28.0 |
| R125 | mass% | 3.6 | 7.1 | 9.6 | 10.3 | 11.0 | 14.2 | 3.6 | 7.1 |
| R134a | mass% | 6.4 | 12.9 | 17.4 | 18.7 | 20.0 | 25.8 | 6.4 | 12.9 |
| R1234yf | mass% | 43.0 | 43.0 | 43.0 | 43.0 | 43.0 | 43.0 | 43.0 | 43.0 |
| GWP | – | 267 | 482 | 634 | 677 | 720 | 915 | 280 | 496 |
| COP Ratio | % (relative to R410A) | 90.4 | 94.5 | 96.9 | 97.5 | 98.1 | 100.7 | 91.0 | 95.0 |
| Refrigerating Capacity Ratio | % (relative to R410A) | 145.1 | 123.3 | 107.0 | 102.3 | 97.5 | 76.1 | 142.0 | 120.0 |
| Condensation Glide | °C | 21.8 | 23.2 | 22.8 | 22.4 | 21.9 | 16.8 | 21.4 | 22.4 |

43%R1234yf,r=0.355

| Item | Unit | Example 142 | Example 143 | Comparative Example 149 | Example 144 | Example 145 | Example 146 | Example 147 | Comparative Example 150 |
|---|---|---|---|---|---|---|---|---|---|
| R32 | mass% | 9.0 | 9.0 | 9.0 | 11.0 | 11.0 | 11.0 | 11.0 | 11.0 |
| $CO_2$ | mass% | 19.0 | 17.0 | 8.0 | 36.0 | 26.0 | 17.0 | 15.0 | 6.0 |
| R125 | mass% | 10.3 | 11.0 | 14.2 | 3.6 | 7.1 | 10.3 | 11.0 | 14.2 |
| R134a | mass% | 18.7 | 20.0 | 25.8 | 6.4 | 12.9 | 18.7 | 20.0 | 25.8 |
| R1234yf | mass% | 43.0 | 43.0 | 43.0 | 43.0 | 43.0 | 43.0 | 43.0 | 43.0 |
| GWP | – | 691 | 734 | 928 | 294 | 509 | 704 | 747 | 942 |
| COP Ratio | % (relative to R410A) | 97.9 | 98.5 | 101.3 | 91.6 | 95.4 | 98.3 | 98.9 | 102.0 |
| Refrigerating Capacity Ratio | % (relative to R410A) | 99.0 | 94.2 | 73.2 | 138.8 | 116.7 | 95.7 | 91.0 | 70.4 |
| Condensation Glide | °C | 21.1 | 20.5 | 14.6 | 21.0 | 21.6 | 19.8 | 19.0 | 12.3 |

## 43%R1234yf,r=0.355

| Item | Unit | Example 148 | Example 149 | Comparative Example 151 | Comparative Example 152 | Comparative Example 153 | Comparative Example 154 | Comparative Example 155 |
|---|---|---|---|---|---|---|---|---|
| R32 | mass% | 15.0 | 15.0 | 15.0 | 15.0 | 25.0 | 25.0 | 25.0 |
| $CO_2$ | mass% | 32.0 | 22.0 | 12.0 | 2.0 | 22.0 | 12.0 | 2.0 |
| R125 | mass% | 3.6 | 7.1 | 10.7 | 14.2 | 3.6 | 7.1 | 10.7 |
| R134a | mass% | 6.4 | 12.9 | 19.3 | 25.8 | 6.4 | 12.9 | 19.3 |
| R1234yf | mass% | 43.0 | 43.0 | 43.0 | 43.0 | 43.0 | 43.0 | 43.0 |
| GWP | – | 321 | 536 | 754 | 969 | 388 | 604 | 821 |
| COP Ratio | % (relative to R410A) | 92.7 | 96.3 | 99.6 | 103.6 | 95.5 | 98.9 | 103.0 |
| Refrigerating Capacity Ratio | % (relative to R410A) | 132.5 | 110.1 | 87.2 | 65.2 | 116.6 | 94.4 | 73.0 |
| Condensation Glide | °C | 20.0 | 19.7 | 16.3 | 7.3 | 16.6 | 13.8 | 6.7 |

## 43%R1234yf,r=0.375

| Item | Unit | Example 150 | Example 151 | Example 152 | Example 153 | Example 154 | Comparative Example 156 | Example 155 | Example 156 |
|---|---|---|---|---|---|---|---|---|---|
| R32 | mass% | 7.0 | 7.0 | 7.0 | 7.0 | 7.0 | 7.0 | 9.0 | 9.0 |
| $CO_2$ | mass% | 40.0 | 30.0 | 23.0 | 21.0 | 19.0 | 10.0 | 38.0 | 28.0 |
| R125 | mass% | 3.8 | 7.5 | 10.1 | 10.9 | 11.6 | 15.0 | 3.8 | 7.5 |
| R134a | mass% | 6.2 | 12.5 | 16.9 | 18.1 | 19.4 | 25.0 | 6.2 | 12.5 |
| R1234yf | mass% | 43.0 | 43.0 | 43.0 | 43.0 | 43.0 | 43.0 | 43.0 | 43.0 |
| GWP | – | 271 | 491 | 644 | 690 | 733 | 932 | 285 | 504 |
| COP Ratio | % (relative to R410A) | 90.4 | 94.5 | 96.8 | 97.4 | 98.0 | 100.6 | 91.0 | 94.9 |
| Refrigerating Capacity Ratio | % (relative to R410A) | 145.2 | 123.4 | 107.2 | 102.4 | 97.7 | 76.4 | 142.0 | 120.1 |
| Condensation Glide | °C | 21.8 | 23.1 | 22.7 | 22.3 | 21.8 | 16.7 | 21.4 | 22.3 |

43%R1234yf,r=0.375

| Item | Unit | Example 157 | Example 158 | Example 159 | Comparative Example 157 | Example 160 | Example 161 | Example 162 | Comparative Example 158 |
|---|---|---|---|---|---|---|---|---|---|
| R32 | mass% | 9.0 | 9.0 | 9.0 | 9.0 | 11.0 | 11.0 | 11.0 | 11.0 |
| $CO_2$ | mass% | 21.0 | 19.0 | 17.0 | 8.0 | 36.0 | 26.0 | 16.0 | 6.0 |
| R125 | mass% | 10.1 | 10.9 | 11.6 | 15.0 | 3.8 | 7.5 | 11.3 | 15.0 |
| R134a | mass% | 16.9 | 18.1 | 19.4 | 25.0 | 6.2 | 12.5 | 18.7 | 25.0 |
| R1234yf | mass% | 43.0 | 43.0 | 43.0 | 43.0 | 43.0 | 43.0 | 43.0 | 43.0 |
| GWP | – | 658 | 703 | 746 | 945 | 298 | 517 | 739 | 959 |
| COP Ratio | % (relative to R410A) | 97.2 | 97.8 | 98.4 | 101.3 | 91.6 | 95.4 | 98.6 | 101.9 |
| Refrigerating Capacity Ratio | % (relative to R410A) | 103.9 | 99.2 | 94.4 | 73.5 | 138.9 | 116.8 | 93.6 | 70.7 |
| Condensation Glide | °C | 21.6 | 21.0 | 20.4 | 14.5 | 20.9 | 21.5 | 19.3 | 12.2 |

43%R1234yf,r=0.375

| Item | Unit | Example 163 | Example 164 | Comparative Example 159 | Comparative Example 160 | Comparative Example 161 | Comparative Example 162 | Comparative Example 163 |
|---|---|---|---|---|---|---|---|---|
| R32 | mass% | 15.0 | 15.0 | 15.0 | 15.0 | 25.0 | 25.0 | 25.0 |
| $CO_2$ | mass% | 32.0 | 22.0 | 12.0 | 2.0 | 22.0 | 12.0 | 2.0 |
| R125 | mass% | 3.8 | 7.5 | 11.3 | 15.0 | 3.8 | 7.5 | 11.3 |
| R134a | mass% | 6.2 | 12.5 | 18.7 | 25.0 | 6.2 | 12.5 | 18.7 |
| R1234yf | mass% | 43.0 | 43.0 | 43.0 | 43.0 | 43.0 | 43.0 | 43.0 |
| GWP | – | 325 | 544 | 766 | 985 | 392 | 612 | 833 |
| COP Ratio | % (relative to R410A) | 92.7 | 96.3 | 99.6 | 103.5 | 95.5 | 98.9 | 102.9 |
| Refrigerating Capacity Ratio | % (relative to R410A) | 132.6 | 110.3 | 87.4 | 65.4 | 116.7 | 94.5 | 73.2 |
| Condensation Glide | °C | 19.9 | 19.7 | 16.2 | 7.3 | 16.5 | 13.7 | 6.7 |

Table 28

43%R1234yf, r=0.5

| Item | Unit | Example 165 | Example 166 | Example 167 | Example 168 | Example 169 | Comparative Example 164 | Example 170 | Example 171 |
|---|---|---|---|---|---|---|---|---|---|
| R32 | mass% | 7.0 | 7.0 | 7.0 | 7.0 | 7.0 | 7.0 | 9.0 | 9.0 |
| CO₂ | mass% | 40.0 | 30.0 | 27.0 | 25.0 | 23.0 | 10.0 | 38.0 | 28.0 |
| R125 | mass% | 5.0 | 10.0 | 11.5 | 12.5 | 13.5 | 20.0 | 5.0 | 10.0 |
| R134a | mass% | 5.0 | 10.0 | 11.5 | 12.5 | 13.5 | 20.0 | 5.0 | 10.0 |
| R1234yf | mass% | 43.0 | 43.0 | 43.0 | 43.0 | 43.0 | 43.0 | 43.0 | 43.0 |
| GWP | - | 296 | 542 | 616 | 665 | 715 | 1035 | 309 | 556 |
| COP Ratio | % (relative to R410A) | 90.2 | 94.1 | 95.1 | 95.7 | 96.4 | 100.2 | 90.8 | 94.5 |
| Refrigerating Capacity Ratio | % (relative to R410A) | 145.5 | 124.2 | 117.5 | 112.9 | 108.3 | 77.9 | 142.4 | 120.9 |
| Condensation Glide | °C | 21.5 | 22.6 | 22.5 | 22.4 | 22.1 | 16.2 | 21.1 | 21.8 |

43%R1234yf, r=0.5

| Item | Unit | Example 172 | Example 173 | Example 174 | Comparative Example 165 | Example 175 | Example 176 | Comparative Example 166 | Example 177 |
|---|---|---|---|---|---|---|---|---|---|
| R32 | mass% | 9.0 | 9.0 | 11.0 | 9.0 | 11.0 | 11.0 | 11.0 | 13.0 |
| CO₂ | mass% | 23.0 | 21.0 | 36.0 | 8.0 | 26.0 | 20.0 | 6.0 | 18.0 |
| R125 | mass% | 12.5 | 13.5 | 5.0 | 20.0 | 10.0 | 13.0 | 20.0 | 13.0 |
| R134a | mass% | 12.5 | 13.5 | 5.0 | 20.0 | 10.0 | 13.0 | 20.0 | 13.0 |
| R1234yf | mass% | 43.0 | 43.0 | 43.0 | 43.0 | 43.0 | 43.0 | 43.0 | 43.0 |
| GWP | - | 679 | 728 | 323 | 1049 | 569 | 717 | 1062 | 731 |
| COP Ratio | % (relative to R410A) | 96.2 | 96.8 | 91.4 | 100.8 | 95.0 | 96.9 | 101.5 | 97.4 |
| Refrigerating Capacity Ratio | % (relative to R410A) | 109.6 | 105.0 | 139.3 | 75.0 | 117.6 | 104.0 | 72.2 | 100.8 |
| Condensation Glide | °C | 21.4 | 21.0 | 20.7 | 14.1 | 21.0 | 20.1 | 11.8 | 18.8 |

## 43%R1234yf,r=0.5

| Item | Unit | Example 178 | Example 179 | Comparative Example 167 | Comparative Example 168 | Comparative Example 169 | Comparative Example 170 | Comparative Example 171 |
|---|---|---|---|---|---|---|---|---|
| R32 | mass% | 15.0 | 15.0 | 15.0 | 15.0 | 25.0 | 25.0 | 25.0 |
| $CO_2$ | mass% | 32.0 | 22.0 | 12.0 | 2.0 | 22.0 | 12.0 | 2.0 |
| R125 | mass% | 5.0 | 10.0 | 15.0 | 20.0 | 5.0 | 10.0 | 15.0 |
| R134a | mass% | 5.0 | 10.0 | 15.0 | 20.0 | 5.0 | 10.0 | 15.0 |
| R1234yf | mass% | 43.0 | 43.0 | 43.0 | 43.0 | 43.0 | 43.0 | 43.0 |
| GWP | - | 350 | 596 | 843 | 1089 | 417 | 664 | 910 |
| COP Ratio | % (relative to R410A) | 92.5 | 96.0 | 99.2 | 103.0 | 95.3 | 98.6 | 102.5 |
| Refrigerating Capacity Ratio | % (relative to R410A) | 133.0 | 111.1 | 88.6 | 67.0 | 117.2 | 95.4 | 74.4 |
| Condensation Glide | °C | 19.7 | 19.2 | 15.7 | 7.1 | 16.3 | 13.3 | 6.5 |

## 43%R1234yf,r=0.75

| Item | Unit | Example 180 | Example 181 | Example 182 | Comparative Example 172 | Example 183 | Example 184 | Comparative Example 173 | Example 185 |
|---|---|---|---|---|---|---|---|---|---|
| R32 | mass% | 7.0 | 7.0 | 7.0 | 7.0 | 9.0 | 9.0 | 9.0 | 15.0 |
| $CO_2$ | mass% | 40.0 | 29.0 | 27.0 | 10.0 | 38.0 | 26.0 | 8.0 | 32.0 |
| R125 | mass% | 7.5 | 15.8 | 17.3 | 30.0 | 7.5 | 16.5 | 30.0 | 7.5 |
| R134a | mass% | 2.5 | 5.2 | 5.7 | 10.0 | 2.5 | 5.5 | 10.0 | 2.5 |
| R1234yf | mass% | 43.0 | 43.0 | 43.0 | 43.0 | 43.0 | 43.0 | 43.0 | 43.0 |
| GWP | - | 348 | 677 | 736 | 1242 | 361 | 719 | 1256 | 402 |
| COP Ratio | % (relative to R410A) | 89.7 | 93.6 | 94.2 | 99.1 | 90.3 | 94.4 | 99.7 | 92.1 |
| Refrigerating Capacity Ratio | % (relative to R410A) | 146.3 | 123.7 | 119.3 | 81.1 | 143.2 | 118.2 | 78.2 | 133.9 |
| Condensation Glide | °C | 20.9 | 21.5 | 21.4 | 15.1 | 20.5 | 20.6 | 13.1 | 19.1 |

43%R1234yf,r=0.75

| Item | Unit | Example 186 | Comparative Example 174 | Comparative Example 175 | Comparative Example 176 | Comparative Example 177 | Example 187 |
|---|---|---|---|---|---|---|---|
| R32 | mass% | 15.0 | 15.0 | 15.0 | 25.0 | 25.C | 25.0 |
| $CO_2$ | mass% | 22.0 | 12.0 | 2.0 | 22.0 | 12.C | 2.0 |
| R125 | mass% | 15.0 | 22.5 | 30.0 | 7.5 | 15.C | 22.5 |
| R134a | mass% | 5.0 | 7.5 | 10.0 | 2.5 | 5.C | 7.5 |
| R1234yf | mass% | 43.0 | 43.0 | 43.0 | 43.0 | 43.C | 43.0 |
| GWP | − | 700 | 998 | 1296 | 469 | 767 | 1065 |
| COP Ratio | % (relative to R410A) | 95.3 | 98.3 | 101.9 | 95.0 | 98.1 | 101.7 |
| Refrigerating Capacity Ratio | % (relative to R410A) | 112.9 | 91.2 | 70.1 | 118.1 | 97.3 | 77.0 |
| Condensation Glide | °C | 18.2 | 14.6 | 6.7 | 15.8 | 12.6 | 6.0 |

Table 29

45%R1234yf,r=0.25

| Item | Unit | Example 188 | Example 189 | Example 190 | Example 191 | Example 192 | Comparative Example 178 | Example 193 | Example 194 |
|---|---|---|---|---|---|---|---|---|---|
| R32 | mass% | 7.0 | 7.0 | 7.0 | 7.0 | 7.C | 7.C | 9.C | 9.0 |
| CO$_2$ | mass% | 38.0 | 28.0 | 17.0 | 15.0 | 13.C | 8.C | 36.C | 26.0 |
| R125 | mass% | 2.5 | 5.0 | 7.8 | 8.3 | 8.8 | 10.C | 2.5 | 5.0 |
| R134a | mass% | 7.5 | 15.0 | 23.2 | 24.7 | 26.2 | 30.C | 7.5 | 15.0 |
| R1234yf | mass% | 45.0 | 45.0 | 45.0 | 45.0 | 45.C | 45.C | 45.C | 45.0 |
| GWP | - | 244 | 439 | 654 | 693 | 732 | 828 | 258 | 452 |
| COP Ratio | % (relative to R410A) | 91.7 | 95.7 | 99.1 | 99.6 | 100.2 | 101.8 | 92.2 | 96.1 |
| Refrigerating Capacity Ratio | % (relative to R410A) | 140.4 | 117.9 | 91.5 | 86.7 | 81.9 | 70.1 | 137.2 | 114.5 |
| Condensation Glide | °C | 22.8 | 23.9 | 21.8 | 20.8 | 19.6 | 15.4 | 22.3 | 23.0 |

## 45%R1234yf,r=0.25

| Item | Unit | Example 195 | Example 196 | Comparative Example 179 | Example 197 | Example 198 | Example 199 | Comparative Example 180 | Comparative Example 181 |
|---|---|---|---|---|---|---|---|---|---|
| R32 | mass% | 9.0 | 9.0 | 9.0 | 11.0 | 11.0 | 11.0 | 11.0 | 15.0 |
| $CO_2$ | mass% | 13.0 | 11.0 | 6.0 | 34.0 | 24.0 | 10.0 | 4.0 | 30.0 |
| R125 | mass% | 8.3 | 8.8 | 10.0 | 2.5 | 5.0 | 8.5 | 10.0 | 2.5 |
| R134a | mass% | 24.7 | 26.2 | 30.0 | 7.5 | 15.0 | 25.5 | 30.0 | 7.5 |
| R1234yf | mass% | 45.0 | 45.0 | 45.0 | 45.0 | 45.0 | 45.0 | 45.0 | 45.0 |
| GWP | – | 706 | 745 | 842 | 271 | 466 | 738 | 855 | 298 |
| COP Ratio | % (relative to R410A) | 100.1 | 100.7 | 102.5 | 92.7 | 96.5 | 100.9 | 103.2 | 93.8 |
| Refrigerating Capacity Ratio | % (relative to R410A) | 83.5 | 78.8 | 67.3 | 134.0 | 111.2 | 78.2 | 64.7 | 127.6 |
| Condensation Glide | °C | 19.0 | 17.7 | 12.8 | 21.8 | 22.0 | 16.4 | 10.2 | 20.6 |

## 45%R1234yf,r=0.25

| Item | Unit | Comparative Example 182 | Example 200 | Comparative Example 183 | Comparative Example 184 |
|---|---|---|---|---|---|
| R32 | mass% | 15.0 | 15.0 | 25.0 | 25.0 |
| $CO_2$ | mass% | 20.0 | 10.0 | 20.0 | 10.0 |
| R125 | mass% | 5.0 | 7.5 | 2.5 | 5.0 |
| R134a | mass% | 15.0 | 22.5 | 7.5 | 15.0 |
| R1234yf | mass% | 45.0 | 45.0 | 45.0 | 45.0 |
| GWP | – | 493 | 687 | 366 | 560 |
| COP Ratio | % (relative to R410A) | 97.3 | 100.6 | 96.3 | 99.9 |
| Refrigerating Capacity Ratio | % (relative to R410A) | 104.6 | 81.4 | 111.6 | 89.1 |
| Condensation Glide | °C | 19.9 | 15.4 | 16.6 | 13.1 |

## 45%R1234yf,r=0.375

| Item | Unit | Example 201 | Example 202 | Example 203 | Example 204 | Example 205 | Comparative Example 185 | Example 206 | Example 207 |
|---|---|---|---|---|---|---|---|---|---|
| R32 | mass% | 7.0 | 7.0 | 7.0 | 7.0 | 7.0 | 7.0 | 9.0 | 9.0 |
| CO₂ | mass% | 38.0 | 28.0 | 21.0 | 19.0 | 17.0 | 8.0 | 36.0 | 26.0 |
| R125 | mass% | 3.8 | 7.5 | 10.1 | 10.9 | 11.6 | 15.0 | 3.8 | 7.5 |
| R134a | mass% | 6.2 | 12.5 | 16.9 | 18.1 | 19.4 | 25.0 | 6.2 | 12.5 |
| R1234yf | mass% | 45.0 | 45.0 | 45.0 | 45.0 | 45.0 | 45.0 | 45.0 | 45.0 |
| GWP | – | 271 | 491 | 644 | 690 | 733 | 932 | 285 | 504 |
| COP Ratio | % (relative to R410A) | 91.4 | 95.3 | 97.5 | 98.1 | 98.7 | 101.4 | 92.0 | 95.7 |
| Refrigerating Capacity Ratio | % (relative to R410A) | 140.8 | 118.7 | 102.2 | 97.5 | 92.7 | 71.6 | 137.6 | 115.3 |
| Condensation Glide | °C | 22.5 | 23.4 | 22.5 | 21.9 | 21.2 | 15.0 | 22.0 | 22.5 |

## 45%R1234yf,r=0.375

| Item | Unit | Example 208 | Example 209 | Comparative Example 186 | Example 210 | Example 211 | Example 212 | Comparative Example 187 | Comparative Example 188 |
|---|---|---|---|---|---|---|---|---|---|
| R32 | mass% | 9.0 | 9.0 | 9.0 | 11.0 | 11.0 | 11.0 | 11.0 | 15.0 |
| CO₂ | mass% | 17.0 | 15.0 | 6.0 | 34.0 | 24.0 | 14.0 | 4.0 | 30.0 |
| R125 | mass% | 10.9 | 11.6 | 15.0 | 3.8 | 7.5 | 11.3 | 15.0 | 3.8 |
| R134a | mass% | 18.1 | 19.4 | 25.0 | 6.2 | 12.5 | 18.7 | 25.0 | 6.2 |
| R1234yf | mass% | 45.0 | 45.0 | 45.0 | 45.0 | 45.0 | 45.0 | 45.0 | 45.0 |
| GWP | – | 703 | 746 | 945 | 298 | 518 | 739 | 959 | 325 |
| COP Ratio | % (relative to R410A) | 98.5 | 99.1 | 102.0 | 92.5 | 96.1 | 99.2 | 102.8 | 93.6 |
| Refrigerating Capacity Ratio | % (relative to R410A) | 94.2 | 89.5 | 68.8 | 134.4 | 112.0 | 88.7 | 66.1 | 128.0 |
| Condensation Glide | °C | 20.5 | 19.6 | 12.5 | 21.5 | 21.5 | 18.5 | 10.0 | 20.3 |

45%R1234yf, r=0.375

| Item | Unit | Example 213 | Comparative Example 189 | Comparative Example 190 | Comparative Example 191 |
|---|---|---|---|---|---|
| R32 | mass% | 15.0 | 15.0 | 25.0 | 25.0 |
| $CO_2$ | mass% | 20.0 | 10.0 | 20.0 | 10.0 |
| R125 | mass% | 7.5 | 11.3 | 3.8 | 7.5 |
| R134a | mass% | 12.5 | 18.7 | 6.2 | 12.5 |
| R1234yf | mass% | 45.0 | 45.0 | 45.0 | 45.0 |
| GWP | - | 545 | 766 | 392 | 612 |
| COP Ratio | % (relative to R410A) | 97.0 | 100.3 | 96.2 | 99.6 |
| Refrigerating Capacity Ratio | % (relative to R410A) | 105.5 | 82.7 | 112.1 | 90.0 |
| Condensation Glide | °C | 19.4 | 15.0 | 16.3 | 12.8 |

Table 30

45%R1234yf,r=0.5

| Item | Unit | Example 214 | Example 215 | Example 216 | Example 217 | Comparative Example 192 | Example 218 | Example 219 | Example 220 |
|---|---|---|---|---|---|---|---|---|---|
| R32 | mass% | 7.0 | 7.0 | 7.0 | 7.0 | 7.0 | 9.0 | 9.0 | 9.0 |
| CO₂ | mass% | 38.0 | 28.0 | 23.0 | 21.0 | 8.0 | 36.0 | 26.0 | 21.0 |
| R125 | mass% | 5.0 | 10.0 | 12.5 | 13.5 | 20.0 | 5.0 | 10.0 | 12.5 |
| R134a | mass% | 5.0 | 10.0 | 12.5 | 13.5 | 20.0 | 5.0 | 10.0 | 12.5 |
| R1234yf | mass% | 45.0 | 45.0 | 45.0 | 45.0 | 45.0 | 45.0 | 45.0 | 45.0 |
| GWP | - | 296 | 542 | 666 | 715 | 1035 | 309 | 556 | 679 |
| COP Ratio | % (relative to R410A) | 91.2 | 94.9 | 96.5 | 97.1 | 100.9 | 91.8 | 95.4 | 96.9 |
| Refrigerating Capacity Ratio | % (relative to R410A) | 141.2 | 119.5 | 108.0 | 103.3 | 73.1 | 138.0 | 116.1 | 104.7 |
| Condensation Glide | °C | 22.2 | 22.9 | 22.4 | 21.9 | 14.5 | 21.7 | 22.0 | 21.2 |

## 45%R1234yf,r=0.5

| Item | Unit | Example 221 | Comparative Example 193 | Example 222 | Example 223 | Example 224 | Comparative Example 194 | Comparative Example 195 | Example 225 |
|---|---|---|---|---|---|---|---|---|---|
| R32 | mass% | 9.0 | 9.0 | 11.0 | 11.0 | 11.0 | 11.0 | 15.0 | 15.0 |
| $CO_2$ | mass% | 19.0 | 6.0 | 34.0 | 24.0 | 18.0 | 4.0 | 30.0 | 20.0 |
| R125 | mass% | 13.5 | 20.0 | 5.0 | 10.0 | 13.0 | 20.0 | 5.0 | 10.0 |
| R134a | mass% | 13.5 | 20.0 | 5.0 | 10.0 | 13.0 | 20.0 | 5.0 | 10.0 |
| R1234yf | mass% | 45.0 | 45.0 | 45.0 | 45.0 | 45.0 | 45.0 | 45.0 | 45.0 |
| GWP | – | 728 | 1049 | 323 | 569 | 717 | 1062 | 350 | 596 |
| COP Ratio | % (relative to R410A) | 97.5 | 101.6 | 92.3 | 95.8 | 97.6 | 102.3 | 93.4 | 96.7 |
| Refrigerating Capacity Ratio | % (relative to R410A) | 100.1 | 70.3 | 134.8 | 112.9 | 99.1 | 67.6 | 128.4 | 106.4 |
| Condensation Glide | °C | 20.7 | 12.2 | 21.2 | 21.1 | 19.7 | 9.7 | 20.0 | 19.0 |

## 45%R1234yf,r=0.5

| Item | Unit | Comparative Example 196 | Comparative Example 197 | Comparative Example 198 |
|---|---|---|---|---|
| R32 | mass% | 15.0 | 25.0 | 25.0 |
| $CO_2$ | mass% | 10.0 | 20.0 | 10.0 |
| R125 | mass% | 15.0 | 5.0 | 10.0 |
| R134a | mass% | 15.0 | 5.0 | 10.0 |
| R1234yf | mass% | 45.0 | 45.0 | 45.0 |
| GWP | – | 843 | 417 | 664 |
| COP Ratio | % (relative to R410A) | 99.9 | 96.0 | 99.4 |
| Refrigerating Capacity Ratio | % (relative to R410A) | 83.9 | 112.6 | 90.9 |
| Condensation Glide | °C | 14.6 | 16.1 | 12.4 |

45%R1234yf,r=0.75

| Item | Unit | Example 226 | Example 227 | Comparative Example 199 | Comparative Example 200 | Example 228 | Example 229 | Example 230 | Example 231 |
|---|---|---|---|---|---|---|---|---|---|
| R32 | mass% | 7.0 | 7.0 | 7.0 | 7.0 | 9.0 | 9.0 | 15.0 | 15.0 |
| $CO_2$ | mass% | 38.0 | 26.0 | 18.0 | 8.0 | 36.0 | 23.0 | 30.0 | 20.0 |
| R125 | mass% | 7.5 | 16.5 | 22.5 | 30.0 | 7.5 | 17.3 | 7.5 | 15.0 |
| R134a | mass% | 2.5 | 5.5 | 7.5 | 10.0 | 2.5 | 5.7 | 2.5 | 5.0 |
| R1234yf | mass% | 45.0 | 45.0 | 45.0 | 45.0 | 45.0 | 45.0 | 45.0 | 45.0 |
| GWP | – | 348 | 705 | 944 | 1242 | 361 | 750 | 402 | 700 |
| COP Ratio | % (relative to R410A) | 90.8 | 94.8 | 97.0 | 99.9 | 91.4 | 95.5 | 93.0 | 96.1 |
| Refrigerating Capacity Ratio | % (relative to R410A) | 142.0 | 116.7 | 98.7 | 76.2 | 138.8 | 111.2 | 129.3 | 108.1 |
| Condensation Glide | °C | 21.7 | 21.7 | 19.8 | 13.6 | 21.2 | 20.6 | 19.5 | 18.1 |

45%R1234yf, r=0.75

| Item | Unit | Comparative Example 201 | Comparative Example 202 | Comparative Example 203 |
|---|---|---|---|---|
| R32 | mass% | 15.0 | 25.0 | 25.0 |
| $CO_2$ | mass% | 10.0 | 20.0 | 10.0 |
| R125 | mass% | 22.5 | 7.5 | 15.0 |
| R134a | mass% | 7.5 | 2.5 | 5.0 |
| R1234yf | mass% | 45.0 | 45.0 | 45.0 |
| GWP | - | 998 | 469 | 767 |
| COP Ratio | % (relative to R410A) | 99.1 | 95.7 | 98.8 |
| Refrigerating Capacity Ratio | % (relative to R410A) | 86.4 | 113.5 | 92.7 |
| Condensation Glide | °C | 13.6 | 15.6 | 11.8 |

How to determine the approximate curves of point A, point Br, point Cr, point Dr, point Or, point Fr, and point Pr when x=R1234yf

Point A

The approximate expression of the coordinates of point A as a function of the proportion (x) of R1234yf was determined based on the four formulations of point A revealed above by using the least-squares method as described below. Specifically, the coordinates of point A were found to be (a,b,c) =(-0.6902x+43.307, 100-a-x, 0.0).

Table 31

| a=R32 | 15.0 | 13.1 | 11.2 | 8.8 |
|---|---|---|---|---|
| b=$CO_2$ | 44.0 | 43.1 | 42.3 | 41.2 |
| c=R125+R134a | 0.0 | 0.0 | 0.0 | 0.0 |
| x=R1234yf | 41.0 | 43.8 | 46.5 | 50.0 |
| x=R1234yf<br>a=R32<br>Approximate Expression | -0.6902x+43.307 | | | |
| b=$CO_2$ Approximate Expression | 100-a-x | | | |

<u>Point Br</u>

Additionally, the approximate expression of the coordinates of point $B_r$ as r and a function of the proportion (x) of R1234yf was determined based on the formulations of point $B_r$ revealed above by using the least-squares method as described below.

Table 32

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Br | a=R32 | 19.9 | 22.1 | 24.1 | 17.9 | 20.0 | 21.9 | 24.1 | 27.4 | 30.2 | 21.9 | 25.2 | 27.9 |
| | b=$CO_2$ | 0.0 | 0.0 | 0.0 | 0.0 | 0.0 | 0.0 | 0.0 | 0.0 | 0.0 | 0.0 | 0.0 | 0.0 |
| | c=R125+R134a | 39.1 | 36.9 | 34.9 | 38.3 | 36.2 | 34.3 | 34.9 | 31.6 | 28.8 | 34.3 | 31.0 | 28.3 |
| | x=R1234yf | 41.0 | 41.0 | 41.0 | 43.8 | 43.8 | 43.8 | 41.0 | 41.0 | 41.0 | 43.8 | 43.8 | 43.8 |
| Approximate Expression of Point Br | a=R32 | $-6.4r2+21.6r+14.9$ | | | $-6.4r2+20.8r+13.1$ | | | $-4.0r2+18.2r+16$ | | | $-4.8r2+19.2r+13.5$ | | |
| | b=$CO_2$ | 0 | | | 0 | | | 0 | | | 0 | | |
| | c=R125+R134a | 100-a-x | | | 100-a-x | | | 100-a-x | | | 100-a-x | | |
| Approximate Expression of a, b, c indicated by r and x | x=R1234yf | 41.0 | | | 43.8 | | | 41.0 | | | 43.8 | | |
| | e (Quadric Coefficient) | -6.4 | | | -6.4 | | | -4.0 | | | -4.8 | | |
| | f (Linear Coefficient) | 21.6 | | | 20.8 | | | 18.2 | | | 19.2 | | |
| | g (Coefficient) | 14.9 | | | 13.1 | | | 16.0 | | | 13.5 | | |
| | e Approximate Expression | -6.4 | | | | | | $-0.2857x+7.7143$ | | | | | |
| | f Approximate Expression | $-0.2857x+33.314$ | | | | | | $0.3571x+3.5571$ | | | | | |
| | g Approximate Expression | $-0.6429x+41.257$ | | | | | | $-0.8929x+52.607$ | | | | | |
| | a=R32 Approximate Expression | $-6.4r2+(-0.2857x+33.314)r+(-0.6429x+41.257)$ | | | | | | $(-0.2857x+7.7143)r2+(0.3571x-3.5571)r+(-0.8929x+52.607)$ | | | | | |
| | b=$CO_2$ Approximate Expression | 0.0 | | | | | | 0.0 | | | | | |
| | c=(R125+R134a) Approximate Expression | 100-a-x | | | | | | 100-a-x | | | | | |

Table 33

| Item | | r=R125/(R125+R134a) | | | | | | | | | | | |
|---|---|---|---|---|---|---|---|---|---|---|---|---|---|
| | | 0.250 | 0.375 | 0.50C | 0.250 | 0.375 | 0.50C | 0.500 | 0.75C | 1.000 | 0.500 | 0.750 | 1.000 |
| Point Br | a=R32 | 17.9 | 20.0 | 21.9 | 15.9 | 18.0 | 19.9 | 21.9 | 25.2 | 27.9 | 19.9 | 23.1 | 25.8 |
| | b=CO₂ | 0.0 | 0.0 | 0.C | 0.0 | 0.0 | 0.C | 0.0 | 0.C | 0.0 | 0.0 | 0.0 | 0.0 |
| | c=R125+R134a | 38.3 | 36.2 | 34.3 | 37.6 | 35.5 | 33.6 | 34.3 | 31.C | 28.3 | 33.6 | 30.4 | 27.7 |
| | x=R1234yf | 43.8 | 43.8 | 43.8 | 46.5 | 46.5 | 46.5 | 43.8 | 43.8 | 43.8 | 46.5 | 46.5 | 46.5 |
| Approximate Expression of Point Br | a=R32 | $-6.4r2+20.8r+13.1$ | | | $-6.4r2+20.8r+11.1$ | | | $-4.8r2+19.2r+13.5$ | | | $-4.0r2+17.8r+12.0$ | | |
| | b=CO₂ | 0 | | | 0 | | | 0 | | | 0 | | |
| | c=R125+R134a | 100-a-x | | | 100-a-x | | | 100-a-x | | | 100-a-x | | |
| Approximate Expression of a, b, c indicated by r and x | x=R1234yf | 43.8 | | | 46.5 | | | 43.8 | | | 46.5 | | |
| | e (Quadric Coefficient) | $-6.4$ | | | $-6.4$ | | | $-4.8$ | | | $-4.0$ | | |
| | f (Linear Coefficient) | 20.8 | | | 20.8 | | | 19.2 | | | 17.8 | | |
| | g (Coefficient) | 13.1 | | | 11.1 | | | 13.5 | | | 12.0 | | |
| | e Approximate Expression | $-6.4$ | | | | | | $0.2963x-17.778$ | | | | | |
| | f Approximate Expression | 20.8 | | | | | | $-0.5185x+41.911$ | | | | | |
| | g Approximate Expression | $-0.7407x+45.544$ | | | | | | $-0.5556x+37.833$ | | | | | |
| | a=R32 Approximate Expression | $-6.4r2+20.8r+(-0.7407x+45.544)$ | | | | | | $(0.2963x-17.778)r2+(-0.5185x+41.911)r+(-0.5556x+37.833)$ | | | | | |
| | b=CO₂ Approximate Expression | 0.0 | | | | | | 0.0 | | | | | |
| | c=(R125+R134a) Approximate Expression | 100-a-x | | | | | | 100-a-x | | | | | |

EP 3 960 832 A1

Table 34

| Item | | r = R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Br | a=R32 | 15.9 | 18.0 | 19.9 | 13.4 | 15.4 | 17.3 | 19.9 | 23.1 | 25.8 | 17.3 | 20.4 | 23.0 |
| | b=CO₂ | 0.0 | 0.0 | 0.0 | 0.0 | 0.0 | 0.0 | 0.0 | 0.0 | 0.0 | 0.0 | 0.0 | 0.0 |
| | c=R125+R134a | 37.6 | 35.5 | 33.6 | 36.6 | 34.6 | 32.7 | 33.6 | 30.4 | 27.7 | 32.7 | 29.6 | 27.0 |
| | x=R1234yf | 46.5 | 46.5 | 46.5 | 50.0 | 50.0 | 50.0 | 46.5 | 46.5 | 46.5 | 50.0 | 50.0 | 50.0 |
| Approximate Expression of Point Br | a=R32 | $-6.4r^2+20.8r+11.1$ | | | $-3.2r^2+18.0r+9.1$ | | | $-4.0r^2+17.8r+12.0$ | | | $-4.0r^2+17.4r+9.6$ | | |
| | b=CO₂ | 0 | | | 0 | | | 0 | | | 0 | | |
| | c=R125+R134a | 100-a-x | | | 100-a-x | | | 100-a-x | | | 100-a-x | | |
| | x=R1234yf | 46.5 | | | 50.0 | | | 46.5 | | | 50.0 | | |
| | e (Quadric Coefficient) | -6.4 | | | -3.2 | | | -4.0 | | | -4.0 | | |
| | f (Linear Coefficient) | 20.8 | | | 18.0 | | | 17.8 | | | 17.4 | | |
| | g (Coefficient) | 11.1 | | | 9.1 | | | 12.0 | | | 9.6 | | |
| Approximate Expression of a, b, c indicated by r and x | e Approximate Expression | $0.9143x-48.914$ | | | | | | $-4.0$ | | | | | |
| | f Approximate Expression | $-0.8x+58.0$ | | | | | | $-0.1143x+23.114$ | | | | | |
| | g Approximate Expression | $-0.5714x+37.671$ | | | | | | $-0.6857x+43.886$ | | | | | |
| | a=R32 Approximate Expression | $(0.9143x-48.914)r^2+(-0.8x+58)r+(-0.5714x+37.671)$ | | | | | | $-4.0r^2+(-0.1143x+23.114)r+(-0.6857x+43.886)$ | | | | | |
| | b=CO₂ Approximate Expression | 0.0 | | | | | | 0.0 | | | | | |
| | c=(R125+R134a) Approximate Expression | 100-a-x | | | | | | 100-a-x | | | | | |

How to determine the approximate curve of point C$_{r=0.25 \text{ to } 1.0}$ and point D$_{r=0.25 \text{ to } 1.0}$

Additionally, the approximate expressions of the coordinates of point C$_r$ and point D$_r$ as r and a function of the proportion (x) of R1234yf were determined based on the formulations of point C$_r$ and point D$_r$ revealed above by using the least-squares method as described below.

Table 35

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Cr | a=R32 | 31.6 | 36.2 | 39.5 | 27.3 | 32.1 | 35.6 | 39.5 | 43.9 | 46.7 | 35.6 | 40.3 | 43.2 |
| | b=$CO_2$ | 0.0 | 0.0 | 0.0 | 0.0 | 0.0 | 0.0 | 0.0 | 0.0 | 0.0 | 0.0 | 0.0 | 0.0 |
| | c=R125+R134a | 27.4 | 22.8 | 19.5 | 28.9 | 24.1 | 20.6 | 19.5 | 15.1 | 12.3 | 20.6 | 15.9 | 13.0 |
| | x=R1234yf | 41.0 | 41.0 | 41.0 | 43.8 | 43.8 | 43.8 | 41.0 | 41.0 | 41.0 | 43.8 | 43.8 | 43.8 |
| Approximate Expression of Point Cr | a=R32 | -41.6r2+62.8r+18.5 | | | -41.6r2+64.4r+13.8 | | | -12.8r2+33.6r+25.9 | | | -14.4r2+36.8r+20.8 | | |
| | b=$CO_2$ | 0 | | | 0 | | | 0 | | | 0 | | |
| | c=R125+R134a | 100-a-x | | | 100-a-x | | | 100-a-x | | | 100-a-x | | |
| Approximate Expression of a, b, c indicated by r and x | x=R1234yf | 41.0 | | | 43.8 | | | 41.0 | | | 43.8 | | |
| | e (Quadric Coefficient) | -41.6 | | | -41.6 | | | -12.8 | | | -14.4 | | |
| | f (Linear Coefficient) | 62.8 | | | 64.4 | | | 33.6 | | | 36.8 | | |
| | g (Coefficient) | 18.5 | | | 13.8 | | | 25.9 | | | 20.8 | | |
| | e Approximate Expression | -41.6 | | | | | | -0.5714x+10.629 | | | | | |
| | f Approximate Expression | 0.5714x+39.371 | | | | | | 1.1429x-13.257 | | | | | |
| | g Approximate Expression | -1.6786x+87.321 | | | | | | -1.8214x+100.58 | | | | | |
| | a=R32 Approximate Expression | -41.6r2+(0.5747x+39.371)r+(-1.6786x+87.321) | | | | | | (-0.5714x+10.629)r2+(1.1429x-13.257)r+(-1.8214x+100.58) | | | | | |
| | b=$CO_2$ Approximate Expression | 0.0 | | | | | | 0.0 | | | | | |
| | c=(R125+R134a) Approximate Expression | 100-a-x | | | | | | 100-a-x | | | | | |

Table 36

| Item | | r=R125/(R125+R134a) | | | | | | | | | | | |
|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Cr | a=R32 | 27.3 | 32.1 | 35.6 | 23.1 | 28.3 | 31.9 | 35.6 | 40.3 | 43.2 | 31.9 | 36.8 | 39.8 |
| | b=$CO_2$ | 0.0 | 0.0 | 0.0 | 0.0 | 0.0 | 0.0 | 0.0 | 0.0 | 0.0 | 0.0 | 0.0 | 0.0 |
| | c=R125+R134a | 28.9 | 24.1 | 20.6 | 30.4 | 25.2 | 21.6 | 20.6 | 15.9 | 13.0 | 21.6 | 16.7 | 13.7 |
| | x=R1234yf | 43.8 | 43.8 | 43.8 | 46.5 | 46.5 | 46.5 | 43.8 | 43.8 | 43.8 | 46.5 | 46.5 | 46.5 |
| Approximate Expression of Point Cr | a=R32 | $-41.6r2+64.4r+13.8$ | | | $-51.2r2+73.6r+7.9$ | | | $-14.4r2+36.8r+20.8$ | | | $-15.2r2+38.6r+16.4$ | | |
| | b=$CO_2$ | 0 | | | 0 | | | 0 | | | 0 | | |
| | c=R125+R134a | 100-a-x | | | 100-a-x | | | 100-a-x | | | 100-a-x | | |
| Approximate Expression of a, b, c indicated by r and x | x=R1234yf | 43.8 | | | 46.5 | | | 43.8 | | | 46.5 | | |
| | e (Quadric Coefficient) | -41.6 | | | -51.2 | | | -14.4 | | | -15.2 | | |
| | f (Linear Coefficient) | 64.4 | | | 73.6 | | | 36.8 | | | 38.6 | | |
| | g (Coefficient) | 13.8 | | | 7.9 | | | 20.8 | | | 16.4 | | |
| | e Approximate Expression | $-3.5556x+114.13$ | | | | | | $-0.2963x-1.4222$ | | | | | |
| | f Approximate Expression | $3.4074x-84.844$ | | | | | | $0.6667x+7.6$ | | | | | |
| | g Approximate Expression | $-2.1852x+109.51$ | | | | | | $-1.6296x+92.178$ | | | | | |
| | a=R32 Approximate Expression | $(-3.5556x+114.13)r2+(3.4074x-84.844)+(-2.1852x+109.51)$ | | | | | | $(-0.2963x-1.4222)r2+(0.6667x+7.6)r+(-1.6296x+92.178)$ | | | | | |
| | b=$CO_2$ Approximate Expression | 0.0 | | | | | | 0.0 | | | | | |
| | c=(R125+R134a) Approximate Expression | 100-a-x | | | | | | 100-a-x | | | | | |

Table 37

| Item | | r=R125/(R125+R134a) | | | | | | | | | | | |
|---|---|---|---|---|---|---|---|---|---|---|---|---|---|
| | | 0.250 | 0.375 | 0.50C | 0.250 | 0.375 | 0.50C | 0.500 | 0.75C | 1.000 | 0.500 | 0.750 | 1.000 |
| Point Cr | a=R32 | 23.1 | 28.3 | 31.9 | 17.9 | 23.3 | 27.2 | 31.9 | 36.8 | 39.8 | 27.2 | 32.3 | 35.5 |
| | b=CC₂ | 0.0 | 0.0 | 0.C | 0.0 | 0.0 | 0.C | 0.0 | 0.C | 0.0 | 0.0 | 0.0 | 0.0 |
| | c=R125+R134a | 30.4 | 25.2 | 21.6 | 32.1 | 26.7 | 22.8 | 21.6 | 16.7 | 13.7 | 22.8 | 17.7 | 14.5 |
| | x=R1234yf | 46.5 | 46.5 | 46.5 | 50.0 | 50.0 | 50.C | 46.5 | 46.5 | 46.5 | 50.0 | 50.0 | 50.0 |
| Approximate Expression of Point Cr | a=R32 | -51.2r2+73.6r+7.9 | | | -48.0r2+73.2r+2.6 | | | -15.2r2+38.6r+16.4 | | | -15.2r2+39.4r+11.3 | | |
| | b=CC₂ | 0 | | | 0 | | | 0 | | | 0 | | |
| | c=R125+R134a | 100-a-x | | | 100-a-x | | | 100-a-x | | | 100-a-x | | |
| Approximate Expression of a, b, c indicated by r and x | x=R1234yf | 46.5 | | | 50.0 | | | 46.5 | | | 50.0 | | |
| | e (Quadric Coefficient) | -51.2 | | | -48.0 | | | -15.2 | | | -15.2 | | |
| | f (Linear Coefficient) | 73.6 | | | 73.2 | | | 38.6 | | | 39.4 | | |
| | g (Coefficient) | 7.9 | | | 2.6 | | | 16.4 | | | 11.3 | | |
| | e Approximate Expression | 0.9143x-93.714 | | | | | | -15.2 | | | | | |
| | f Approximate Expression | -0.1143x+78.914 | | | | | | 0.2286x+27.971 | | | | | |
| | g Approximate Expression | -1.5143x+78.314 | | | | | | -1.4571x+84.157 | | | | | |
| | a=R32 Approximate Expression | (0.9143x-93.714)r2+(-0.1143x+78.314)+(-1.5143x+78.314) | | | | | | -15.2r2+(0.2286x+27.971)r+(-1.4571x+84.157) | | | | | |
| | b=CC₂ Approximate Expression | 0.0 | | | | | | 0.0 | | | | | |
| | c=(R125+R134a) Approximate Expression | 100-a-x | | | | | | 100-a-x | | | | | |

Table 38

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Dr | a=R32 | 0.0 | 0.0 | 0.0 | 0.0 | 0.0 | 0.0 | 0.0 | 0.0 | 0.0 | 0.0 | 0.0 | 0.0 |
| | b=CO₂ | 20.6 | 25.1 | 28.7 | 17.8 | 22.3 | 25.9 | 28.7 | 33.9 | 37.7 | 25.9 | 31.2 | 34.9 |
| | c=R125+R134a | 38.4 | 33.9 | 30.3 | 38.4 | 33.9 | 30.3 | 30.3 | 25.1 | 21.3 | 30.3 | 25.0 | 21.3 |
| | x=R1234yf | 41.0 | 41.0 | 41.0 | 43.8 | 43.8 | 43.8 | 41.0 | 41.0 | 41.0 | 43.8 | 43.8 | 43.8 |
| Approximate Expression of Point Dr | a=R32 | 0.0 | | | 0.0 | | | 0.0 | | | 0.0 | | |
| | b=CO₂ | -28.8r2+54.0r+8.9 | | | -28.8r2+54.0r+6.1 | | | -11.2x2+34.8x+14.1 | | | -12.8r2+37.2r+10.5 | | |
| | c=R125+R134a | 100-b-x | | | 100-b-x | | | 100-b-x | | | 100-b-x | | |
| Approximate Expression of a, b, c indicated by r and x | x=R1234yf | 41.0 | | | 43.8 | | | 41.0 | | | 43.8 | | |
| | e (Quadric Coefficient) | -28.8 | | | -28.8 | | | -11.2 | | | -12.8 | | |
| | f (Linear Coefficient) | 54.0 | | | 54.0 | | | 34.8 | | | 37.2 | | |
| | g (Coefficient) | 8.9 | | | 6.1 | | | 14.1 | | | 10.5 | | |
| | e Approximate Expression | -28.8 | | | | | | -0.5714x+12.229 | | | | | |
| | f Approximate Expression | 54.0 | | | | | | 0.8571x-0.3429 | | | | | |
| | g Approximate Expression | -x+49.9 | | | | | | -1.2857x+66.814 | | | | | |
| | a=R32 Approximate Expression | 0.0 | | | | | | 0.0 | | | | | |
| | b=CO₂ Approximate Expression | -28.8r2+54.0r+(-x+49.9) | | | | | | (-0.5714x+12.229)r2+(0.8571x-0.3429)r +(-1.2857x+66.814) | | | | | |
| | c=(R125+R134a) Approximate Expression | 100-b-x | | | | | | 100-b-x | | | | | |

Table 39

| Item | | r=R125/(R125+R134a) | | | | | | | | | | | |
|---|---|---|---|---|---|---|---|---|---|---|---|---|
| | | 0.250 | 0.375 | 0.500 | 0.250 | 0.375 | 0.500 | 0.500 | 0.750 | 1.00C | 0.500 | 0.750 | 1.000 |
| Point Dr | a=R32 | 0.0 | 0.C | 0.0 | 0.0 | 0.0 | 0.0 | 0.0 | 0.0 | 0.C | 0.0 | 0.0 | 0.0 |
| | b=CC$_2$ | 17.8 | 22.3 | 25.9 | 15.1 | 19.6 | 23.2 | 25.9 | 31.2 | 34.9 | 23.2 | 28.5 | 32.2 |
| | c=R125+R134a | 38.4 | 33.9 | 30.3 | 38.4 | 33.9 | 30.3 | 30.3 | 25.0 | 21.3 | 30.3 | 25.0 | 21.3 |
| | x=R1234yf | 43.8 | 43.8 | 43.8 | 46.5 | 46.5 | 46.5 | 43.8 | 43.8 | 43.8 | 46.5 | 46.5 | 46.5 |
| Approximate Expression of Point Dr | a=R32 | 0.0 | | | 0.0 | | | 0.0 | | | 0.0 | | |
| | b=CC$_2$ | -28.8r2+54.0r+6.1 | | | -28.8r2+54r+3.4 | | | -12.8r2+37.2r+10.5 | | | -12.8r2+37.2r+7.8 | | |
| | c=R125+R134a | 100-b-x | | | 100-b-x | | | 100-b-x | | | 100-b-x | | |
| Approximate Expression of a, b, c indicated by r and x | x=R1234yf | 43.8 | | | 46.5 | | | 43.8 | | | 46.5 | | |
| | e (Quadric Coefficient) | -28.8 | | | -28.8 | | | -12.8 | | | -12.8 | | |
| | f (Linear Coefficient) | 54.0 | | | 54.0 | | | 37.2 | | | 37.2 | | |
| | g (Coefficient) | 6.1 | | | 3.4 | | | 10.5 | | | 7.8 | | |
| | e Approximate Expression | -28.8 | | | | | | -12.8 | | | | | |
| | f Approximate Expression | 54.0 | | | | | | 37.2 | | | | | |
| | g Approximate Expression | -x+49.9 | | | | | | -x+54.3 | | | | | |
| | a=R32 Approximate Expression | 0.0 | | | | | | 0.0 | | | | | |
| | b=CC$_2$ Approximate Expression | -28.8r2+54.0r+(-x+49.9) | | | | | | -12.8r2+37.2r+(-x+54.3) | | | | | |
| | c=(R125+R134a) Approximate Expression | 100-b-x | | | | | | 100-b-x | | | | | |

Table 40

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Dr | a=R32 | 0.0 | 0.0 | 0.0 | 0.0 | 0.0 | 0.0 | 0.0 | 0.0 | 0.0 | 0.0 | 0.0 | 0.0 |
| | b=CO$_2$ | 15.1 | 19.6 | 23.2 | 11.6 | 16.1 | 19.8 | 23.2 | 28.5 | 32.2 | 19.8 | 25.0 | 28.7 |
| | c=R125+R134a | 38.4 | 33.9 | 30.3 | 38.4 | 33.9 | 30.2 | 30.3 | 25.0 | 21.3 | 30.2 | 25.0 | 21.3 |
| | x=R1234yf | 46.5 | 46.5 | 46.5 | 50.0 | 50.0 | 50.0 | 46.5 | 46.5 | 46.5 | 50.0 | 50.0 | 50.0 |
| Approximate Expression of Point Dr | a=R32 | 0.0 | | | 0.0 | | | 0.0 | | | 0.0 | | |
| | b=CO$_2$ | -28.8r2+54r+3.4 | | | -25.6r2+52.0r+0.2 | | | -12.8r2+37.2r+7.8 | | | -12.0r2+35.8r+4.9 | | |
| | c=R125+R134a | 100-b-x | | | 100-b-x | | | 100-b-x | | | 100-b-x | | |
| Approximate Expression of a', b', c indicated by r and x | x=R1234yf | 46.5 | | | 50.0 | | | 46.5 | | | 50.0 | | |
| | e (Quadric Coefficient) | -28.8 | | | -25.6 | | | -12.8 | | | -12.0 | | |
| | f (Linear Coefficient) | 54.0 | | | 52.0 | | | 37.2 | | | 35.8 | | |
| | g (Coefficient) | 3.4 | | | 0.2 | | | 7.8 | | | 4.9 | | |
| | e Approximate Expression | 0.9143x-71.314 | | | | | | 0.2286x-23.429 | | | | | |
| | f Approximate Expression | -0.5714x+80.571 | | | | | | -0.4x+55.8 | | | | | |
| | g Approximate Expression | -0.9143x+45.914 | | | | | | -0.8286x+46.329 | | | | | |
| | a=R32 Approximate Expression | 0.0 | | | | | | 0.0 | | | | | |
| | b=CO$_2$ Approximate Expression | (0.9143x-71.314)r2+(-0.5714x+80.571)r+ (-0.9143x+45.914) | | | | | | (0.2286x-23.429)r2+(-0.4x+55.8)r+ (-0.8286x+46.329) | | | | | |
| | c=(R125+R134a) Approximate Expression | 100-b-x | | | | | | 100-b-x | | | | | |

How to determine the approximate curve of point Or

Each point Or, which is the intersection of line segment ABr and line segment CrDr, is shown in the Examples and Comparative Examples. The approximate expression of the coordinates of point $O_r$ as r and a function of the proportion (x) of R1234yf was determined based on the formulations of Or by using the least-squares method as described below.

Table 41

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Or | a=R32 | 19.0 | 20.3 | 21.4 | 17.1 | 18.5 | 19.5 | 21.4 | 22.8 | 23.8 | 19.5 | 21.0 | 22.0 |
| | b=$CO_2$ | 8.2 | 11.0 | 13.2 | 6.7 | 9.4 | 11.7 | 13.2 | 16.3 | 18.5 | 11.7 | 14.9 | 17.1 |
| | c=R125+R134a | 31.8 | 27.7 | 24.4 | 32.4 | 28.3 | 25.0 | 24.4 | 19.9 | 16.7 | 25.0 | 20.3 | 17.1 |
| | x=R1234yf | 41.0 | 41.0 | 41.0 | 43.8 | 43.8 | 43.8 | 41.0 | 41.0 | 41.0 | 43.8 | 43.8 | 43.8 |
| Approximate Expression of Point Or | a=R32 | $-6.4r2+14.4r+15.8$ | | | $-12.8r2+19.2r+13.1$ | | | $-3.2r2+9.6r+17.4$ | | | $-4.0r2+11.0r+15.0$ | | |
| | b=$CO_2$ | $-19.2r2+34.4r+0.8$ | | | $-12.8r2+29.6r+0.1$ | | | $-7.2r2+21.4r+4.3$ | | | $-8.0r2+22.8r+2.3$ | | |
| | c=R125+R134a | 100-a-b-x | | | 100-a-b-x | | | 100-a-b-x | | | 100-a-b-x | | |
| Calculation of a — Approximate Expression Indicated by r and x | x=R1234yf | 41.0 | | | 43.8 | | | 41.0 | | | 43.8 | | |
| | e (Quadric Coefficient) | -6.4 | | | -12.8 | | | -3.2 | | | -4.0 | | |
| | f (Linear Coefficient) | 14.4 | | | 19.2 | | | 9.6 | | | 11.0 | | |
| | g (Coefficient) | 15.8 | | | 13.1 | | | 17.4 | | | 15.0 | | |
| | e Approximate Expression | $-2.2857x+87.314$ | | | | | | $-0.2857x+8.5143$ | | | | | |
| | f Approximate Expression | $1.7143x-55.886$ | | | | | | $0.5x-10.9$ | | | | | |
| | g Approximate Expression | $-0.9643x+55.336$ | | | | | | $-0.8571x+52.543$ | | | | | |
| Calculation of b — Approximate Expression Indicated by r and x | x=R1234yf | 41.0 | | | 43.8 | | | 41.0 | | | 43.8 | | |
| | e (Quadric Coefficient) | -19.2 | | | -12.8 | | | -7.2 | | | -8.0 | | |
| | f (Linear Coefficient) | 34.4 | | | 29.6 | | | 21.4 | | | 22.8 | | |
| | g (Coefficient) | 0.8 | | | 0.1 | | | 4.3 | | | 2.3 | | |
| | e Approximate Expression | $2.2857x-112.91$ | | | | | | $-0.2857x+4.5143$ | | | | | |
| | f Approximate Expression | $-1.7143x+104.69$ | | | | | | $0.5x+0.9$ | | | | | |
| | g Approximate Expression | $-0.25x+11.05$ | | | | | | $-0.7143x+33.586$ | | | | | |
| O(r,x) Approximate Expression | a=R32 Approximate Expression | $(-2.2857x+87.314)r2+(1.7143x-55.886)r+(-0.9643x+55.336)$ | | | | | | $(-0.2857x+8.5143)r2+(0.5x-10.9)r+(-0.8571x+52.543)$ | | | | | |
| | b=$CO_2$ Approximate Expression c | $(2.2857x-112.91)r2+(-1.7143x+104.69)r+(-0.25x+11.05)$ | | | | | | $(-0.2857x+4.5143)r2+(0.5x+0.9)r+(-0.7143x+33.586)$ | | | | | |
| | c=(R125+R134a) Approximate Expression | 100-a-b-x | | | | | | 100-a-b-x | | | | | |

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Or | a=R32 | 17.1 | 18.5 | 19.5 | 15.3 | 16.7 | 17.8 | 19.5 | 21.0 | 22.0 | 17.8 | 19.3 | 20.4 |
| | b=$CO_2$ | 6.7 | 9.4 | 11.7 | 5.1 | 8.0 | 10.3 | 11.7 | 14.9 | 17.1 | 10.3 | 13.5 | 15.7 |
| | c=R125+R134a | 32.4 | 28.3 | 25.0 | 33.1 | 28.8 | 25.4 | 25.0 | 20.3 | 17.1 | 25.4 | 20.7 | 17.4 |
| | x=R1234yf | 43.8 | 43.8 | 43.8 | 46.5 | 46.5 | 46.5 | 43.8 | 43.8 | 43.8 | 46.5 | 46.5 | 46.5 |
| Approximate Expression of Point Or | a=R32 | $-12.8r2+19.2r+13.1$ | | | $-9.6r2+17.2r+11.6$ | | | $-4.0r2+11.0r+15.0$ | | | $-3.2r2+10.0r+13.6$ | | |
| | b=$CO_2$ | $-12.8r2+29.6r+0.1$ | | | $-19.2r2+35.2r-2.5$ | | | $-8.0r2+22.8r+2.3$ | | | $-8.0r2+22.8r+0.9$ | | |
| | c=R125+R134a | 100-a-b-x | | | 100-a-b-x | | | 100-a-b-x | | | 100-a-b-x | | |
| Calculation of a Approximate Expression Indicated by r and x | x=R1234yf | 43.8 | | | 46.5 | | | 43.8 | | | 46.5 | | |
| | e (Quadric Coefficient) | -12.8 | | | -9.6 | | | -4.0 | | | -3.2 | | |
| | f (Linear Coefficient) | 19.2 | | | 17.2 | | | 11.0 | | | 10.0 | | |
| | g (Coefficient) | 13.1 | | | 11.6 | | | 15.0 | | | 13.6 | | |
| | e Approximate Expression | 1.1852x-64.711 | | | | | | 0.2963x-16.978 | | | | | |
| | f Approximate Expression | -0.7407x+51.644 | | | | | | -0.3704x+27.222 | | | | | |
| | g Approximate Expression | -0.5556x+37.433 | | | | | | -0.5185x+37.711 | | | | | |
| Calculation of b Approximate Expression Indicated by r and x | x=R1234yf | 43.8 | | | 46.5 | | | 43.8 | | | 46.5 | | |
| | e (Quadric Coefficient) | -12.8 | | | -19.2 | | | -8.0 | | | -8.0 | | |
| | f (Linear Coefficient) | 29.6 | | | 35.2 | | | 22.8 | | | 22.8 | | |
| | g (Coefficient) | 0.1 | | | -2.5 | | | 2.3 | | | 0.9 | | |
| | e Approximate Expression | -2.3704x+91.022 | | | | | | -8.0 | | | | | |
| | f Approximate Expression | 2.0741x-61.244 | | | | | | 22.8 | | | | | |
| | g Approximate Expression | -0.963x+42.278 | | | | | | -0.5185x+25.011 | | | | | |
| O(r,x) Approximate Expression | a=R32 Approximate Expression | (1.1852x-64.711)r2+(-0.7407x+51.644)r +(-0.5556x+37.433) | | | | | | (0.2963x-16.978)r2+(-0.3704x+27.222)r +(-0.5185x+37.711) | | | | | |
| | b=$CO_2$ Approximate Expression c | (-2.3704x+91.022)r2+(2.0741x-61.244)r +(-0.963x+42.278) | | | | | | -8.0r2+22.8r+(-0.5185x+25.011) | | | | | |
| | c=(R125+R134a) Approximate Expression | 100-a-b-x | | | | | | 100-a-b-x | | | | | |

Table 43

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.50C | 0.50C | 0.75C | 1.000 | 0.500 | 0.750 | 1.00C |
| Point Or | a=R32 | 15.3 | 16.7 | 17.8 | 13.0 | 14.4 | 15.5 | 17.8 | 19.3 | 20.4 | 15.5 | 17.1 | 18.2 |
| | b=CO2 | 5.1 | 8.C | 10.3 | 3.1 | 6.1 | 8.5 | 10.3 | 13.5 | 15.7 | 8.5 | 11.7 | 14.C |
| | c=R125+R134a | 33.1 | 28.8 | 25.4 | 33.9 | 29.5 | 26.C | 25.4 | 20.7 | 17.4 | 26.0 | 21.2 | 17.8 |
| | x=R1234yf | 46.5 | 46.5 | 46.5 | 50.0 | 50.0 | 50.C | 46.5 | 46.5 | 46.5 | 50.0 | 50.0 | 50.C |
| Approximate Expression of Point Or | a=R32 | | | $-9.6r2+17.2r+11.6$ | | | $-9.6r2+17.2r+9.3$ | | | $-3.2r2+10.0r+13.6$ | | | $-4.0r2+11.4r+10.8$ |
| | b=CO2 | | | $-19.2r2+35.2r-2.5$ | | | $-19.2r2+36.0r-4.7$ | | | $-8.0r2+22.8r+0.9$ | | | $-7.2r2+21.8r-0.6$ |
| | c=R125+R134a | | | 100-a-b-x | | | 100-a-b-x | | | 10C-a-b-x | | | 100-a-b-x |
| Calculation of a Approximate Expression Indicated by r and x | x=R1234yf | 46.5 | | | 50.0 | | | 46.5 | | | 50.0 | | |
| | e (Quadric Coefficient) | -9.6 | | | -9.6 | | | -3.2 | | | -4.0 | | |
| | f (Linear Coefficient) | 17.2 | | | 17.2 | | | 10.C | | | 11.4 | | |
| | g (Coefficient) | 11.6 | | | 9.3 | | | 13.6 | | | 10.8 | | |
| | e Approximate Expression | -9.6 | | | | | | $-0.2286x+7.4286$ | | | | | |
| | f Approximate Expression | 17.2 | | | | | | $0.4x-8.6$ | | | | | |
| | g Approximate Expression | $-0.6571x+42.157$ | | | | | | $-0.8x+50.8$ | | | | | |
| Calculation of b Approximate Expression Indicated by r and x | x=R1234yf | 46.5 | | | 50.0 | | | 46.5 | | | 50.0 | | |
| | e (Quadric Coefficient) | -19.2 | | | -19.2 | | | -8.C | | | -7.2 | | |
| | f (Linear Coefficient) | 35.2 | | | 36.0 | | | 22.8 | | | 21.8 | | |
| | g (Coefficient) | -2.5 | | | -4.7 | | | 0.9 | | | -0.6 | | |
| | e Approximate Expression | -19.2 | | | | | | $0.2286x-18.629$ | | | | | |
| | f Approximate Expression | $0.2286x+24.571$ | | | | | | $-0.2857x+36.086$ | | | | | |
| | g Approximate Expression | $-0.6286x+26.729$ | | | | | | $-0.4286x+20.829$ | | | | | |
| O(r,x) Approximate Expression | a=R32 Approximate Expression | $-9.6r2+17.2r+(-0.6571x+42.157)$ | | | | | | $(-0.2286x+7.4286)r2+(0.4x-8.6)r+(-0.8x+50.8)$ | | | | | |
| | b=CO2 Approximate Expression c | $-19.2r2+(0.2286x+24.571)r+(-0.6286x+26.729)$ | | | | | | $(0.2286x-18.629)r2+(-0.2857x+36.086)r+(-0.4286x+20.829)$ | | | | | |
| | c=(R125+R134a) Approximate Expression | 100-a-b-x | | | | | | 10C-a-b-x | | | | | |

How to determine the approximate curves of points Fr and Pr

Each point Fr and each point Pr are shown in the Examples and Comparative Examples. The approximate expressions of the coordinates of point Fr and point $P_r$ as r and a function of the proportion (x) of R1234yf were determined based on each formulation by using the least-squares method as described below.

Table 44

| Item | | r=R125/(R125+R134a) | | | | | | | | | | | |
|---|---|---|---|---|---|---|---|---|---|---|---|---|---|
| | | 0.250 | 0.375 | 0.50C | 0.250 | 0.375 | 0.50C | 0.500 | 0.75C | 1.000 | 0.500 | 0.750 | 1.000 |
| Point Fr | a=R32 | 0.0 | 0.0 | 0.C | 0.0 | 0.0 | 0.C | 0.0 | 0.C | 0.0 | 0.0 | 0.0 | 0.0 |
| | b=$CO_2$ | 39.5 | 40.5 | 41.2 | 35.4 | 36.6 | 37.4 | 41.2 | 42.6 | 43.1 | 37.4 | 38.5 | 40.0 |
| | c=R125+R134a | 19.5 | 18.5 | 17.8 | 20.8 | 19.6 | 18.8 | 17.8 | 16.4 | 15.9 | 18.8 | 17.7 | 16.2 |
| | x=R1234yf | 41.0 | 41.0 | 41.C | 43.8 | 43.8 | 43.8 | 41.0 | 41.C | 41.0 | 43.8 | 43.8 | 43.8 |
| Approximate Expression of Point Fr | a=R32 | 0.0 | | | 0.0 | | | 0.0 | | | 0.0 | | |
| | b=$CO_2$ | -9.6r2+14.0r+36.6 | | | -12.8r2+17.6r+31.8 | | | -7.2x2+14.6x+35.7 | | | 3.2r2+0.4r+36.4 | | |
| | c=R125+R134a | 100-b-x | | | 100-b-x | | | 100-b-x | | | 100-b-x | | |
| Approximate Expression of a , b , c Indicated by r and x | x=R1234yf | 41.0 | | | 43.8 | | | 41.0 | | | 43.8 | | |
| | e (Quadric Coefficient) | -9.6 | | | -12.8 | | | -7.2 | | | 3.2 | | |
| | f (Linear Coefficient) | 14.0 | | | 17.6 | | | 14.6 | | | 0.4 | | |
| | g (Coefficient) | 36.6 | | | 31.8 | | | 35.7 | | | 36.4 | | |
| | e Approximate Expression | -1.1429x+37.257 | | | | | | 3.7143x-159.49 | | | | | |
| | f Approximate Expression | 1.2857x-38.714 | | | | | | -5.0714x+222.53 | | | | | |
| | g Approximate Expression | -1.7143x+106.89 | | | | | | 0.25x+25.45 | | | | | |
| | a=R32 Approximate Expression | 0.0 | | | | | | 0.0 | | | | | |
| | b=$CO_2$ Approximate Expression | (-1.1429x+37.257)r2+(1.2857x-38.714)r-(-1.7143x+106.89) | | | | | | (3.7143x-159.49)r2+(-5.0714x+222.53)r+(0.25x+25.45) | | | | | |
| | c=(R125+R134a) Approximate Expression | 100-b-x | | | | | | 100-b-x | | | | | |

Table 45

| Item | | r=R125/(R125+R134a) | | | | | | | | | | | |
|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Fr | a=R32 | 0.0 | 0.0 | 0.0 | 0.0 | 0.0 | 0.0 | 0.0 | 0.0 | 0.0 | 0.0 | 0.0 | 0.0 |
| | b=$CO_2$ | 35.4 | 36.6 | 37.4 | 31.5 | 32.3 | 33.5 | 37.4 | 38.5 | 40.0 | 33.5 | 35.3 | 35.9 |
| | c=R125+R134a | 20.8 | 19.6 | 18.8 | 22.0 | 21.2 | 20.0 | 18.8 | 17.7 | 16.2 | 20.0 | 18.2 | 17.6 |
| | x=R1234yf | 43.8 | 43.8 | 43.8 | 46.5 | 46.5 | 46.5 | 43.8 | 43.8 | 43.8 | 46.5 | 46.5 | 46.5 |
| Approximate Expression of Point Fr | a=R32 | 0.0 | | | 0.0 | | | 0.0 | | | 0.0 | | |
| | b=$CO_2$ | -12.8r2+17.6r+31.8 | | | 12.8r2-1.6r+31.1 | | | 3.2r2+0.4r+36.4 | | | -9.6r2+19.2r+26.3 | | |
| | c=R125+R134a | 100-b-x | | | 100-b-x | | | 100-b-x | | | 100-b-x | | |
| Approximate Expression of a, b, c and x Indicated by r and x | x=R1234yf | 43.8 | | | 46.5 | | | 43.8 | | | 46.5 | | |
| | e (Quadric Coefficient) | -12.8 | | | 12.8 | | | 3.2 | | | -9.6 | | |
| | f (Linear Coefficient) | 17.6 | | | -1.6 | | | 0.4 | | | 19.2 | | |
| | g (Coefficient) | 31.8 | | | 31.1 | | | 36.4 | | | 26.3 | | |
| | e Approximate Expression | 9.4815x-428.09 | | | | | | -4.7407x+210.84 | | | | | |
| | f Approximate Expression | -7.1111x+329.07 | | | | | | 6.963x-304.58 | | | | | |
| | g Approximate Expression | -0.2593x+43.156 | | | | | | -3.7407x+200.24 | | | | | |
| | a=R32 Approximate Expression | 0.0 | | | | | | 0.0 | | | | | |
| | b=$CO_2$ Approximate Expression | (9.4815x-428.09)r2+(-7.1111x+329.07)r+ (-0.2593x+43.156) | | | | | | (-4.7407x+210.84)r2+(6.963x-304.58)r +(-3.7407x+200.24) | | | | | |
| | c=(R125+R134a) Approximate Expression | 100-b-x | | | | | | 100-b-x | | | | | |

Table 46

| Item | | r=R125/(R125+R134a) | | | | | | | | | | | |
|---|---|---|---|---|---|---|---|---|---|---|---|---|
| | | 0.250 | 0.310 | 0.370 | 0.250 | 0.310 | 0.370 | 0.500 | 0.750 | 1.000 | 0.500 | 0.750 | 1.000 |
| Point Fr | a=R32 | 0.0 | 0.0 | 0.0 | 0.0 | 0.0 | 0.0 | 0.0 | 0.0 | 0.0 | 0.0 | 0.0 | 0.0 |
| | b=CO$_2$ | 31.5 | 31.7 | 32.5 | 26.1 | 27.0 | 27.6 | 33.5 | 35.3 | 35.9 | 28.8 | 30.4 | 31.8 |
| | c=R125+R134a | 22.0 | 21.8 | 21.0 | 23.9 | 23.0 | 22.4 | 20.0 | 18.2 | 17.6 | 21.2 | 19.6 | 18.2 |
| | x=R1234yf | 46.5 | 46.5 | 46.5 | 50.0 | 50.0 | 50.0 | 46.5 | 46.5 | 46.5 | 50.0 | 50.0 | 50.0 |
| Approximate Expression of Point Fr | a=R32 | 0.0 | | | 0.0 | | | 0.0 | | | 0.0 | | |
| | b=CO$_2$ | 83.333r2-43.333r+37.125 | | | -41.667r2+38.333r+19.121 | | | -9.6r2+19.2r+26.3 | | | 1.6r2+8.4r+25.0 | | |
| | c=R125+R134a | 100-b-x | | | 100-b-x | | | 100-b-x | | | 100-b-x | | |
| Approximate Expression of a, b, c Indicated by r and x | x=R1234yf | 46.5 | | | 50.0 | | | 46.5 | | | 50.0 | | |
| | e (Quadric Coefficient) | 83.333 | | | -41.667 | | | -9.6 | | | -1.6 | | |
| | f (Linear Coefficient) | -43.333 | | | 38.333 | | | 19.2 | | | 8.4 | | |
| | g (Coefficient) | 37.125 | | | 19.121 | | | 26.3 | | | 25.0 | | |
| | e Approximate Expression | -35.714x+1744.0 | | | | | | 2.2857x-115.89 | | | | | |
| | f Approximate Expression | 23.333x-1128.3 | | | | | | -3.0857x+162.69 | | | | | |
| | g Approximate Expression | --5.144x+276.32 | | | | | | -0.3714x+43.571 | | | | | |
| | a=R32 Approximate Expression | 0.0 | | | | | | 0.0 | | | | | |
| | b=CO$_2$ Approximate Expression | (-35.714x+1744.0)r2+(23.333x-1128.3)r+ (-5.144x+276.32) | | | | | | (2.2857x-115.89)r2+(-3.0857x+162.69)r+ (-0.3714x+43.571) | | | | | |
| | c=(R125+R134a) Approximate Expression | 100-b-x | | | | | | 100-b-x | | | | | |

Table 47

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.750 | 1.000 | 0.500 | 0.750 | 1.000 |
| Point Pr | a=R32 | 12.8 | 14.3 | 15.4 | 12.0 | 13.6 | 14.7 | 15.4 | 11.4 | 7.7 | 14.7 | 9.9 | 6.6 |
| | b=CO$_2$ | 12.2 | 15.2 | 17.4 | 10.1 | 12.9 | 15.1 | 17.4 | 25.1 | 31.5 | 15.1 | 23.5 | 29.6 |
| | c=R125+R134a | 34.0 | 29.5 | 26.2 | 53.9 | 56.7 | 58.9 | 26.2 | 22.5 | 19.8 | 58.9 | 67.3 | 73.4 |
| | x=R1234yf | 41.0 | 41.0 | 41.0 | 43.8 | 43.8 | 43.8 | 41.0 | 41.0 | 41.0 | 43.8 | 43.8 | 43.8 |
| Approximate Expression of Point Pr | a=R32 | $-12.8r^2+20.0r+8.6$ | | | $-16.0r^2+22.8r+7.3$ | | | $2.4r^2-19.0r+24.3$ | | | $12.0r^2-34.2r+28.8$ | | |
| | b=CO$_2$ | $-25.6r^2+40.0r+3.8$ | | | $-19.2r^2+34.4r+2.7$ | | | $-10.4r^2+43.8r-1.9$ | | | $-18.4r^2+56.6r-8.6$ | | |
| | c=R125+R134a | 100-a-b-x | | | 100-a-b-x | | | 100-a-b-x | | | 100-a-b-x | | |
| Calculation of a Approximate Expression Indicated by r and x | x=R1234yf | 41.0 | | | 43.8 | | | 41.0 | | | 43.8 | | |
| | e (Quadric Coefficient) | -12.8 | | | -16.0 | | | 2.4 | | | 12.0 | | |
| | f (Linear Coefficient) | 20.0 | | | 22.8 | | | -19.0 | | | -34.2 | | |
| | g (Coefficient) | 8.6 | | | 7.3 | | | 24.3 | | | 28.8 | | |
| | e Approximate Expression | -1.1429x+34.057 | | | | | | 3.4286x-138.17 | | | | | |
| | f Approximate Expression | 1.0x-21.0 | | | | | | -5.4286x+203.57 | | | | | |
| | g Approximate Expression | -0.4643x+27.636 | | | | | | 1.6071x-41.593 | | | | | |
| Calculation of b Approximate Expression Indicated by r and x | x=R1234yf | 41.0 | | | 43.8 | | | 41.0 | | | 43.8 | | |
| | e (Quadric Coefficient) | -25.6 | | | -19.2 | | | -10.4 | | | -18.4 | | |
| | f (Linear Coefficient) | 40.0 | | | 34.4 | | | 43.8 | | | 56.6 | | |
| | g (Coefficient) | 3.8 | | | 2.7 | | | -1.9 | | | -8.6 | | |
| | e Approximate Expression | 2.2857x-119.31 | | | | | | -2.8571x+106.74 | | | | | |
| | f Approximate Expression | -2.0x+122.0 | | | | | | 4.5714x-143.63 | | | | | |
| | g Approximate Expression | -0.3929x+19.907 | | | | | | -2.3929x+96.207 | | | | | |
| P(r,x) Approximate Expression | a=R32 Approximate Expression | $(-1.1429x+34.057)r^2+(1.0x-21.0)r+(-0.4643x+27.636)$ | | | | | | $(3.4286x-138.17)r^2+(-5.4286x+203.57)+(1.6071x-41.593)$ | | | | | |
| | b=CO$_2$ Approximate Expression c | $(2.2857x-119.31)r^2+(-2.0x+122.0)r+(-0.3929x+19.907)$ | | | | | | $(-2.8571x+106.74)r^2+(4.5714x-143.63)r+(-2.3929x+96.027)$ | | | | | |
| | c=(R125+R134a) Approximate Expression | 100-a-b-x | | | | | | 100-a-b-x | | | | | |

Table 48

| Item | | r=R125/(R125+R134a) | | | | | | | | | | | |
|---|---|---|---|---|---|---|---|---|---|---|---|---|---|
| | | 0.250 | 0.375 | 0.500 | 0.250 | 0.375 | 0.500 | 0.500 | 0.75C | 1.000 | 0.50C | 0.750 | 1.000 |
| Point Pr | a=R32 | 12.0 | 13.6 | 14.7 | 11.3 | 12.8 | 13.1 | 14.7 | 9.9 | 6.6 | 13.1 | 8.7 | 5.9 |
| | b=$CO_2$ | 10.1 | 12.9 | 15.1 | 7.8 | 10.7 | 13.6 | 15.1 | 23.5 | 29.6 | 13.6 | 21.7 | 27.4 |
| | c=R125+R134a | 53.9 | 56.7 | 58.9 | 34.4 | 30.0 | 26.8 | 58.9 | 67.3 | 73.4 | 26.8 | 23.1 | 20.2 |
| | x=R1234yf | 43.8 | 43.8 | 43.8 | 46.5 | 46.5 | 46.5 | 43.8 | 43.8 | 43.8 | 46.5 | 46.5 | 46.5 |
| Approximate Expression of Point Pr | a=R32 | -16.0r2+22.8r+7.3 | | | -38.4r2+36.0r+4.7 | | | 12.0r2-34.2r+28.8 | | | 12.8r2-33.6r+26.7 | | |
| | b=$CO_2$ | -19.2r2+34.4r+2.7 | | | 23.2r+2.0 | | | -18.4r2+56.6r-8.6 | | | -19.2r2+56.4r-9.8 | | |
| | c=R125+R134a | 100-a-b-x | | | 100-a-b-x | | | 100-a-b-x | | | 10C-a-b-x | | |
| Calculation of a Approximate Expression Indicated by r and x | x=R1234yf | 43.8 | | | 46.5 | | | 43.8 | | | 46.5 | | |
| | e (Quadric Coefficient) | -16.0 | | | -38.4 | | | 12.0 | | | 12.8 | | |
| | f (Linear Coefficient) | 22.8 | | | 36.0 | | | -34.2 | | | -33.6 | | |
| | g (Coefficient) | 7.3 | | | 4.7 | | | 28.8 | | | 26.7 | | |
| | e Approximate Expression | -8.2963x+347.38 | | | | | | 0.2963x-0.9778 | | | | | |
| | f Approximate Expression | 4.8889x-191.33 | | | | | | 0.2222x-43.933 | | | | | |
| | g Approximate Expression | -0.963x+49.478 | | | | | | -0.7778x+62.867 | | | | | |
| Calculation of b Approximate Expression Indicated by r and x | x=R1234yf | 43.8 | | | 46.5 | | | 43.8 | | | 46.5 | | |
| | e (Quadric Coefficient) | -19.2 | | | 0.0 | | | -18.4 | | | -19.2 | | |
| | f (Linear Coefficient) | 34.4 | | | 23.2 | | | 56.6 | | | 56.4 | | |
| | g (Coefficient) | 2.7 | | | 2.0 | | | -8.6 | | | -9.8 | | |
| | e Approximate Expression | 7.1111x-330.67 | | | | | | -0.2963x-5.4222 | | | | | |
| | f Approximate Expression | -4.1481x+216.09 | | | | | | -0.0741x+59.844 | | | | | |
| | g Approximate Expression | -0.2593x+14.056 | | | | | | -0.4444x+10.867 | | | | | |
| P(r,x) Approximate Expression | a=R32 Approximate Expression | (-8.2963x+347.38)r2+(4.8889x-191.33)r +(-0.963x+49.478) | | | | | | (0.2963x-0.9778)r2+(0.2222x-43.933)r +(-0.7778x+62.867) | | | | | |
| | b=$CO_2$ Approximate Expression c | (7.1111x-330.67)r2+(-4.1481x+216.09)r +(-0.2593x+14.056) | | | | | | (-0.2963x-5.4222)r2+(-0.0741x+59.844)r +(-0.4444x+10.867) | | | | | |
| | c=(R125+R134a) Approximate Expression | 100-a-b-x | | | | | | 100-a-b-x | | | | | |

Table 49

| Item | | r=R125/(R125+R134a) | | | | | | | | | | | |
|---|---|---|---|---|---|---|---|---|---|---|---|---|---|
| | | 0.250 | 0.310 | 0.370 | 0.250 | 0.310 | 0.370 | 0.500 | 0.750 | 1.000 | 0.500 | 0.750 | 1.000 |
| Point Pr | a=R32 | 11.3 | 12.2 | 12.8 | 10.5 | 11.2 | 11.9 | 13.1 | 8.7 | 5.9 | 10.8 | 6.8 | 3.0 |
| | b=CO$_2$ | 7.8 | 9.2 | 10.7 | 4.7 | 6.5 | 7.7 | 13.6 | 21.7 | 27.4 | 11.8 | 19.7 | 26.3 |
| | c=R125+R134a | 34.4 | 32.1 | 30.0 | 34.8 | 32.3 | 30.4 | 26.8 | 23.1 | 20.2 | 27.4 | 23.5 | 20.7 |
| | x=R1234yf | 46.5 | 46.5 | 46.5 | 50.0 | 50.0 | 50.0 | 46.5 | 46.5 | 46.5 | 50.0 | 50.0 | 50.0 |
| Approximate Expression of Point Pr | a=R32 | -41.667r2+38.333r+4.3208 | | | 11.667r+7.5833 | | | 12.8r2-33.6r+26.7 | | | 1.6r2-18.0r+19.4 | | |
| | b=CO$_2$ | 13.889r2+15.556r+3.0431 | | | -83.333r2+76.667r-9.2583 | | | -19.2r2+56.4r-9.8 | | | -10.4r2+44.6r-7.9 | | |
| | c=R125+R134a | 100-a-b-x | | | 100-a-b-x | | | 100-a-b-x | | | 100-a-b-x | | |
| Calculation of a Approximate Expression Indicated by r and x | x=R1234yf | 46.5 | | | 50.0 | | | 46.5 | | | 50.0 | | |
| | e (Quadric Coefficient) | -41.6670 | | | 0.0000 | | | 12.8 | | | 1.6 | | |
| | f (Linear Coefficient) | 38.3330 | | | 11.6670 | | | -33.6 | | | -18.0 | | |
| | g (Coefficient) | 4.3206 | | | 7.5833 | | | 26.7 | | | 19.4 | | |
| | e Approximate Expression | 11.905x-595.24 | | | | | | -3.2x+161.6 | | | | | |
| | f Approximate Expression | -7.6189x+392.61 | | | | | | 4.4571x-240.86 | | | | | |
| | g Approximate Expression | -0.9322x-39.027 | | | | | | -2.0857x+123.69 | | | | | |
| Calculation of b Approximate Expression Indicated by r and x | x=R1234yf | 46.5 | | | 50.0 | | | 46.5 | | | 50.0 | | |
| | e (Quadric Coefficient) | 13.889 | | | -83.333 | | | -19.2 | | | -10.4 | | |
| | f (Linear Coefficient) | 15.556 | | | 76.667 | | | 56.4 | | | 44.6 | | |
| | g (Coefficient) | 3.043 | | | -9.258 | | | -9.8 | | | -7.9 | | |
| | e Approximate Expression | -27.778x+1305.6 | | | | | | 2.5143x-136.11 | | | | | |
| | f Approximate Expression | 17.46x-796.35 | | | | | | -3.3714x+213.17 | | | | | |
| | g Approximate Expression | -3.5147x+166.48 | | | | | | 0.5429x-35.043 | | | | | |
| P(r,x) Approximate Expression | a=R32 Approximate Expression | (11.905x-595.24)r2+(-7.6189x+392.61)r+(0.9322x-39.027) | | | | | | (-3.2x+161.6)r2+(4.4571x-240.86)r+(-2.0857x+123.69) | | | | | |
| | b=CO$_2$ Approximate Expression c | (-27.778x+1305.6)r2+(17.46x-796.35)r+(-3.5147x+166.48) | | | | | | (2.5143x-136.11)r2+(-3.3714x+213.17)r+(0.5429x-35.043) | | | | | |
| | c=(R125+R134a) Approximate Expression | 100-a-b-x | | | | | | 100-a-b-x | | | | | |

Description of the Reference Numerals

| | |
|---|---|
| 1: | ignition source |
| 2: | sample inlet |
| 3: | springs |
| 4: | 12-liter glass flask |
| 5: | electrodes |
| 6: | stirrer |
| 7: | insulated chamber |
| 10: | refrigerating machine |
| 11: | refrigerant circuit |
| 12: | compressor |
| 13: | heat-source-side heat exchanger |
| 14: | expansion mechanism |
| 15: | user-side heat exchanger |
| 16: | fan |
| 17: | solenoid valve |
| 18: | four-way switching valve |
| 19: | heating means |
| 20: | bypass flow path |

**Claims**

1. A composition comprising a refrigerant,

the refrigerant comprising difluoromethane (R32), carbon dioxide ($CO_2$), pentafluoroethane (R125), 1,1,1,2-tetrafluoroethane (R134a), and 2,3,3,3-tetrafluoropropene (R1234yf),
wherein
when the mass% of R32 is a, the mass% of $CO_2$ is b, the mass% of R125 is $c_1$, the mass% of R134a is $c_2$, the mass% of the sum of R125 and R134a is c, the mass% of R1234yf is x, and $c_1/(c_1+c_2)$ is r based on the sum of R32, $CO_2$, R125, R134a, and R1234yf in the refrigerant,
in a ternary composition diagram having R32 at a point of (100-x) mass%, $CO_2$ at a point of (100-x) mass%, and the sum of R125 and R134a at a point of (100-x) mass% as vertices,
1-1-1) when $43.8 \geq x \geq 41$, and $0.5 \geq r \geq 0.25$, coordinates (a,b,c) fall within a quadrangular region surrounded by line segments that connect the following points:

point A (-0.6902x+43.307, 100-a-x, 0.0),
point $O_{r=0.25\ to\ 0.5}$ ((-2.2857x+87.314)$r^2$+(1.7143x-55.886)r+(-0.9643x+55.336), (2.2857x-112.91)$r^2$+(-1.7143x+104.69)r+(-0.25x+11.05), 100-a-b-x),
point $D_{r=0.25\ to\ 0.5}$ (0.0, -28.8$r^2$+54.0r+(-x+49.9), 100-b-x), and
point Q (0.0, 100-x, 0.0),
or on the line segments, excluding any point on line segment $D_{r=0.25\ to\ 0.5}$ to Q, and line segment QA, or

1-1-2) when $43.8 \geq x \geq 41$, and $1.0 \geq r \geq 0.5$, coordinates (a,b,c) fall within a quadrangular region surrounded by line segments that connect the following points:

point A (-0.6902x+43.307, 100-a-x, 0.0),
point $O_{r=0.5\ to\ 1.0}$ ((-0.2857x+8.5143)$r^2$+(0.5x-10.9)r+(-0.8571x+52.543), (-0.2857x+4.5143)$r^2$+(0.5x+0.9)r+(-0.7143x+33.586), 100-a-b-x),
point $D_{r=0.5\ to\ 1.0}$ (0.0, (-0.5714x+12.229)$r^2$+(0.8571x-0.3429)r+(-1.2857x+66.814), 100-b-x), and
point Q (0.0, 100-x, 0.0),
or on the line segments, excluding any point on line segment $D_{r=0.5\ to\ 1.0}$ to Q and line segment QA, or on the line segments, or

1-2-1) when $46.5 \geq x \geq 43.8$, and $0.5 \geq r \geq 0.25$, coordinates (a,b,c) fall within a quadrangular region surrounded by line segments that connect the following points:

point A (-0.6902x+43.307, 100-a-x, 0.0),
point $O_{r=0.25\ to\ 0.5}$ ((1.1852x-64.711)$r^2$+(-0.7407x+51.644)r+(-0.5556x+37.433), (-2.3704x+91.022)$r^2$+(2.0741x-61.244)r+(-0.963x+42.278), 100-a-b-x),
point $D_{r=0.25\ to\ 0.5}$ (0.0, -28.8$r^2$+54.0r+(-x+49.9), 100-b-x), and
point Q (0.0, 100-x, 0.0),
or on the line segments, excluding any point on line segment $D_{r=0.25\ to\ 0.5}$ to Q and line segment QA, or

1-2-2) when 46.5≥x≥43, and 1.0≥r≥0.5, coordinates (a,b,c) fall within a quadrangular region surrounded by line segments that connect the following points:

point A (-0.6902x+43.307, 100-a-x, 0.0),
point $O_{r=0.5\ to\ 1.0}$ ((0.2963x-16.978)$r^2$+(-0.3704x+27.222)r+(-0.5185x+37.711), -8.0r2+22.8r+(-0.5185x+25.011), 100-a-b-x),
point $D_{r=0.5\ to\ 1.0}$ (0.0, -12.8$r^2$+37.2r+(-x+54.3), 100-b-x), and
point Q (0.0, 100-x, 0.0),
or on the line segments, excluding any point on line segment $D_{r=0.5\ to\ 1.0}$ to Q and line segment QA,

1-3-1) when 50≥x≥46.5, and 0.5≥r≥0.25, coordinates (a,b,c) fall within a quadrangular region surrounded by line segments that connect the following points:

point A (-0.6902x+43.307, 100-a-x, 0.0),
point $O_{r=0.25\ to\ 0.5}$ (-9.6$r^2$+17.2r+(-0.6571x+42.157), - 19.2$r^2$+(0.2286x+24.571)r+(-0.6286x+26.729), 100-a-b-x),
point $D_{r=0.25\ to\ 0.5}$ (0.0, (0.9143x-71.314)$r^2$+(-0.5714x+80.571)r+(-0.9143x+45.914), 100-b-x), and
point Q (0.0, 100-x, 0.0),
or on the line segments, excluding any point on line segment $D_{r=0.25\ to\ 0.5}$ to Q and line segment QA, or

1-3-2) when 50≥x≥46.5, and 1.0≥r≥0.5, coordinates (a,b,c) fall within a quadrangular region surrounded by line segments that connect the following points:

point A (-0.6902x+43.307, 100-a-x, 0.0),
point $O_{r=0.5\ to\ 1.0}$ ((-0.2286x+7.4286)$r^2$+(0.4x-8.6)r+(-0.8x+50.8), (0.2286x-18.629)$r^2$+(-0.2857x+36.086)r+(-0.4286x+20.829), 100-a-b-x),
point $D_{r=0.5\ to\ 1.0}$ (0.0, (0.2286x-23.429)$r^2$+(-0.4x+55.8)r+(-0.8286x+46.329), 100-b-x), and
point Q (0.0, 100-x, 0.0),
or on the line segments, excluding any point on line segment $D_{r=0.5\ to\ 1.0}$ to Q and line segment QA.

2. A composition comprising a refrigerant,

the refrigerant comprising R32, $CO_2$, R125, R134a, and R1234yf,
wherein
when the mass% of R32 is a, the mass% of $CO_2$ is b, the mass% of R125 is $c_1$, the mass% of R134a is $c_2$, the mass% of the sum of R125 and R134a is c, the mass% of R1234yf is x, and $c_1/(c_1+c_2)$ is r based on the sum of R32, $CO_2$, R125, R134a, and R1234yf in the refrigerant,
in a ternary composition diagram having R32 at a point of (100-x) mass%, $CO_2$ at a point of (100-x) mass%, and the sum of R125 and R134a at a point of (100-x) mass% as vertices,
2-1-1) when 43.8≥x≥41, and 0.5≥r≥0.25, coordinates (a,b,c) fall within a triangular region surrounded by line segments that connect the following points:

point $F_{r=0.25\ to\ 0.5}$ (0.0, (-1.1429x+37.257)$r^2$+(1.2857x-38.714) r-(-1.7143x+106.89), 100-b-x),
point $P_{r=0.25\ to\ 0.5}$ ((-1.1429x+34.057)$r^2$+(1.0x-21.0)r+(-0.4643x+27.636), (2.2857x-119.31)$r^2$+(-2.0x+122.0)r+(-0.3929x+19.907), 100-a-b-x), and
point $D_{r=0.25\ to\ 0.5}$ (0.0, -28.8$r^2$+54.0r+(-x+49.9), 100-b-x),
or on the line segments, excluding any point on line segment $D_{r=0.25\ to\ 0.5}$ to $F_{r=0.25\ to\ 0.5}$, or

2-1-2) when 43.8≥x≥41, and 1.0≥r≥0.5, coordinates (a,b,c) fall within a triangular region surrounded by line segments that connect the following points:

point $F_{r=0.5 \text{ to } 1.0}$ (0.0, (3.7143x-159.49)r$^2$+(-5.0714x+222.53)r+(0.25x+25.45), 100-b-x),
point $P_{r=0.5 \text{ to } 1.0}$ ((3.4286x-138.17)r$^2$+(-5.4286x+203.57)r+(1.6071x-41.593), (-2.8571x+106.74)r$^2$+(4.5714x-143.63)r+(-2.3929x+96.027), 100-a-b-x), and
point $D_{r=0.5 \text{ to } 1.0}$ (0.0, (-0.5714x+12.229)r$^2$+(0.8571x-0.3429)r+(-1.2857x+66.814), 100-b-x),
or on the line segments, excluding any point on line segment $D_{r=0.5 \text{ to } 1.0}$ to $F_{r=0.5 \text{ to } 1.0}$, or

2-2-1) when 46.5≥x≥43, and 0.5≥r≥0.25, coordinates (a,b,c) fall within a triangular region surrounded by line segments that connect the following points:

point $F_{r=0.25 \text{ to } 0.5}$ (0.0, (9.4815x-428.09)r$^2$+(-7.1111x+329.07)r+(-0.2593x+43.156), 100-b-x),
point $P_{r=0.25 \text{ to } 0.5}$ ((-8.2963x+347.38)r$^2$+(4.8889x-191.33)r+(-0.963x+49.478), (7.1111x-330.67)r$^2$+(-4.1481x+216.09)r+(-0.2593x+14.056), 100-a-b-x), and
point $D_{r=0.25 \text{ to } 0.5}$ (0.0, -28.8r$^2$+54.0r+(-x+49.9), 100-b-x),
or on the line segments, excluding any point on line segment $D_{r=0.25 \text{ to } 0.5}$ to $F_{r=0.25 \text{ to } 0.5}$, or

2-2-2) when 46.5≥x≥43, and 1.0≥r≥0.5, coordinates (a,b,c) fall within a triangular region surrounded by line segments that connect the following points:

point $F_{r=0.5 \text{ to } 1.0}$ (0.0, (-4.7407x+210.84)r$^2$+(6.963x-304.58)r+(-3.7407x+200.24), 100-b-x),
point $P_{r=0.5 \text{ to } 1.0}$ ((0.2963x-0.9778)r$^2$+(0.2222x-43.933)r+(-0.7778x+62.867), (-0.2963x-5.4222)r$^2$+(-0.0741x+59.844)r+(-0.4444x+10.867), 100-a-b-x), and
point $D_{r=0.5 \text{ to } 1.0}$ (0.0, -12.8r$^2$+37.2r+(-x+54.3), 100-b-x),
or on the line segments, excluding any point on line segment $D_{r=0.5 \text{ to } 1.0}$ to $F_{r=0.5 \text{ to } 1.0}$, or

2-3-1) when 50≥x≥46.5, and 0.37≥r≥0.25, coordinates (a,b,c) fall within a triangular region surrounded by line segments that connect the following points:

point $F_{r=0.25 \text{ to } 0.37}$ (0.0, (-35.714x+1744.0)r$^2$+(23.333x-1128.3)r+(-5.144x+276.32), 100-b-x),
point $P_{r=0.25 \text{ to } 0.37}$ ((11.905x-595.24)r$^2$+(-7.6189x+392.61)r+(0.9322x-39.027), (-27.778x+1305.6)r$^2$+(17.46x-796.35)r+(-3.5147x+166.48), 100-a-b-x), and
point $D_{r=0.25 \text{ to } 0.37}$ (0.0, (0.9143x-71.314)r$^2$+(-0.5714x+80.571)r+(-0.9143x+45.914), 100-b-x),
or on the line segments, excluding any point on line segment $D_{r=0.25 \text{ to } 0.37}$ to $F_{r=0.25 \text{ to } 0.37}$, or

2-3-2) when 50≥x≥46.5, and 1.0≥r≥0.5, coordinates (a,b,c) fall within a triangular region surrounded by line segments that connect the following points:

point $F_{r=0.5 \text{ to } 1.0}$ (0.0, (2.2857x-115.89)r$^2$+(-3.0857x+162.69)r+(-0.3714x+43.571), 100-b-x),
point $P_{r=0.5 \text{ to } 1.0}$ ((-3.2x+161.6)r$^2$+(4.4571x-240.86)r+(-2.0857x+123.69), (2.5143x-136.11)r$^2$+(-3.3714x+213.17)r+(0.5429x-35.043), 100-a-b-x), and
point $D_{r=0.5 \text{ to } 1.0}$ (0.0, (0.2286x-23.429)r$^2$+(-0.4x+55.8)r+(-0.8286x+46.329), 100-b-x),
or on the line segments, excluding any point on line segment $D_{r=0.5 \text{ to } 1.0}$ to $F_{r=0.5 \text{ to } 1.0}$.

3. The composition according to claim 1 or 2, comprising R32, $CO_2$, R125, R134a, and R1234yf in a total amount of 99.5 mass% or more based on the entire refrigerant.

4. The composition according to any one of claims 1 to 3, comprising a refrigeration oil.

5. The composition according to any one of claims 1 to 4, wherein the refrigerant is for use as an alternative refrigerant for R410A.

6. A refrigerating machine comprising the composition of any one of claims 1 to 5.

7. The refrigerating machine according to claim 6, comprising a heat exchanger in which a flow of the refrigerant and a flow of an external heat medium are in countercurrent flow.

8. The refrigerating machine according to claim 6 or 7, comprising a heat-source-side heat exchanger and a user-side heat exchanger, wherein when the user-side heat exchanger functions as an evaporator, the evaporating temperature of the refrigerant is 0°C or below.

9. A refrigerating machine comprising

a refrigerant comprising R32, $CO_2$, R125, R134a, and R1234yf, and
a heat exchanger in which a flow of the refrigerant and a flow of an external heat medium are in countercurrent flow.

10. A refrigerating machine comprising

a refrigerant comprising R32, $CO_2$, R125, R134a, and R1234yf,
a heat-source-side heat exchanger, and
a user-side heat exchanger,
wherein when the user-side heat exchanger functions as an evaporator, the evaporating temperature of the refrigerant is 0°C or below.

Fig. 1

Fig. 2

(a)

(b)

External Heat Medium

External Heat Medium

Refrigerant    Refrigerant

Refrigerant

Fig. 3

(a)                                   (b)

Y →

← X

External Heat Medium

External Heat Medium

Refrigerant

Refrigerant

Fig. 4

External Heat Medium

14

13

15

External Heat Medium

16

10

12

11

External Heat Medium

Fig. 5

External Heat Medium

External Heat Medium

External Heat Medium

Fig. 6

Fig. 7

Fig. 8

Fig. 9

Fig. 10

Fig. 11

Fig. 12

Ternary Composition Diagram (41% R1234yf))
GWP=750 (r=0.25)
WCF Non-Flammability Point
WCF Non-Flammability Limit Line
ASHRAE Non-Flammability Limit Point
ASHRAE Non-Flammability Limit Line

Fig. 13

Fig. 14

Legend:
— Ternary Composition Diagram (41% R1234yf))
---- GWP=750 (r=0.5)
— WCF Non-Flammability (r=0.5)
— ASHRAE Non-Flammability (r=0.5)

Fig. 15

Legend:
- Ternary Composition Diagram (41% R1234yf))
- GWP=750 (r=0.75)
- WCF Non-Flammability (r=0.75)
- ASHRAE Non-Flammability (r=0.75)

Fig. 16

Fig. 17

Fig. 18

Fig. 19

Ternary Composition Diagram (46.5% R1234yf)
GWP=750(r=0.25)
WCF Non-Flammability (r=0.25)
ASHRAE Non-Flammability (r=0.25)
GWP=750 (r=0.375)
WCF Non-Flammability (r=0.375)
ASHRAE Non-Flammability (r=0.375)
GWP=750 (r=0.5)
WCF Non-Flammability (r=0.5)
ASHRAE Non-Flammability (r=0.5)
GWP=750 (r=0.75)
WCF Non-Flammability (r=0.75)
ASHRAE Non-Flammability (r=0.75)
GGWP=750 (r=1.0)
WCF Non-Flammability (r=1.0)
ASHRAE Non-Flammability (r=1.0)

Fig. 20

Ternary Composition Diagram (50% R1234yf)
GWP=750 (r=0.25)
WCF Non-Flammability (r=0.25)
GWP=750 (r=0.375)
WCF Non-Flammability (r=0.375)
GWP=750 (r=0.5)
WCF Non-Flammability (r=0.5)
GWP=750 (r=0.75)
WCF Non-Flammability (r=0.75)
GWP=750 (r=1.0)
WCF Non-Flammability (r=1.0)

129

Fig. 21

Fig. 22

## INTERNATIONAL SEARCH REPORT

| International application No. |
| --- |
| PCT/JP2020/017777 |

**A. CLASSIFICATION OF SUBJECT MATTER**
C09K 5/04(2006.01)i
FI: C09K5/04 E; C09K5/04 F; C09K5/04 A

According to International Patent Classification (IPC) or to both national classification and IPC

**B. FIELDS SEARCHED**

Minimum documentation searched (classification system followed by classification symbols)
C09K5/04

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2017/151488 A1 (THE CHEMOURS COMPANY FC, LLC) 08.09.2017 (2017-09-08) claims 1-25, page 1, lines 7-12, page 11, line 4 to page 14, line 1, page 16, line 25 to page 18, line 17, page 26, line 18 to page 27, line 2, page 31, lines 1-4, page 32, lines 10-18, examples 1-7 | 1-10 |
| A | JP 2016-539208 A (THE CHEMOURS COMPANY FC, LLC) 15.12.2016 (2016-12-15) claims 1-56 | 1-10 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 July 2020 (16.07.2020) | 28 July 2020 (28.07.2020) |

| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

**INTERNATIONAL SEARCH REPORT**
Information on patent family members

| International application No. |
| --- |
| PCT/JP2020/017777 |

| Patent Documents referred in the Report | Publication Date | Patent Family | Publication Date |
| --- | --- | --- | --- |
| WO 2017/151488 A1 | 08 Sep. 2017 | JP 2019-512031 A claims 1-25, paragraphs [0001], [0051]-[0057], [0067]-[0072], [0097], [0118], [0124], examples 1-7 EP 3423541 A1 AU 2017225674 A CA 3015523 A1 CN 108699428 A KR 10-2018-0118174 A BR 112018067402 A MX 2018010417 A | |
| JP 2016-539208 A | 15 Dec. 2016 | US 2016/0244651 A1 claims 1-53 WO 2015/054110 A1 EP 3055379 A1 TW 201522280 A CA 2926969 A1 KR 10-2016-0068839 A | |

Form PCT/ISA/210 (patent family annex) (January 2015)

**EP 3 960 832 A1**

**Patent documents cited in the description**

- WO 2014085973 A
- JP 2016028119 A
- WO 2010059677 A
- WO 2011163117 A